# EUROPEAN PATENT APPLICATION

(11) **EP 0 689 137 A2**
(43) Date of publication of application: **27.12.1995**
(21) Application number: 95304171.2
(22) Date of filing: 16.06.1995
(51) Int. Cl.: G06F 9/46

(54) **Message control structure registration method and apparatus for a microkernel data processing system**

(30) Priority: 22.06.1994 US 263703
(71) Applicant: International Business Machines Corporation, Armonk, N.Y. 10504 (US)
(72) Inventor: Faruqi, Aziza Bushra, Boca Raton, Florida 33486 (US); Green, Joseph William, Boca Raton, Florida 33431-6588 (US); Magee, James Michael, Lake Worth, Florida 33463 (US); Youngworth, Christopher Dean, Savoy, Illinois 61874 (US)
(74) Representative: Williams, Julian David

(57) **Abstract**

A control registration is provided for the message control structures of interprocess communication messages sent from one task to another in a microkernel architecture system. Each task that wishes to receive messages as a server, from other tasks that are clients, may register the message control structure that it expects to receive, registering it with the interprocess communications subsystem. The subsystem issues a registration ID number, and stores it with the port name and the format for the message control structure, in a message control structure table. The message control structure format description stored in the table, or pointed to by a pointer in the table, is a template that the interprocess communications subsystem will use later to validate messages from clients that purport to use the same registration ID.

## Description

The present invention disclosed broadly relates to data processing systems and more particularly relates to improvements in operating systems for data processing systems.

The invention disclosed herein is related to the copending United States Patent Application by Guy G. Sotomayor, Jr., James M. Magee, and Freeman L. Rawson, III, which is entitled "METHOD AND APPARATUS FOR MANAGEMENT OF MAPPED AND UNMAPPED REGIONS OF MEMORY IN A MICROKERNEL DATA PROCESSING SYSTEM", Serial Number 263,710, filed on the same day as the instant application, IBM Docket Number BC9-94-053, assigned to the International Business Machines Corporation, and incorporated herein by reference.

The invention disclosed herein is also related to the copending United States Patent Application by James M. Magee, et al. which is entitled "CAPABILITY ENGINE METHOD AND APPARATUS FOR A MICROKERNEL DATA PROCESSING SYSTEM", Serial Number 263,313, filed on the same day as the instant application, IBM Docket Number BC9-94-071, assigned to the International Business Machines Corporation, and incorporated herein by reference.

The invention disclosed herein is also related to the copending United States Patent Application by James M. Magee, et al. which is entitled "TEMPORARY DATA METHOD AND APPARATUS FOR A MICROKERNEL DATA PROCESSING SYSTEM", Serial Number 263,633, filed on the same day as the instant application, IBM Docket Number BC9-94-076, assigned to the International Business Machines Corporation, and incorporated herein by reference.

The operating system is the most important software running on a computer. Every general purpose computer must have an operating system to run other programs. Operating systems typically perform basic tasks, such as recognizing input from the keyboard, sending output to the display screen, keeping track of files and directories on the disc, and controlling peripheral devices such as disc drives and printers. For more complex systems, the operating system has even greater responsibilities and powers. It makes sure that different programs and users running at the same time do not interfere with each other. The operating system is also typically responsible for security, ensuring that unauthorized users do not access the system.

Operating systems can be classified as multi-user operating systems, multi-processor operating systems, multi-tasking operating systems, and real-time operating systems. A multi-user operating system allows two or more users to run programs at the same time. Some operating systems permit hundreds or even thousands of concurrent users. A multi-processing program allows a single user to run two or more programs at the same time. Each program being executed is called a process. Most multi-processing systems support more than one user. A multi-tasking system allows a single process to run more than one task. In common terminology, the terms multi-tasking and multi-processing are often used interchangeably even though they have slightly different meanings. Multi-tasking is the ability to execute more than one task at the same time, a task being a program. In multi-tasking, only one central processing unit is involved, but it switches from one program to another so quickly that it gives the appearance of executing all of the programs at the same time. There are two basic types of multi-tasking, preemptive and cooperative. In preemptive multi-tasking, the operating system parcels out CPU time slices to each program. In cooperative multi-tasking, each program can control the CPU for as long as it needs it. If a program is not using the CPU however, it can allow another program to use it temporarily. For example, the OS/2 (TM) and UNIX (TM) operating systems use preemptive multi-tasking, whereas the Multi-Finder (TM) operating system for Macintosh (TM) computers uses cooperative multi-tasking. Multi-processing refers to a computer system's ability to support more than one process or program at the same time. Multi-processing operating systems enable several programs to run concurrently. Multi-processing systems are much more complicated than single-process systems because the operating system must allocate resources to competing processes in a reasonable manner. A real-time operating system responds to input instantaneously. General purpose operating systems such as DOS and UNIX are not real-time.

Operating systems provide a software platform on top of which application programs can run. The application programs must be specifically written to run on top of a particular operating system. The choice of the operating system therefore determines to a great extent the applications which can be run. For IBM compatible personal computers, example operating systems are DOS, OS/2 (TM), AIX (TM), and XENIX (TM).

A user normally interacts with the operating system through a set of commands. For example, the DOS operating system contains commands such as COPY and RENAME for copying files and changing the names of files, respectively. The commands are accepted and executed by a part of the operating system called the command processor or command line interpreter.

There are many different operating systems for personal computers such as CP/M (TM), DOS, OS/2 (TM), UNIX (TM), XENIX (TM), and AIX (TM). CP/M was one of the first operating systems for small computers. CP/M was initially used on a wide variety of personal computers, but it was eventually overshadowed by DOS. DOS runs on all IBM compatible personal computers and is a single user, single tasking operating system. OS/2, a successor to DOS, is a relatively powerful operating system that runs on IBM compatible personal computers that use the Intel 80286 or later microprocessor. OS/2 is generally compatible with DOS but contains many additional features, for example it is multi-tasking and supports virtual memory. UNIX and UNIX-based AIX run on a wide variety of personal computers and work stations. UNIX and AIX have become standard operating systems for work stations and are powerful multi-user, multi-processing operating systems.

In 1981 when the IBM personal computer was introduced in the United States, the DOS operating system occupied approximately 10 kilobytes of storage. Since that time, personal computers have become much more complex and require much larger operating systems. Today, for example, the OS/2 operating system for the IBM personal computers can occupy as much as 22 megabytes of storage. Personal computers become ever more complex and powerful as time goes by and it is apparent that the operating systems cannot continually increase in size and complexity without imposing a significant storage penalty on the storage devices associated with those systems.

It was because of this untenable growth rate in operating system size, that the MACH project was conducted at the Carnegie Mellon University in the 1980's. The goal of that research was to develop a new operating system that would allow computer programmers to exploit modern hardware architectures emerging and yet reduce the size and the number of features in the kernel operating system. The kernel is the part of an operating system that performs basic functions such as allocating hardware resources. In the case of the MACH kernel, five programming abstractions were established as the basic building blocks for the system. They were chosen as the minimum necessary to produce a useful system on top of which the typical complex operations could be built externally to the kernel. The Carnegie Mellon MACH kernel was reduced in size in its release 3.0, and is a fully functional operating system called the MACH microkernel. The MACH microkernel has the following primitives: the task, the thread, the port, the message, and the memory object.

The task is the traditional UNIX process which is divided into two separate components in the MACH microkernel. The first component is the task, which contains all of the resources for a group of cooperating entities. Examples of resources in a task are virtual memory and communications ports. A task is a passive collection of resources; it does not run on a processor.

The thread is the second component of the UNIX process, and is the active execution environment. Each task may support one or more concurrently executing computations called threads. For example, a multi-threaded program may use one thread to compute scientific calculations while another thread monitors the user interface. A MACH task may have many threads of execution, all running simultaneously. Much of the power of the MACH programming model comes from the fact that all threads in a task share the task's resources. For instance, they all have the same virtual memory (VM) address space. However, each thread in a task has its own private execution state. This state consists of a set of registers, such as general purpose registers, a stack pointer, a program counter, and a frame pointer.

A port is the communications channel through which threads communicate with each other. A port is a resource and is owned by a task. A thread gains access to a port by virtue of belonging to a task. Cooperating programs may allow threads from one task to gain access to ports in another task. An important feature is that they are location transparent. This capability facilitates the distribution of services over a network without program modification.

The message is used to enable threads in different tasks to communicate with each other. A message contains collections of data which are given classes or types. This data can range from program specific data such as numbers or strings to MACH related data such as transferring capabilities of a port from one task to another.

A memory object is an abstraction which supports the capability to perform traditional operating system functions in user level programs, a key feature of the MACH microkernel. For example, the MACH microkernel supports virtual memory paging policy in a user level program. Memory objects are an abstraction to support this capability.

All of these concepts are fundamental to the MACH microkernel programming model and are used in the kernel itself. These concepts and other features of the Carnegie Mellon University MACH microkernel are described in the book by Joseph Boykin, et al, "Programming Under MACH", Addison Wessely Publishing Company, Incorporated, 1993.

Additional discussions of the use of a microkernel to support a UNIX personality can be found in the article by Mike Accetta, et al, "MACH: A New Kernel Foundation for UNIX Development", Proceedings of the Summer 1986 USENIX Conference, Atlanta, Georgia. Another technical article on the topic is by David Golub, et al, "UNIX as an Application Program", Proceedings of the Summer 1990 USENIX Conference, Anaheim, California.

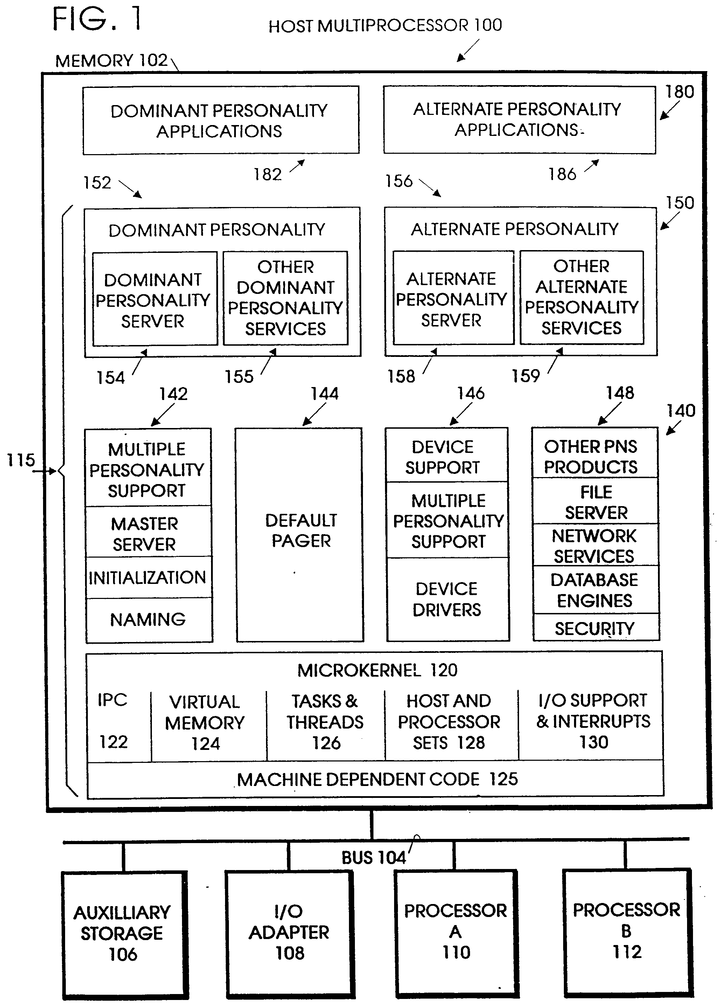

The above cited, copending patent application by Guy G. Sotomayor, Jr., James M. Magee, and Freeman L. Rawson, III, describes the Microkernel System 115 shown in Figure 1, which is a new foundation for operating systems. The Microkernel System 115 provides a concise set of kernel services implemented as a pure kernel and an extensive set of services for building operating system personalities implemented as a set of user-level servers. The Microkernel System 115 is made up of many server components that provide the various traditional operating system functions and that are manifested as operating system personalities. The Microkernel System 115 uses a client/server system structure in which tasks (clients) access services by making requests of other tasks (servers) through messages sent over a communication channel. Since the microkernel 120 provides very few services of its own (for example, it provides no file service), a microkernel 120 task must communicate with many other tasks that provide the required services. This raises the problem of how to manage the interprocess communication that must take place between the many clients and servers in the system, in a fast and efficient manner.

In accordance with the present invention, there is now provided a system for interprocess communication in a microkernel architecture, comprising: a memory means in a data processing system, for storing data and programmed instructions; an interprocess communications means in said memory means, for coordinating message passing between tasks in said memory means; a first task in said memory means having a set of attributes defining a first communication port and having a first message control structure format for messages it can receive; a second task in said memory means having a set of attributes defining a second communication port and having a second message control structure format for messages it can send; a processor means coupled to said memory means, for executing said programmed instructions; a first thread in said memory means associated with said first task, for providing said programmed instructions for execution in said processor means; a second thread in said memory means associated with said second task, for providing said programmed instructions for execution in said processor means; a message passing library means in said interprocess communications means, for registering said first message control structure format as a message control structure template for said first task and issuing to said first task a registration ID; said second thread sending a registration request with said second message control structure format from said second task to said first task; said first thread validating said second message control structure format for said first task and sending said registration ID to said second task; said second task sending a message with said registration ID to said interprocess communications means for forwarding to said first task; said message passing library means using said registration ID to access said message control structure template for comparison with said message from said second task; and in response thereto, said interprocess communication means forwarding said message to said first task.

Viewing the present invention from a second aspect there is provided a method for interprocess communication in a microkernel architecture, comprising: storing data and programmed instructions in a memory means in a data processing system; coordinating message passing between tasks in said memory means with an interprocess communications means in said memory means; storing a first task in said memory means having a set of attributes defining a first communication port and having a first message control structure format for messages it can receive; storing a second task in said memory means having a set of attributes defining a second communication port and having a second message control structure format for messages it can send; registering said first message control structure format as a message control structure template for said first task and issuing to said first task a registration ID; sending a registration request with said second message control structure format from said second task to said first task; validating said second message control structure format for said first task and sending said registration ID to said second task; sending a message with said registration ID to said interprocess communications means for forwarding to said first task; using said registration ID to access said message control structure template for comparison with said message from said second task; and in response thereto, forwarding said message to said first task.

Viewing the present invention from a third aspect there is provided a system for interprocess communication in a microkernel architecture, comprising: a memory means in a data processing system, for storing data and programmed instructions; a microkernel means in said memory means, for coordinating operations between a plurality of tasks in said memory means; an interprocess communications means in said microkernel means, for coordinating message passing between tasks in said memory means; a first task in said memory means having a set of attributes defining a first communication port and a first set of port rights, and having a first message control structure format for messages it can receive; a second task in said memory means having a set of attributes defining a second communication port and a second set of port rights and having a second message control structure format for messages it can send; a processor means coupled to said memory means, for executing said programmed instructions; a first thread in said memory means associated with said first task, for providing said programmed instructions for execution in said processor means; a second thread in said memory means associated with said second task, for providing said programmed instructions for execution in said processor means; a message passing library means in said interprocess communications means, for registering said first message control structure format as a message control structure template for said first task and issuing to said first task a registration ID; said second thread sending a registration request with said second message control structure format from said second task to said first task; said first thread validating said second message control structure format for said first task and sending said registration ID to said second task; said second task sending a message with said registration ID to said interprocess communications means for forwarding to said first task; said message passing library means using said registration ID to access said message control structure template for comparison with said message from said second task; and in response thereto, said interprocess communication means forwarding said message to said first task.

Viewing the present invention from a fourth aspect there is provided a system for interprocessor communication in a shared memory multiprocessor, comprising: a memory means in a data processing system, for storing data and programmed instructions; a microkernel means in said memory means, for coordinating operations between a plurality of tasks in said memory means; an interprocess communications means in said microkernel means, for coordinating message passing between tasks in said memory means; a first task in said memory means having a set of attributes defining a first communication port and a first set of port rights, and having a first message control structure format for messages it can receive; a second task in said memory means having a set of attributes defining a second communication port and a second set of port rights and having a second message control structure format for messages it can send; a first processor means coupled to said memory means, for executing said programmed instructions; a first thread in said memory means associated with said first task, for providing said programmed instructions for execution in said first processor means; a second processor means coupled to said memory means, for executing said programmed instructions; a second thread in said memory means associated with said second task, for providing said programmed instructions for execution in said second processor means; a message passing library means in said interprocess communications means, for registering said first message control structure format as a message control structure template for said first task and issuing to said first task a registration ID; said second thread sending a registration request with said second message control structure format from said second task to said first task; said first thread validating said second message control structure format for said first task and sending said registration ID to said second task; said second task sending a message with said registration ID to said interprocess communications means for forwarding to said first task; said message passing library means using said registration ID to access said message control structure template for comparison with said message from said second task; and in response thereto, said interprocess communication means forwarding said message to said first task.

Viewing the present invention from a fifth aspect there is provided a system for interprocessor communication in a distributed processor system, comprising: a memory means in a first host system of a distributed processor system, for storing data and programmed instructions; a microkernel means in said memory means, for coordinating operations between a plurality of tasks in said memory means; an interprocess communications means in said microkernel means, for coordinating message passing between tasks in said memory means; a first task in said memory means having a set of attributes defining a first communication port and a first set of port rights, and having a first message control structure format for messages it can receive; a second task in said memory means having a set of attributes defining a second communication port and a second set of port rights and having a second message control structure format for messages it can send; a first processor means in said first host system, coupled to said memory means, for executing said programmed instructions; a first thread in said memory means associated with said first task, for providing said programmed instructions for execution in said first processor means; a second thread in said memory means associated with said second task, for providing said programmed instructions for execution in said first processor means; a message passing library means in said interprocess communications means, for registering said first message control structure format as a message control structure template for said first task and issuing to said first task a registration ID; said second thread sending a registration request with said second message control structure format from said second task to said first task; said first thread validating said second message control structure format for said first task and sending said registration ID to said second task; said second task sending a message with said registration ID to said interprocess communications means for forwarding to said first task; said message passing library means using said registration ID to access said message control structure template for comparison with said message from said second task; in response thereto, said interprocess communication means forwarding said message to said first task; a communications link coupling said first processor in said first host system to a second host system of said distributed processor system; a second processor means in said second host system, coupled to said first processor means over said communications link; said first task providing said message to said communications link, for sending said message to said second processor means.

Viewing the present invention from a sixth aspect there is provided a system for an application program to request interprocess communication with another task in a microkernel architecture, comprising: a memory means in a data processing system, for storing data and programmed instructions; an interprocess communications means in said memory means, for coordinating message passing between tasks in said memory means; an application program means in said memory means, for providing application program instructions to be executed; a first task in said memory means having a set of attributes defining a first communication port and having a first message control structure format for messages it can receive; an application program task in said memory means having a set of attributes defining a second communication port and having a second message control structure format for messages it can send; a processor means coupled to said memory means, for executing said programmed instructions; a first thread in said memory means associated with said first task, for providing said programmed instructions for execution in said processor means; a second thread in said memory means associated with said application program task, for providing said programmed instructions for execution in said processor means; a message passing library means in said interprocess communications means, for registering said first message control structure format as a message control structure template for said first task and issuing to said first task a registration ID; said second thread sending a registration request with said second message control structure format from said application program task to said first task; said first thread validating said second message control structure format for said first task and sending said registration ID to said application program task; said application program task sending a message with said registration ID to said interprocess communications means for forwarding to said first task; said message passing library means using said registration ID to access said message control structure template for comparison with said message from said application program task; and in response thereto, said interprocess communication means forwarding said message to said first task.

Viewing the present invention from a seventh aspect there is provided a system for an operating system personality program to request interprocess communication with another task in a microkernel architecture, comprising: a memory means in a data processing system, for storing data and programmed instructions; an interprocess communications means in said memory means, for coordinating message passing between tasks in said memory means; an operating system personality program means in said memory means, for providing operating system personality program instructions to be executed; a first task in said memory means having a set of attributes defining a first communication port and having a first message control structure format for messages it can receive; an operating system personality program task in said memory means having a set of attributes defining a second communication port and having a second message control structure format for messages it can send; a processor means coupled to said memory means, for executing said programmed instructions; a first thread in said memory means associated with said first task, for providing said programmed instructions for execution in said processor means; a second thread in said memory means associated with said operating system personality program task, for providing said programmed instructions for execution in said processor means; a message passing library means in said interprocess communications means, for registering said first message control structure format as a message control structure template for said first task and issuing to said first task a registration ID; said second thread sending a registration request with said second message control structure format from said operating system personality program task to said first task; said first thread validating said second message control structure format for said first task and sending said registration ID to said operating system personality program task; said operating system personality program task sending a message with said registration ID to said interprocess communications means for forwarding to said first task; said message passing library means using said registration ID to access said message control structure template for comparison with said message from said operating system personality program task; and in response thereto, said interprocess communication means forwarding said message to said first task.

Viewing the present invention from an eighth aspect there is provided a system for a personality-neutral services program to request interprocess communication with another task in a microkernel architecture, comprising: a memory means in a data processing system, for storing data and programmed instructions; an interprocess communications means in said memory means, for coordinating message passing between tasks in said memory means; a personality-neutral services program means in said memory means, for providing personality-neutral services program instructions to be executed; a first task in said memory means having a set of attributes defining a first communication port and having a first message control structure format for messages it can receive; a personality-neutral services program task in said memory means having a set of attributes defining a second communication port and having a second message control structure format for messages it can send; a processor means coupled to said memory means, for executing said programmed instructions; a first thread in said memory means associated with said first task, for providing said programmed instructions for execution in said processor means; a second thread in said memory means associated with said personality-neutral services program task, for providing said programmed instructions for execution in said processor means; a message passing library means in said interprocess communications means, for registering said first message control structure format as a message control structure template for said first task and issuing to said first task a registration ID; said second thread sending a registration request with said second message control structure format from said personality-neutral services program task to said first task; said first thread validating said second message control structure format for said first task and sending said registration ID to said personality-neutral services program task; said personality-neutral services program task sending a message with said registration ID to said interprocess communications means for forwarding to said first task; said message passing library means using said registration ID to access said message control structure template for comparison with said message from said personality-neutral services program task; and in response thereto, said interprocess communication means forwarding said message to said first task.

Viewing the present invention from a ninth aspect there is provided a method for an application program to request interprocess communication with another task in a microkernel architecture, comprising: storing data and programmed instructions in a memory means in a data processing system; coordinating message passing between tasks in said memory means with an interprocess communications means in said memory means; storing a first task in said memory means having a set of attributes defining a first communication port and having a first message control structure format for messages it can receive; storing a application program task in said memory means having a set of attributes defining a second communication port and having a second message control structure format for messages it can send; registering said first message control structure format as a message control structure template for said first task and issuing to said first task a registration ID; sending a registration request with said second message control structure format from said application program task to said first task; validating said second message control structure format for said first task and sending said registration ID to said application program task; sending a message with said registration ID to said interprocess communications means for forwarding to said first task; using said registration ID to access said message control structure template for comparison with said message from said application program task; and in response thereto, forwarding said message to said first task.

Viewing the present invention from a tenth aspect there is provided a method for an operating system personality program to request interprocess communication with another task in a microkernel architecture, comprising: storing data and programmed instructions in a memory means in a data processing system; coordinating message passing between tasks in said memory means with an interprocess communications means in said memory means; storing a first task in said memory means having a set of attributes defining a first communication port and having a first message control structure format for messages it can receive; storing an operating system personality program task in said memory means having a set of attributes defining a second communication port and having a second message control structure format for messages it can send; registering said first message control structure format as a message control structure template for said first task and issuing to said first task a registration ID; sending a registration request with said second message control structure format from said operating system personality program task to said first task; validating said second message control structure format for said first task and sending said registration ID to said operating system personality program task; sending a message with said registration ID to said interprocess communications means for forwarding to said first task; using said registration ID to access said message control structure template for comparison with said message from said operating system personality program task; and in response thereto, forwarding said message to said first task.

Viewing the present invention from an eleventh aspect there is provided a method for a personality-neutral services program to request interprocess communication with another task in a microkernel architecture, comprising: storing data and programmed instructions in a memory means in a data processing system; coordinating message passing between tasks in said memory means with an interprocess communications means in said memory means; storing a first task in said memory means having a set of attributes defining a first communication port and having a first message control structure format for messages it can receive; storing a personality-neutral services program task in said memory means having a set of attributes defining a second communication port and having a second message control structure format for messages it can send; registering said first message control structure format as a message control structure template for said first task and issuing to said first task a registration ID; sending a registration request with said second message control structure format from said personality-neutral services program task to said first task; validating said second message control structure format for said first task and sending said registration ID to said personality-neutral services program task; sending a message with said registration ID to said interprocess communications means for forwarding to said first task; using said registration ID to access said message control structure template for comparison with said message from said personality-neutral services program task; and in response thereto, forwarding said message to said first task.

The present invention thus provides an improved microkernel architecture for a data processing system. The invention further provides to an improved microkernel architecture for a data processing system that is more simplified in its interprocess communication operations than has been capable in the prior art. Furthermore, the present invention provides an improved microkernel architecture for a data processing system, that has a faster and more efficient interprocess communication capability. Still furthermore, the present invention provides an improved microkernel architecture for a data processing system, that has greater flexibility in the exchange of messages between tasks within a shared memory environment and between distributed data processors that do not share a common memory.

In a preferred embodiment of the present invention, there is provided a message control structure registration method and apparatus for a microkernel data processing system.

Each of the tasks in the multitude of tasks running concurrently in the microkernel system, needs to communicate with the other tasks. Each message sent from one task to another will have a format for the location of the various fields in control portion and in the body of the message. A fixed format could have been imposed on all messages, but in order to accommodate the large range of possible field categories, a static format would have to be prohibitively large and incapable of expansion to accommodate new types of fields. A variable format for the control portion and the body of messages permits flexibility and change. However, in order to enable the receiving task to decipher the message, the task must be informed of the format. Format descriptions for complex message control structures can occupy a significant portion of the overall message. For repeated communications of messages with the same format between two tasks, the presence of the same format description in each message becomes a significant, superfluous overhead.

This problem is solved by providing a control registration for the message control structures of messages sent from one task to another. Each task that wishes to receive messages while acting in the role of a server, from other tasks while acting in the role of a client, may register the message control structure that it expects to receive, registering it with the interprocess communications subsystem.

The server task expects to receive messages having a particular format for the message control structure. To obtain registration of this format, the server task sends a registration request to the interprocess communication subsystem, the request containing the port name of the server task and the message control structure format that is desired to be registered. As an alternative, the server task may send an address pointer to a description of the message control structure format, instead of the description of the format, itself.

In response, the interprocess communication subsystem issues a registration ID number, and stores it with the port name and the format for the message control structure, in a message control structure table. The message control structure format description stored in the table, or pointed to by a pointer in the table, is a template that the interprocess communications subsystem will use later to validate messages from clients that purport to use the same registration ID. The message control structure registration table can be located inside the microkernel or it can be located elsewhere in the memory address space and can be accessed from the microkernel. The interprocess communications subsystem returns the newly issued registration number for the message control structure to the server task.

When a client task wishes to send a message to the server task, it can avail itself of the convenience of using the control registration feature. To do this, it must request a copy of the server's registration ID for message control structure. The client task sends its own suggested format for a message control structure to the interprocess communication subsystem for forwarding to the server task. The server task must decide whether the proffered format from the client is compatible with the server's registered format for message control structure. The server task has a thread that performs the check for compatibility, taking into consideration the capacity of the server task to accept minor deviations from its registered format. The server's checking thread can reject the proffered format received from the client, resulting in a refusal by the server task to issue a copy of its registration ID to the requesting client task. Alternately, the server's checking task can accept the proffered format from the client, even with minor deviations, if they can be accommodated by the server task. In response, the server task returns the registration ID of its own message control structure to the interprocess communications subsystem for forwarding back to the requesting client task.

Thereafter, when the client task wishes to send a message to the server task, it is no longer necessary to accompany the message with a lengthy format description. The client task and its thread merely formulate the body of the message and include in the header the server task's registration ID and enough additional header information to successfully transfer the message to the interprocess communications subsystem with an indication that the message is intended for the server task. The interprocess communications subsystem checks the message received from the client task to ensure that the message control structure format of the received message sufficiently matches the message control structure template corresponding to the registration ID contained in the received message. The check performed by the interprocess communications subsystem can include a matching of a few predetermined fields in the received message with corresponding fields in the message control structure template. If the checking by the interprocess communications subsystem is successful, then the message is forwarded on to the server task.

The client task and/or the server task can be part of an application program, an operating system personality program, a personality-neutral services program, or the microkernel, itself. In each of these types of programs, tasks and their threads must be created to carry out the purposes of the program. Those tasks must communicate with other tasks concurrently running in the microkernel system. They must communicate with other tasks concurrently running in other application programs in the host multiprocessor. They must communicate with still other tasks concurrently running on different host multiprocessor systems in a distributed processing network. Each communication from one such task to another can avail itself of the efficiencies provided by control registration, in accordance with the invention.

In this manner, the invention manages the interprocess communication that must take place between the many clients and servers in a Microkernel System, in a fast and efficient manner. The invention applies to uniprocessors, shared memory multiprocessors, and multiple computers in a distributed processor system.

Preferred embodiments of the present invention will now be described with reference to the accompanying figures, in which:
Figure 1 is a functional block diagram of the Microkernel System 115 in the memory 102 of the host multiprocessor 100, showing how the microkernel and personality-neutral services 140 run multiple operating system personalities on a variety of hardware platforms;
Figure 2 shows the client visible structure associated with a thread;
Figure 3 shows the client visible task structures;
Figure 4 shows a typical port, illustrating a series of send rights and the single receive right;
Figure 5 shows a series of port rights, contained in a port name space or in transit in a message;
Figure 6 shows the client visible virtual memory structures;
Figure 7 shows a functional block diagram of the host multiprocessor system, with the IPC subsystem and the control registration module, during a first stage when the server task requests registration of its message control structure;
Figure 7A shows a functional block diagram of the host multiprocessor system, with the IPC subsystem and the control registration module, during a second stage when the client task requests a copy of the server's message control structure registration ID to enable the client to send a message to the server;
Figure 7B shows a functional block diagram of the host multiprocessor system, with the IPC subsystem and the control registration module, during a third stage when the client task uses the server's message control structure registration ID to enable the client to send a message to the server;
Figure 8 shows a functional block diagram of two host multiprocessor systems running in a distributed processing arrangement, with the IPC subsystem and the control registration module on each host processor managing interprocess communications between tasks with the exchange of messages between the two hosts over a communications link;
Figure 9 shows a simple message transfer with the IPC;
Figure 10 shows an example message transfer using the capability engine and the message passing library;
Figure 11 shows an example message transfer using the capability engine and the message passing library;
Figure 12 shows an example message transfer using the capability engine and the message passing library;
Figure 13 shows an example message transfer using the capability engine and the message passing library;
Figure 14 shows an example message transfer using the capability engine and the message passing library;
Figure 15 shows an example message transfer using the capability engine and the message passing library;
Figure 16 shows an example message transfer using the capability engine and the message passing library;
Figure 17 shows an example message transfer using the capability engine and the message passing library;
Figure 18 is a diagram outlining message layout;
Figure 19 illustrates a typical call of a by-proxy user level library;
Figure 20 illustrates a message control structure;
Figure 21 illustrates a message header structure;
Figure 22 illustrates an example of a trusted client/known message ID;
Figure 23 illustrates an example of a non-trusted client/known message ID;
Figure 24 illustrates a message format registration;
Figure 25 illustrates the overwrite buffer operation;
Figure 26 illustrates an RPC transfer;
Figure 27 illustrates queue support through the capability engine;
Figure 28 illustrates the basic execution loop of the multiplexing server;
Figure 29 is the message passing library anonymous reply algorithm;
Figure 30 illustrates share region initialization;
Figure 31 illustrates share region usage in the RPC common case;
Figure 32 illustrates an outline of a primitive IPC message pass;
Figure 33 illustrates a primitive IPC message receive attempt, message waiting;
Figure 34 illustrates a primitive IPC message send, receiver waiting and synchronous send;
Figure 35 illustrates an optimal two-way send;
Figure 36 illustrates a two-way transceiver made up of two threads running in different task spaces; and
Figure 37 illustrates a share memory region membership list.

### DISCUSSION OF THE PREFERRED EMBODIMENT

### Part A. The Microkernel System

### Section 1. Microkernel Principles

Figure 1 is a functional block diagram of the Microkernel System 115, showing how the microkernel 120 and personality-neutral services 140 run multiple operating system personalities 150 on a variety of hardware platforms.

The host multi-processor 100 shown in Figure 1 includes memory 102 connected by means of a bus 104 to an auxiliary storage 106 which can be for example a disc drive, a read only or a read/write optical storage, or any other bulk storage device. Also connected to the bus 104 is the I/O adaptor 108 which in turn may be connected to a keyboard, a monitor display, a telecommunications adaptor, a local area network adaptor, a modem, multi-media interface devices, or other I/O devices. Also connected to the bus 104 is a first processor A, 110 and a second processor B, 112. The example shown in Figure 1 is of a symmetrical multi-processor configuration wherein the two uni-processors 110 and 112 share a common memory address space 102. Other configurations of single or multiple processors can be shown as equally suitable examples. The processors can be, for example, an Intel 386 (TM) CPU, Intel 486 (TM) CPU, a Pentium (TM) processor, a Power PC (TM) processor, or other uni-processor devices.

The memory 102 includes the microkernel system 115 stored therein, which comprises the microkernel 120, the personality neutral services (PNS) 140, and the personality servers 150. The microkernel system 115 serves as the operating system for the application programs 180 stored in the memory 102.

An objective of the invention is to provide an operating system that behaves like a traditional operating system such as UNIX or OS/2. In other words, the operating system will have the personality of OS/2 or UNIX, or some other traditional operating system.

The microkernel 120 contains a small, message-passing nucleus of system software running in the most privileged state of the host multi-processor 100, that controls the basic operation of the machine. The microkernel system 115 includes the microkernel 120 and a set of servers and device drivers that provide personality neutral services 140. As the name implies, the personality neutral servers and device drivers are not dependent on any personality such as UNIX or OS/2. They depend on the microkernel 120 and upon each other. The personality servers 150 use the message passing services of the microkernel 120 to communicate with the personality neutral services 140. For example, UNIX, OS/2 or any other personality server can send a message to a personality neutral disc driver and ask it to read a block of data from the disc. The disc driver reads the block and returns it in a message. The message system is optimized so that large amounts of data are transferred rapidly by manipulating pointers; the data itself is not copied.

By virtue of its size and ability to support standard programming services and features as application programs, the microkernel 120 is simpler than a standard operating system. The microkernel system 115 is broken down into modular pieces that are configured in a variety of ways, permitting larger systems to be built by adding pieces to the smaller ones. For example, each personality neutral server 140 is logically separate and can be configured in a variety of ways. Each server runs as an application program and can be debugged using application debuggers. Each server runs in a separate task and errors in the server are confined to that task.

Figure 1 shows the microkernel 120 including the interprocess communications module (IPC) 122, the virtual memory module 124, tasks and threads module 126, the host and processor sets 128, I/O support and interrupts 130, and machine dependent code 125.

The personality neutral services 140 shown in Figure 1 includes the multiple personality support 142 which includes the master server, initialization, and naming. It also includes the default pager 144. It also includes the device support 146 which includes multiple personality support and device drivers. It also includes other personality neutral products 148, including a file server, network services, database engines and security.

The personality servers 150 are for example the dominant personality 152 which can be, for example, a UNIX personality. It includes a dominant personality server 154 which would be a UNIX server, and other dominant personality services 155 which would support the UNIX dominant personality. An alternate dominant personality 156 can be for example OS/2. Included in the alternate personality 156 are the alternate personality server 158 which would characterize the OS/2 personality, and other alternate personality services for OS/2, 159.

Dominant personality applications 182 shown in Figure 1, associated with the UNIX dominant personality example, are UNIX-type applications which would run on top of the UNIX operating system personality 152. The alternate personality applications 186 shown in Figure 1, are OS/2 applications which run on top of the OS/2 alternate personality operating system 156.

Figure 1 shows that the Microkernel System 115 carefully splits its implementation into code that is completely portable from processor type to processor type and code that is dependent on the type of processor in the particular machine on which it is executing. It also segregates the code that depends on devices into device drivers; however, the device driver code, while device dependent, is not necessarily dependent on the processor architecture. Using multiple threads per task, it provides an application environment that permits the use of multi-processors without requiring that any particular machine be a multi-processor. On uni-processors, different threads run at different times. All of the support needed for multiple processors is concentrated into the small and simple microkernel 120.

This section provides an overview of the structure of the Microkernel System 115. Later sections describe each component of the structure in detail and describe the technology necessary to build a new program using the services of the Microkernel System 115.

The Microkernel System 115 is a new foundation for operating systems. It provides a comprehensive environment for operating system development with the following features:
Support for multiple personalities
Extensible memory management
Interprocess communication
Multi-threading
Multi-processing

The Microkernel System 115 provides a concise set of kernel services implemented as a pure kernel and an extensive set of services for building operating system personalities implemented as a set of user-level servers.

Objectives of the Microkernel System 115 include the following:
Permit multiple operating system personalities to work together in harmony;
Provide common programming for low-level system elements, such as device drivers and file systems;
Exploit parallelism in both operating system and user applications;
Support large, potentially sparse address spaces with flexible memory sharing;
Allow transparent network resource access;
Be compatible with existing software environments, such as OS/2 and UNIX; and
Portable (to 32-bit and 64-bit platforms).

The Microkernel System 115 is based on the following concepts:
User mode tasks performing many traditional operating system functions (for example, file system and network access);
A basic set of user-level run time services for creating operating systems;
A simple, extensible communication kernel;
An object basis with communication channels as object references; and
A client/server programming model, using synchronous and asynchronous inter-process communication.

The basis for the Microkernel System 115 is to provide a simple, extensible communication kernel. It is an objective of the Microkernel System 115 to permit the flexible configuration of services in either user or kernel space with the minimum amount of function in the kernel proper. The kernel must provide other support besides task-to-task communication, including:
Management of points of control (threads);
Resource assignment (tasks);
Support of address spaces for tasks; and
Management of physical resources, such as physical memory, processors, interrupts, DMA channels, and clocks.

User mode tasks implement the policies regarding resource usage. The kernel simply provides mechanisms to enforce those policies. Logically above the kernel is the Personality-Neutral services 140 (PNS) layer. The PNS provide a C runtime environment, including such basic constructs as string functions, and a set of servers which include:
- Name Server: - Allows a client to find a server
- Master Server: - Allows programs to be loaded and started

### Kernel Abstractions

One goal of the Microkernel System 115 is to minimize abstractions provided by the kernel itself, but not to be minimal in the semantics associated with those abstractions. Each of the abstractions provided has a set of semantics associated with it, and a complex set of interactions with the other abstractions. This can make it difficult to identify key ideas. The main kernel abstractions are:
Task - Unit of resource allocation, large access space and port right
Thread - Unit of CPU utilization, lightweight (low overhead)
Port - A communication channel, accessible only through the send/receive capabilities or rights
Message - A collection of data objects
Memory object - The internal unit of memory management
(Refer to Section 2, Architectural Model, for a detailed description of the task, thread, port, message and memory object concepts).

### Tasks and Threads

The Microkernel System 115 does not provide the traditional concept of process because: All operating system environments have considerable semantics associated with a process (such as user ID, signal state, and so on). It is not the purpose of the microkernel to understand or provide these extended semantics.

Many systems equate a process with an execution point of control. Some systems do not.

The microkernel 120 supports multiple points of control separately from the operating system environment's process.

The microkernel provides the following two concepts:
Task
Thread
(Refer to Section 2, Architectural Model, for a detailed description of the task and thread concepts).

### Memory Management

The kernel provides some memory management. Memory is associated with tasks. Memory objects are the means by which tasks take control over memory management. The Microkernel System 115 provides the mechanisms to support large, potentially sparse virtual address spaces. Each task has an associated address map that is maintained by the kernel and controls the translation of virtual address in the task's address space into physical addresses. As in virtual memory systems, the contents of the entire address space of any given task might not be completely resident in physical memory at the same time, and mechanisms must exist to use physical memory as a cache for the virtual address spaces of tasks. Unlike traditional virtual memory designs, the Microkernel System 115 does not implement all of the caching itself. It gives user mode tasks the ability to participate in these mechanisms. The PNS include a user task, the default pager 144, that provides paging services for memory.

Unlike other resources in the Microkernel System 115 , virtual memory is not referenced using ports. Memory can be referenced only by using virtual addresses as indices into a particular task's address space. The memory and the associated address map that defines a task's address space can be partially shared with other tasks. A task can allocate new ranges of memory within its address space, de-allocate them, and change protections on them. It can also specify inheritance properties for the ranges. A new task is created by specifying an existing task as a base from which to construct the address space for the new task. The inheritance attribute of each range of the memory of the existing task determines whether the new task has that range defined and whether that range is virtually copied or shared with the existing task. Most virtual copy operations for memory are achieved through copy-on-write optimizations. A copy-on-write optimization is accomplished by protected sharing. The two tasks share the memory to be copied, but with read-only access. When either task attempts to modify a portion of the range, that portion is copied at that time. This lazy evaluation of memory copies is an important performance optimization performed by the Microkernel System 115 and important to the communication/memory philosophy of the system.

Any given region of memory is backed by a memory object. A memory manager task provides the policy governing the relationship between the image of a set of pages while cached in memory (the physical memory contents of a memory region) and the image of that set of pages when not cached (the abstract memory object). The PNS has a default memory manager or pager that provides basic non-persistent memory objects that are zero-filled initially and paged against system paging space.

### Task to Task Communication

The Microkernel System 115 uses a client/server system structure in which tasks (clients) access services by making requests of other tasks (servers) through messages sent over a communication channel. Since the microkernel 120 provides very few services of its own (for example, it provides no file service), a microkernel 120 task must communicate with many other tasks that provide the required services. The communication channels of the interprocess communication (IPC) mechanism are called ports. (Refer to Section 2, Architectural Model, for a detailed description of a Port). A message is a collection of data, memory regions, and port rights. A port right is a name by which a task, that holds the right, names the port. A task can manipulate a port only if it holds the appropriate port rights. Only one task can hold the receive right for a port. This task is allowed to receive (read) messages from the port queue. Multiple tasks can hold send rights to the port that allow them to send (write) messages into the queue. A task communicates with another task by building a data structure that contains a set of data elements, and then performing a message-send operation on a port for which it holds a send right. At some later time, the task holding the receive right to that port performs a message-receive operation. Note: This message transfer is an asynchronous operation. The message is logically copied into the receiving task (possibly with copy-on-write optimizations). Multiple threads within the receiving task can be attempting to receive messages from a given port, but only one thread will receive any given message.

### Section 2. Architectural Model

The Microkernel System 115 has, as its primary responsibility, the provision of points of control that execute instructions within a framework. These points of control are called threads. Threads execute in a virtual environment. The virtual environment provided by the kernel contains a virtual processor that executes all of the user space accessible hardware instructions, augmented by user-space PNS and emulated instructions (system traps) provided by the kernel. The virtual processor accesses a set of virtualized registers and some virtual memory that otherwise responds as does the machine's physical memory. All other hardware resources are accessible only through special combinations of memory accesses and emulated instructions. Note that all resources provided by the kernel are virtualized. This section describes the top level elements of the virtual environment as seen by threads.

### Elements of the Personality Neutral Services (PNS)

The PNS 140 portion of the Microkernel System 115 consists of services built on the underlying microkernel 120. This provides some functions that the kernel itself depends on, as well as a basic set of user-level services for the construction of programs. These programs can serve requests from multiple operating system personality clients and are used to construct the operating system personalities themselves. In addition, there is an ANSI C run time environment for the construction of PNS programs in standard C and some supplemental functions that have definitions taken from the POSIX standard. Besides the libraries that define the PNS themselves, there are many libraries that exist within the PNS that are a part of the microkernel proper. These libraries represent the interfaces that the microkernel exports and the support logic for the Message Interface Generator (MIG) which is used with the Microkernel System's 115 interprocess communications facilities.

The structure of the PNS environment library hides the details of the implementation of each service from its callers. Some libraries, such as one of the C run time libraries, implement all of their functions as local routines that are loaded into the address space of the caller while other libraries consist of stubs that invoke the microkernel's IPC system to send messages to servers. This architecture permits the flexible implementation of function: servers can be replaced by other servers and services can be combined into single tasks without affecting the sources of the programs that use them. A key element of the PNS environment is that, it does not constitute a complete operating system. Instead, the PNS depend on the existence of a personality. The dominant personality 152, that is loaded first during system start-up, is the operating system personality which provides the user interface on the system and provides services to its clients and to elements of the PNS. Thus, the dominant personality is a server of "last resort". The dominant personality implements whatever services are defined by the PNS libraries but are not implemented by another server.

The microkernel 120 is also dependent on some elements of the PNS. There are cases when it sends messages to personality-neutral servers to complete internal kernel operations. For example, in resolving a page fault, the microkernel 120 may send a message to the default pager 144. The default pager 144 then reads in the page that the kernel needs from a hard disk. Although the page fault is usually being resolved on behalf of a user task, the kernel is the sender of the message.

### Run Time

The PNS run time provides a set of ANSI C and POSIX libraries that are used to support a standard C programming environment for programs executing in this environment. The facilities include typical C language constructs. Like all systems, the microkernel system 115 has, as its primary responsibility, the provision of points of control that execute instructions within a framework. In the microkernel 120, points of control are called threads. Threads execute in a virtual environment. The virtual environment provided by the microkernel 120 consists of a virtual processor that executes all of the user space accessible hardware instructions, augmented by emulated instructions (system traps) provided by the kernel; the virtual processor accesses a set of virtualized registers and some virtual memory that otherwise responds as does the machine's physical memory. All other hardware resources are accessible only through special combinations of memory accesses and emulated instructions. Note that all resources provided by the microkernel are virtualized. This section describes the top level elements of the virtual environment seen by the microkernel threads.

### Elements of the Kernel

The microkernel 120 provides an environment consisting of the elements described in the following list of Kernel Elements:
Thread:
An execution point of control. A thread is a lightweight entity. Most of the state pertinent to a thread is associated with its containing task.
Task:
A container to hold references to resources in the form of a port name space, a virtual address space, and a set of threads.
Security Token:
A security feature passed from the task to server, which performs access validations.
Port:
A unidirectional communication channel between tasks.
Port Set:
A set of ports which can be treated as a single unit when receiving a message.
Port Right:
Allows specific rights to access a port.
Port Name Space:
An indexed collection of port names that names a particular port right.
Message:
A collection of data, memory regions and port rights passed between two tasks.
Message Queue:
A queue of messages associated with a single port.
Virtual Address Space:
A sparsely populated, indexed set of memory pages that can be referenced by the threads within a task. Ranges of pages might have arbitrary attributes and semantics associated with them through mechanisms implemented by the kernel and external memory managers.
Abstract Memory Object:
An abstract object that represents the non-resident state of the memory ranges backed by this object. The task that implements this object is called a memory manager. The abstract memory object port is the port through which the kernel requests action of the memory manager.
Memory Object Representative:
The abstract representation of a memory object provided by the memory manager to clients of the memory object. The representative names the associated abstract memory object and limits the potential access modes permitted to the client.
Memory Cache Object:
A kernel object that contains the resident state of the memory ranges backed by an abstract memory object. It is through this object that the memory manager manipulates the clients' visible memory image.
Processor:
A physical processor capable of executing threads.
Processor Set:
A set of processors, each of which can be used to execute the threads assigned to the processor set.
Host:
The multiprocessor as a whole.
Clock:
A representation of the passage of time. A time value incremented at a constant frequency.

Many of these elements are kernel implemented resources that can be directly manipulated by threads. Each of these elements are discussed in detail in the paragraphs that follow. However, since some of their definitions depend on the definitions of others, some of the key concepts are discussed in simplified form so that a full discussion can be understood.

### Threads

A thread is a lightweight entity. It is inexpensive to create and requires low overhead to operate. A thread has little state (mostly its register state). Its owning task bears the burden of resource management. On a multiprocessor it is possible for multiple threads in a task to execute in parallel. Even when parallelism is not the goal, multiple threads have an advantage because each thread can use a synchronous programming style, instead of asynchronous programming with a single thread attempting to provide multiple services.

A thread contains the following features:
1. a point of control flow in a task or a stream of instruction execution ;
2. access to all of the elements of the containing task;
3. executes in parallel with other threads, even threads within the same task; and
4. minimal state for low overhead.

A thread is the basic computational entity. A thread belongs to only one task that defines its virtual address space. To affect the structure of the address space, or to reference any resource other than the address space, the thread must execute a special trap instruction. This causes the kernel to perform operations on behalf of the thread, or to send a message to an agent on behalf of the thread. These traps manipulate resources associated with the task containing the thread. Requests can be made of the kernel to manipulate these entities: to create and delete them and affect their state. The kernel is a manager that provides resources (such as those listed above) and services. Tasks may also provide services, and implement abstract resources. The kernel provides communication methods that allow a client task to request that a server task (actually, a thread executing within it) provide a service. In this way, a task has a dual identity. One identity is that of a resource managed by the kernel, whose resource manager executes within the kernel. The second identity is that of a supplier of resources for which the resource manager is the task itself.

A thread has the following state:
1. Its machine state (registers, etc.), which change as the thread executes and which can also be changed by a holder of the kernel thread port;
2. A small set of thread specific port rights, identifying the thread's kernel port and ports used to send exception messages on behalf of the thread;
3. A suspend count, non-zero if the thread is not to execute instructions; and
4. Resource scheduling parameters.

A thread operates by executing instructions in the usual way.

Various special instructions trap to the kernel, to perform operations on behalf of the thread. The most important of these kernel traps is the mach_msg_trap. This trap allows the thread to send messages to the kernel and other servers to operate upon resources. This trap is almost never directly called; it is invoked through the mach_msg library routine. Exceptional conditions, such as "floating point overflow" and "page not resident", that arise during the thread's execution, are handled by sending messages to a port. The port used depends on the nature of the condition. The outcome of the exceptional condition is determined by setting the thread's state and/or responding to the exception message. The following operations can be performed on a thread:
Creation and destruction;
Suspension and resumption (manipulating the suspend count);
Machine state manipulation Special port (such as exception; port) manipulation; and
Resource (scheduling) control.

### Tasks

A task is a collection of system resources. These resources, with the exception of the address space, are referenced by ports. These resources can be shared with other tasks if rights to the ports are so distributed.

Tasks provide a large, potentially sparse address space, referenced by machine address. Portions of this space can be shared through inheritance or external memory management. Note: A task has no life of its own. It contains threads which execute instructions. When it is said "a task Y does X" what is meant is "a thread contained within task Y does X". A task is an expensive entity. All of the threads in a task share everything. Two tasks share nothing without explicit action, although the action is often simple. Some resources such as port receive rights cannot be shared between two tasks. A task can be viewed as a container that holds a set of threads. It contains default values to be applied to its containing threads. Most importantly, it contains those elements that its containing threads need to execute, namely, a port name space and a virtual address space.

The state associated with a task is as follows:
The set of contained threads;
The associated virtual address space;
The associated port name space, naming a set of port rights, and a related set of port notification requests;
A security token to be sent with messages from the task;
A small set of task specific ports, identifying the task's kernel port, default ports to use for exception handling for contained threads, and bootstrap ports to name other services;
A suspend count, non-zero if no contained threads are to execute instructions;
Default scheduling parameters for threads; and
Various statistics, including statistical PC samples.

Tasks are created by specifying a prototype task which specifies the host on which the new task is created, and which can supply by inheritance various portions of its address space.

The following operations can be performed on a task:
Creation and destruction
Setting the security token
Suspension and resumption
Special port manipulation
Manipulation of contained threads
Manipulation of the scheduling parameters

### Security Port

All tasks are tagged with a security token, an identifier that is opaque from the kernel's point of view. It encodes the identity and other security attributes of the task. This security token is included as an implicit value in all messages sent by the task. Trusted servers can use this sent token as an indication of the sender's identity for use in making access mediation decisions.

A task inherits the security token of its parent. Because this token is to be used as an un-forgeable indication of identity, privilege is required to change this token. This privilege is indicated by presenting the host security port.

A reserved value indicates the kernel's identity. All messages from the kernel carry the kernel identity, except exception messages, which carry the excepting task's identity.

### Port

A port is a unidirectional communication channel between a client that requests a service and a server that provides the service. A port has a single receiver and potentially multiple senders. The state associated with a port is as follows:
Its associated message queue
A count of references (rights) to the port
Settable limits on the amount of virtual copy memory and port rights that can be sent in a message through the port.

Kernel services exist to allocate ports. All system entities other than virtual memory ranges are named by ports; ports are also created implicitly when these entities are created.

The kernel provides notification messages upon the death of a port upon request. With the exception of the task's virtual address space, all other system resources are accessed through a level of indirection known as a port. A port is a unidirectional communication channel between a client who requests service and a server who provides the service. If a reply is to be provided to such a service request, a second port must be used. The service to be provided is determined by the manager that receives the message sent over the port. It follows that the receiver for ports associated with kernel provided entities is the kernel. The receiver for ports associated with task provided entities is the task providing that entity. For ports that name task provided entities, it is possible to change the receiver of messages for that port to a different task. A single task might have multiple ports that refer to resources it supports. Any given entity can have multiple ports that represent it, each implying different sets of permissible operations. For example, many entities have a name port and a control port that is sometimes called the privileged port. Access to the control port allows the entity to be manipulated. Access to the name port simply names the entity, for example, to return information.

There is no system-wide name space for ports. A thread can access only the ports known to its containing task. A task holds a set of port rights, each of which names a (not necessarily distinct) port and which specifies the rights permitted for that port. Port rights can be transmitted in messages. This is how a task gets port rights. A port right is named with a port name, which is an integer chosen by the kernel that is meaningful only within the context (port name space) of the task holding that right. Most operations in the system consist of sending a message to a port that names a manager for the object being manipulated. In this document, this is shown in the form:
object → function
which means that the function is invoked (by sending an appropriate message) to a port that names the object. Since a message must be sent to a port (right), this operation has an object basis. Some operations require two objects, such as binding a thread to a processor set. These operations show the objects separated by commas. Not all entities are named by ports, and this is not a pure object model. The two main non-port-right named entities are port names/rights themselves, and ranges of memory. Event objects are also named by task local IDs. To manipulate a memory range, a message is sent to the containing virtual address space named by the owning task. To manipulate a port name/right, and often, the associated port, a message is sent to the containing port name space named by the owning task. A subscript notation,
object [id] → function
is used here to show that an id is required as a parameter in the message to indicate which range or element of object is to be manipulated. The parenthetic notation,
object (port) → function
is used here to show that a privileged port, such as the host control port, is required as a parameter in the message to indicate sufficient privilege to manipulate the object in the particular way.

### Port Sets

A port set is a set of ports that can be treated as a single unit when receiving a message. A mach_msg receive operation is allowed against a port name that either names a receive right, or a port set. A port set contains a collection of receive rights. When a receive operation is performed against a port set, a message is received from one of the ports in the set. The received message indicates from which member port it was received. It is not allowed to directly receive a message from a port that is a member of a port set. There is no concept of priority for the ports in a port set; there is no control provided over the kernel's choice of the port within the port set from which any given message is received.

Operations supported for port sets include:
Creation and deletion
Membership changes and membership queries

### Port Rights

A port can only be accessed by using a port right. A port right allows access to a specific port in a specific way. There are three types of port rights as follow:
receive right - Allows the holder to receive messages from the associated port.
send right - Allows the holder to send messages to the associated port.
send-once right - Allows the holder to send a single message to the associated port. The port right self-destructs after the message is sent.

Port rights can be copied and moved between tasks using various options in the mach_msg call, and also by explicit command. Other than message operations, port rights can be manipulated only as members of a port name space. Port rights are created implicitly when any other system entity is created, and explicitly using explicit port creation.

The kernel will, upon request, provide notification to a port of one's choosing when there are no more send rights to a port. Also, the destruction of a send-once right (other than by using it to send a message) generates a send-once notification sent to the corresponding port. Upon request, the kernel provides notification of the destruction of a receive right.

### Port Name Space

Ports and port rights do not have system-wide names that allow arbitrary ports or rights to be manipulated directly. Ports can be manipulated only through port rights, and port rights can be manipulated only when they are contained within a port name space. A port right is specified by a port name which is an index into a port name space. Each task has associated with it a single port name space.

An entry in a port name space can have the following four possible values:
MACH_PORT_NULL - No associated port right.
MACH_PORT_DEAD - A right was associated with this name, but the port to which the right referred has been destroyed.
A port right - A send-once, send or receive right for a port.
A port set name - A name which acts like a receive right, but that allows receiving from multiple ports.

Acquiring a new right in a task generates a new port name. As port rights are manipulated by referring to their port names, the port names are sometimes themselves manipulated. All send and receive rights to a given port in a given port name space have the same port name. Each send-once right to a given port have a different port name from any other and from the port name used for any send or receive rights held.

Operations supported for port names include the following:
Creation (implicit in creation of a right) and deletion
Query of the associated type
Rename
Upon request, the kernel provides notification of a name becoming unusable.

Since port name spaces are bound to tasks, they are created and destroyed with their owning task.

### Message

A message is a collection of data, memory regions and port rights passed between two entities. A message is not a system object in its own right. However, since messages are queued, they are significant because they can hold state between the time a message is sent and when it is received. This state consists of the following:
Pure data
Copies of memory ranges
Port rights
Sender's security token

### Message Queues

A port consists of a queue of messages. This queue is manipulated only through message operations (mach_msg) that transmit messages. The state associated with a queue is the ordered set of messages queued, and settable limit on the number of messages.

### Virtual Address Space

A virtual address space defines the set of valid virtual addresses that a thread executing within the task owning the virtual address space is allowed to reference. A virtual address space is named by its owning task.

A virtual address space consists of a sparsely populated indexed set of pages. The attributes of individual pages can be set as desired. For efficiency, the kernel groups virtually contiguous sets of pages that have the same attributes into internal memory regions. The kernel is free to split or merge memory regions as desired. System mechanisms are sensitive to the identities of memory regions, but most user accesses are not so affected, and can span memory regions freely.

A given memory range can have distinct semantics associated with it through the actions of a memory manager. When a new memory range is established in a virtual address space, an abstract memory object is specified, possibly by default, that represents the semantics of the memory range, by being associated with a task (a memory manager) that provides those semantics.

A virtual address space is created when a task is created, and destroyed when the task is destroyed. The initial contents of the address space is determined from various options to the task_create call, as well as the inheritance properties of the memory ranges of the prototype task used in that of call.

Most operations upon a virtual address space name a memory range within the address space. These operations include the following:
Creating or allocating, and de-allocating a range
Copying a range
Setting special attributes, including "wiring" the page into physical memory to prevent eviction
Setting memory protection attributes
Setting inheritance properties
Directly reading and writing ranges
Forcing a range flush to backing storage
Reserving a range (preventing random allocation within the range)

### Abstract Memory Object

The microkernel allows user mode tasks to provide the semantics associated with referencing portions of a virtual address space. It does this by allowing the specification of an abstract memory object that represents the non-resident state of the memory ranges backed by this memory object. The task that implements this memory object and responds to messages sent to the port that names the memory object is called a memory manager.

The kernel should be viewed as using main memory as a directly accessible cache for the contents of the various memory objects. The kernel is involved in an asynchronous dialog with the various memory managers to maintain this cache, filling and flushing this cache as the kernel desires, by sending messages to the abstract memory object ports.

The operations upon abstract memory objects include the following:
Initialization
Page reads
Page writes
Synchronization with force and flush operations
Requests for permission to access pages
Page copies
Termination

### Memory Object Representative

The abstract memory object port is used by the kernel to request access to the backing storage for a memory object. Because of the protected nature of this dialog, memory managers do not typically give access to the abstract memory object port to clients. Instead, clients are given access to memory object representatives. A memory object representative is the client's representation of a memory object. There is only one operation permitted against such a port and that is to map the associated memory object into a task's address space. Making such a request initiates a protocol between the mapping kernel and the memory manager to initialize the underlying abstract memory object. It is through this special protocol that the kernel is informed of the abstract memory object represented by the representative, as well as the set of access modes permitted by the representative.

### Memory Cache Object

The portion of the kernel's main memory cache that contains the resident pages associated with a given abstract memory object is referred to as the memory cache object. The memory manager for a memory object holds send rights to the kernel's memory cache object. The memory manager is involved in an asynchronous dialog with the kernel to provide the abstraction of its abstract memory object by sending messages to the associated memory cache object.

The operations upon memory cache objects include the following:
Set operational attributes
Return attributes
Supply pages to the kernel
Indicate that pages requested by the kernel are not available
Indicate that pages requested by the kernel should be filled by the kernel's default rules Force delayed copies of the object to be completed
Indicate that pages sent to the memory manager have been disposed
Restrict access to memory pages
Provide performance hints
Terminate

### Processor

Each physical processor that is capable of executing threads is named by a processor control port. Although significant in that they perform the real work, processors are not very significant in the microkernel, other than as members of a processor set. It is a processor set that forms the basis for the pool of processors used to schedule a set of threads, and that has scheduling attributes associated with it. The operations supported for processors include the following:
Assignment to a processor set
Machine control, such as start and stop

### Processor Set

Processors are grouped into processor sets. A processor set forms a pool of processors used to schedule the threads assigned to that processor set. A processor set exists as a basis to uniformly control the schedulability of a set of threads. The concept also provides a way to perform coarse allocation of processors to given activities in the system. The operations supported upon processor sets include the following:
Creation and deletion
Assignment of processors
Assignment of threads and tasks
Scheduling control

### Host

Each machine (uniprocessor or multiprocessor) in a networked microkernel system runs its own instantiation of the microkernel. The host multiprocessor 100 is not generally manipulated by client tasks. But, since each host does carry its own microkernel 120, each with its own port space, physical memory and other resources, the executing host is visible and sometimes manipulated directly. Also, each host generates its own statistics. Hosts are named by a name port which is freely distributed and which can be used to obtain information about the host and a control port which is closely held and which can be used to manipulate the host. Operations supported by hosts include the following:
Clock manipulation
Statistics gathering
Re-boot
Setting the default memory manager
Obtaining lists of processors and processor sets

### Clock

A clock provides a representation of the passage of time by incrementing a time value counter at a constant frequency. Each host or node in a multicomputer implements its own set of clocks based upon the various clocks and timers supported by the hardware as well as abstract clocks built upon these timers. The set of clocks implemented by a given system is set at configuration time.

Each clock is named by both a name and a control or privileged port. The control port allows the time and resolution of the clock to be set. Given the name port, a task can perform the following:
Determine the time and resolution of the clock.
Generate a memory object that maps the time value.
Sleep (delay) until a given time.
Request a notification or alarm at a given time.

### Section 3. Tasks and Threads

This section discusses the user visible view of threads and tasks. Threads are the active entities in the Microkernel System 115. They act as points of control within a task, which provides them with a virtual address space and a port name space with which other resources are accessed.

### Threads

A thread is the basic computational entity. A thread belongs to only one task that defines its virtual address space. A thread is a lightweight entity with a minimum of state. A thread executes in the way dictated by the hardware, fetching instructions from its task's address space based on the thread's register values. The only actions a thread can take directly are to execute instructions that manipulate its registers and read and write into its memory space. An attempt to execute privileged machine instructions, though, causes an exception. The exception is discussed later. To affect the structure of the address space, or to reference any resource other than the address space, the thread must execute a special trap instruction which causes the kernel to perform operations on behalf of the thread, or to send a message to some agent on behalf of the thread. Also, faults or other illegal instruction behavior cause the kernel to invoke its exception processing.

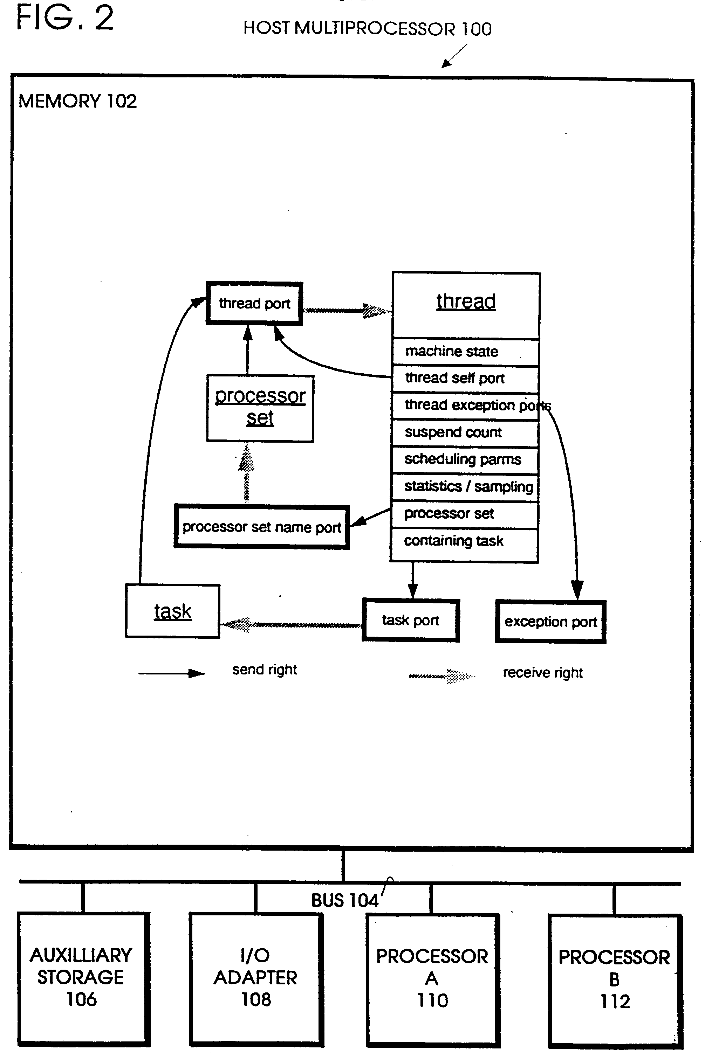

Figure 2. shows the client visible structure associated with a thread. The thread object is the receiver for messages sent to the kernel thread port. Aside from any random task that holds a send right for this thread port, the thread port is also accessible as the thread's thread self port, through the containing processor set or the containing task.

Reference is made here to the above cited copending United States Patent Application by Guy G. Sotomayor, Jr., James M. Magee, and Freeman L. Rawson, III, entitled "METHOD AND APPARATUS FOR MANAGEMENT OF MAPPED AND UNMAPPED REGIONS OF MEMORY IN A MICROKERNEL DATA PROCESSING SYSTEM", which is incorporated herein by reference for its more detailed discussion of this topic.

### Tasks

A task can be viewed as a container that holds a set of threads. It contains default values to be applied to its containing threads. Most importantly, it contains those elements that its containing threads need to execute, namely, a port name space and a virtual address space.

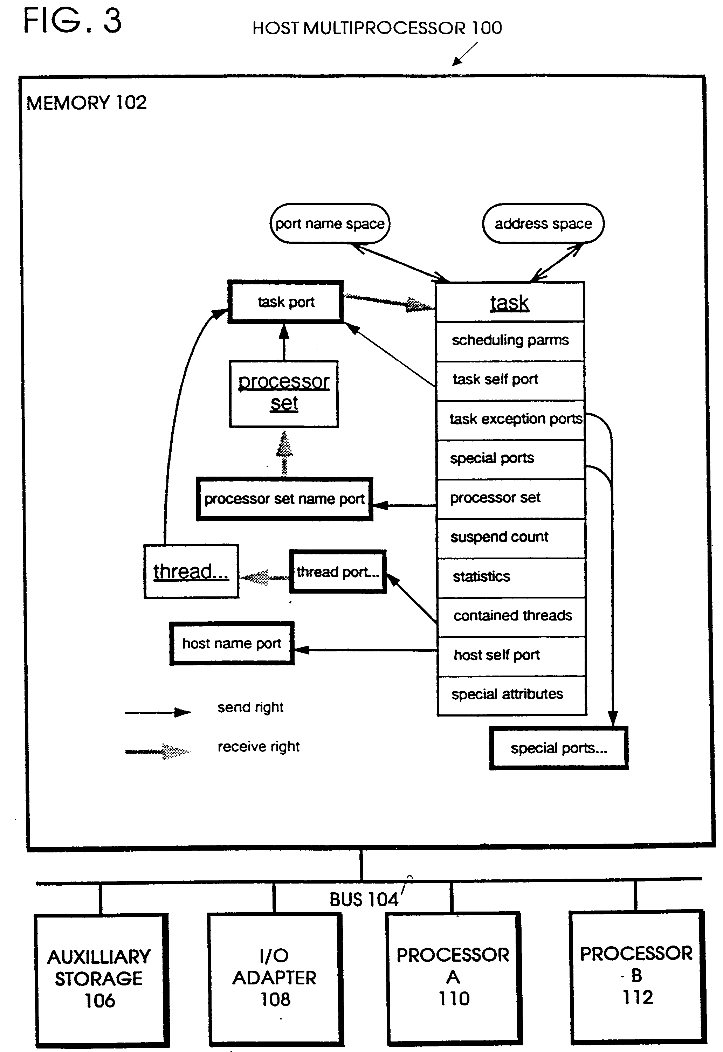

Figure 3. shows the client visible task structures. The task object is the receiver for messages sent to the kernel task port. Aside from any random task that may hold a send right to the task port, the task port can be derived from the task's task self port, the contained threads or the containing processor set.

Reference is made here to the above cited copending United States Patent Application by Guy G. Sotomayor, Jr., James M. Magee, and Freeman L. Rawson, III, entitled "METHOD AND APPARATUS FOR MANAGEMENT OF MAPPED AND UNMAPPED REGIONS OF MEMORY IN A MICROKERNEL DATA PROCESSING SYSTEM", which is incorporated herein by reference for its more detailed discussion of this topic.

### Section 4. IPC

With the exception of its shared memory, a microkernel task interacts with its environment purely by sending messages and receiving replies. These messages are sent using ports. A port is a communication channel that has a single receiver and can have multiple senders. A task holds rights to these ports that specify its ability to send or receive messages.

### Ports

A port is a unidirectional communication channel between a client who requests a service and a server who provides the service.

A port has a single receiver and can have multiple senders. A port that represents a kernel supported resource has the kernel as the receiver. A port that names a service provided by a task has that task as the port's receiver. This receivership can change if desired, as discussed under port rights.

The state associated with a port is:
The associated message queue
A count of references or rights to the port
Port right and out-of-line memory receive limits
Message sequence number
Number of send rights created from receive right
Containing port set
Name of no-more-sender port if specified

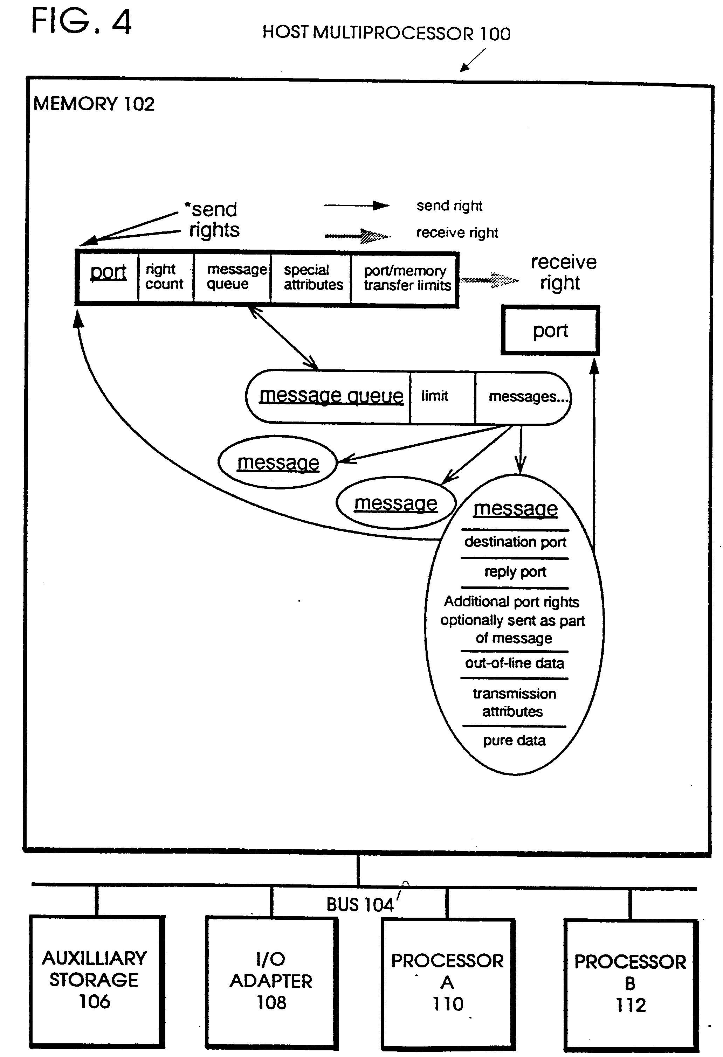

Figure 4 shows a typical port, illustrating a series of send rights and the single receive right. The associated message queue has a series of ordered messages. One of the messages is shown in detail, showing its destination port, reply port reference, a send- and-receive right being passed in the message, as well as some out-of-line or virtual copy memory.

Reference is made here to the above cited copending United States Patent Application by Guy G. Sotomayor, Jr., James M. Magee, and Freeman L. Rawson, III, entitled "METHOD AND APPARATUS FOR MANAGEMENT OF MAPPED AND UNMAPPED REGIONS OF MEMORY IN A MICROKERNEL DATA PROCESSING SYSTEM", which is incorporated herein by reference for its more detailed discussion of this topic.

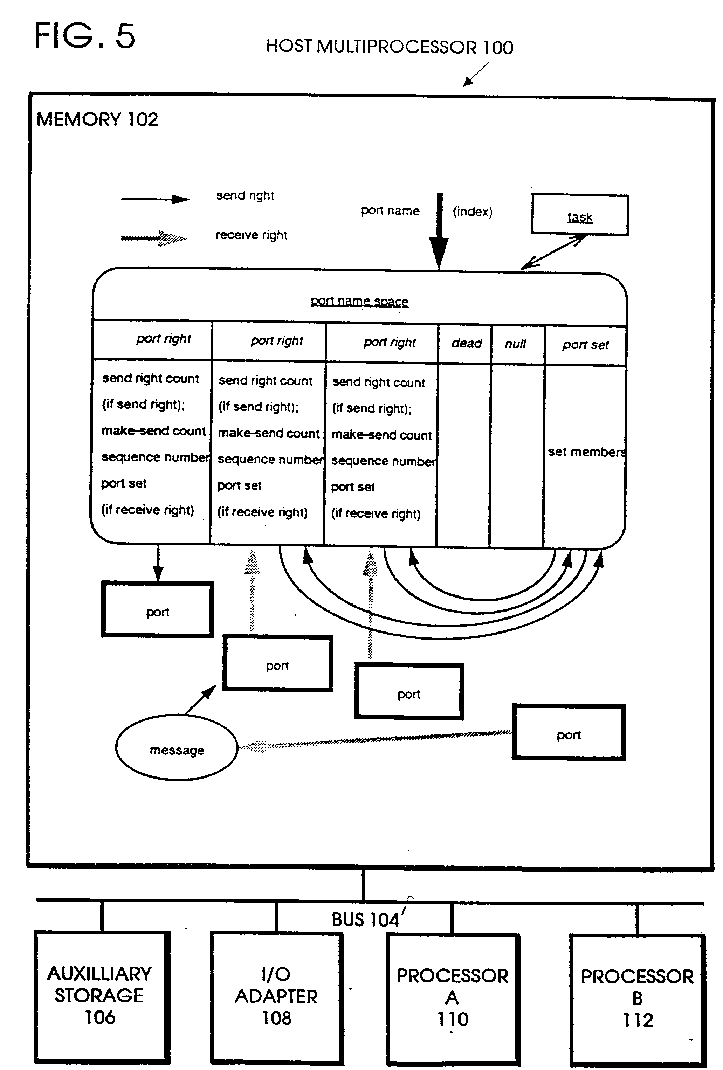

Figure 5. shows a series of port rights, contained in a port name space or in transit in a message. A port set is also shown in the port name space.

Reference is made here to the above cited copending United States Patent Application by Guy G. Sotomayor, Jr., James M. Magee, and Freeman L. Rawson, III, entitled "METHOD AND APPARATUS FOR MANAGEMENT OF MAPPED AND UNMAPPED REGIONS OF MEMORY IN A MICROKERNEL DATA PROCESSING SYSTEM", which is incorporated herein by reference for its more detailed discussion of this topic.

### Section 5. Virtual Memory Management

The Microkernel's virtual memory design layers the virtual memory system into machine-dependent and machine-independent portions. The machine-dependent portion provides a simple interface for validating, invalidating, and setting the access rights for pages of virtual memory, thereby maintaining the hardware address maps. The machine independent portion provides support for logical address maps (mapping a virtual address space), memory ranges within this map, and the interface to the backing storage (memory objects) for these ranges through the external memory management interface.

The virtual memory system is designed for uniform memory access multiprocessors of a moderate number of processors. Support for architectures providing non-uniform memory access or no remote memory access is currently being investigated.

High performance is a feature of the microkernel virtual memory design. Much of this results from its efficient support of large, sparse address spaces, shared memory, and virtual copy memory optimizations. Finally, the virtual memory system allows clients to provide the backing storage for memory ranges, thereby defining the semantics that apply to such ranges.

Reference is made here to the above cited copending United States Patent Application by Guy G. Sotomayor, Jr., James M. Magee, and Freeman L. Rawson, III, entitled "METHOD AND APPARATUS FOR MANAGEMENT OF MAPPED AND UNMAPPED REGIONS OF MEMORY IN A MICROKERNEL DATA PROCESSING SYSTEM", which is incorporated herein by reference for its more detailed discussion of this topic.

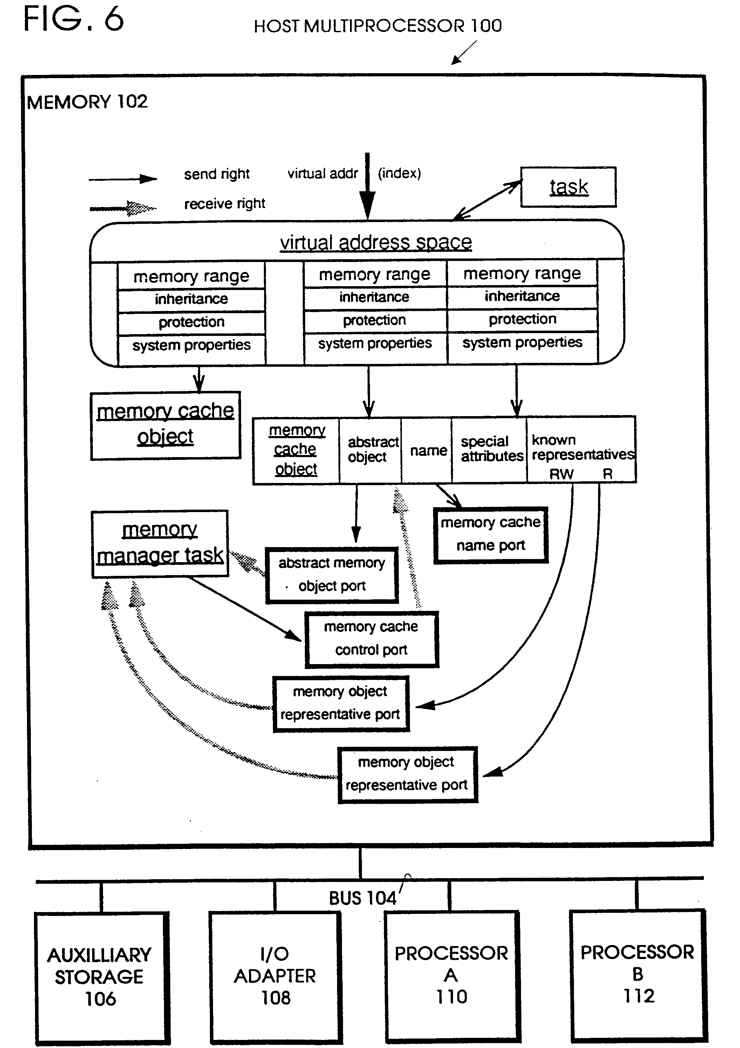

Figure 6. shows the client visible virtual memory structures. There are three memory ranges, two of which have the same backing abstract memory object, but possibly differing inheritance or protection attributes. One of the memory cache/abstract memory object pairs is shown in detail with two memory object representatives, representing read and read/write access, and the memory manager task. A reserved, but un-allocated region is not shown. The region would be marked with only the reservation flag and an inheritance attribute. No other attributes apply.

Reference is made here to the above cited copending United States Patent Application by Guy G. Sotomayor, Jr., James M. Magee, and Freeman L. Rawson, III, entitled "METHOD AND APPARATUS FOR MANAGEMENT OF MAPPED AND UNMAPPED REGIONS OF MEMORY IN A MICROKERNEL DATA PROCESSING SYSTEM", which is incorporated herein by reference for its more detailed discussion of this topic.

### Part B. Detailed Description of the Invention

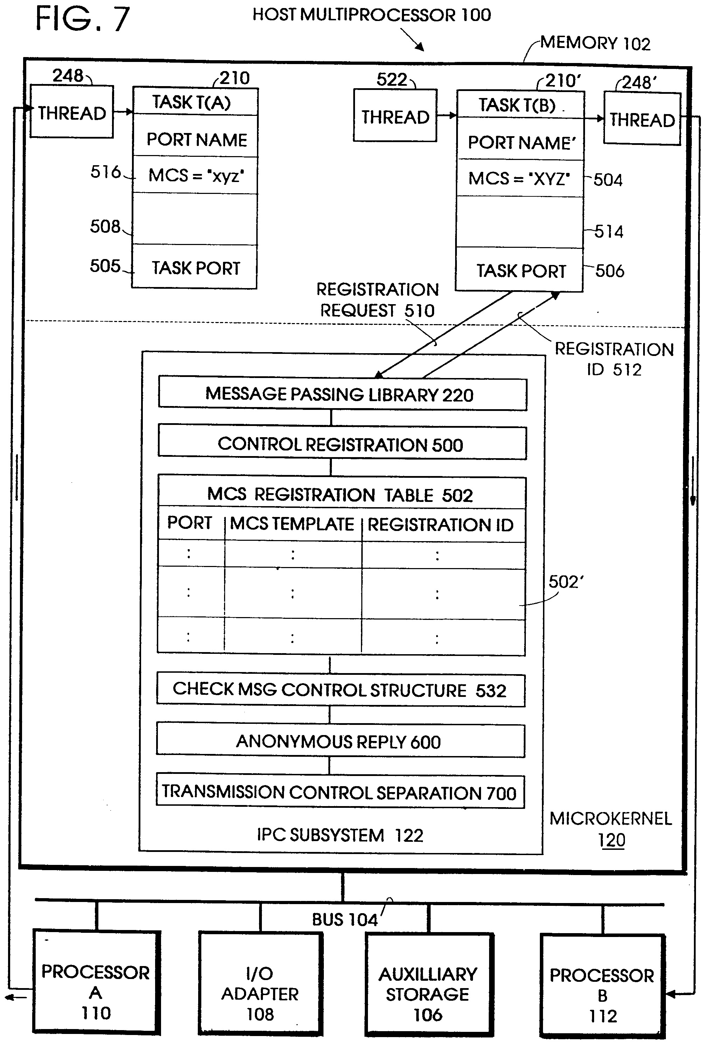

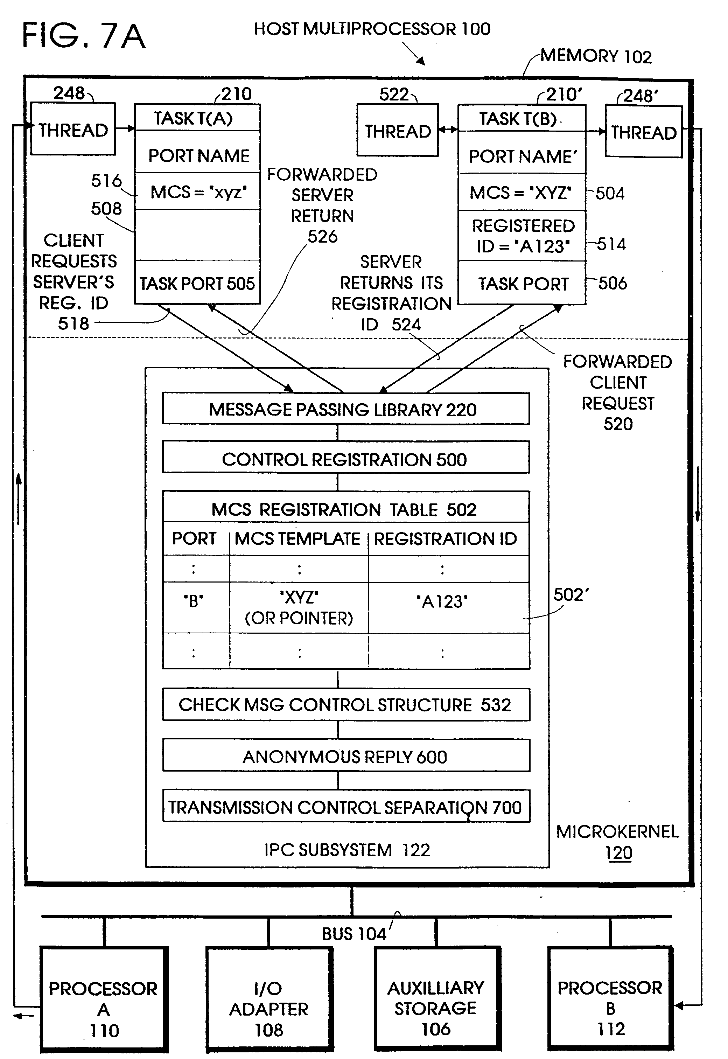

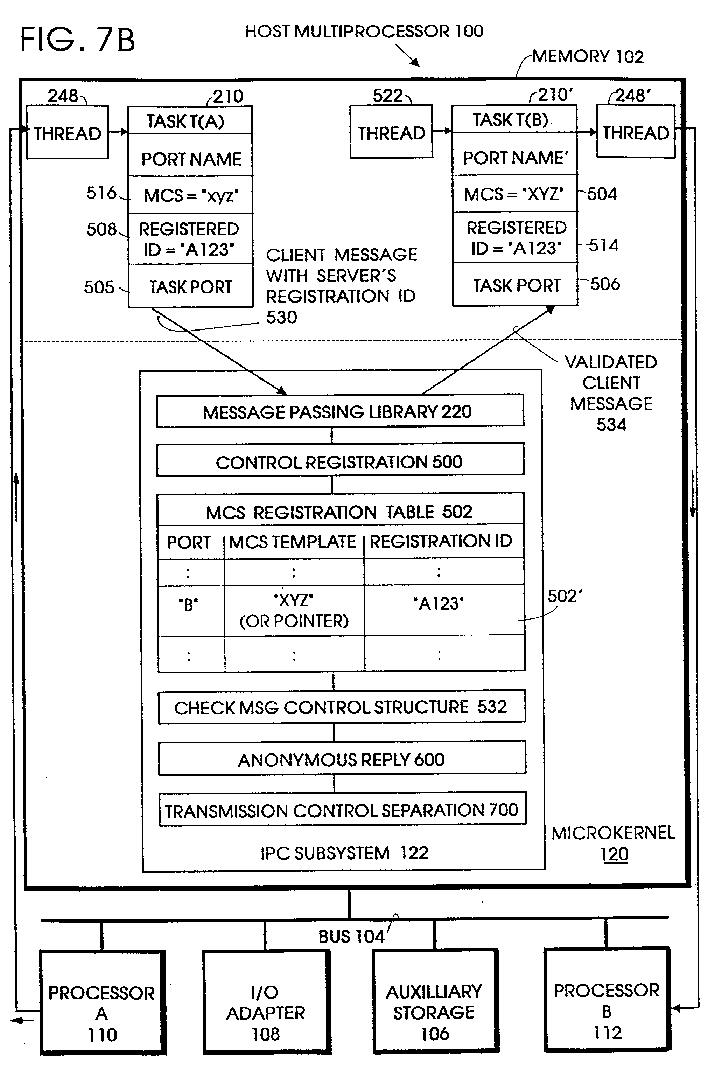

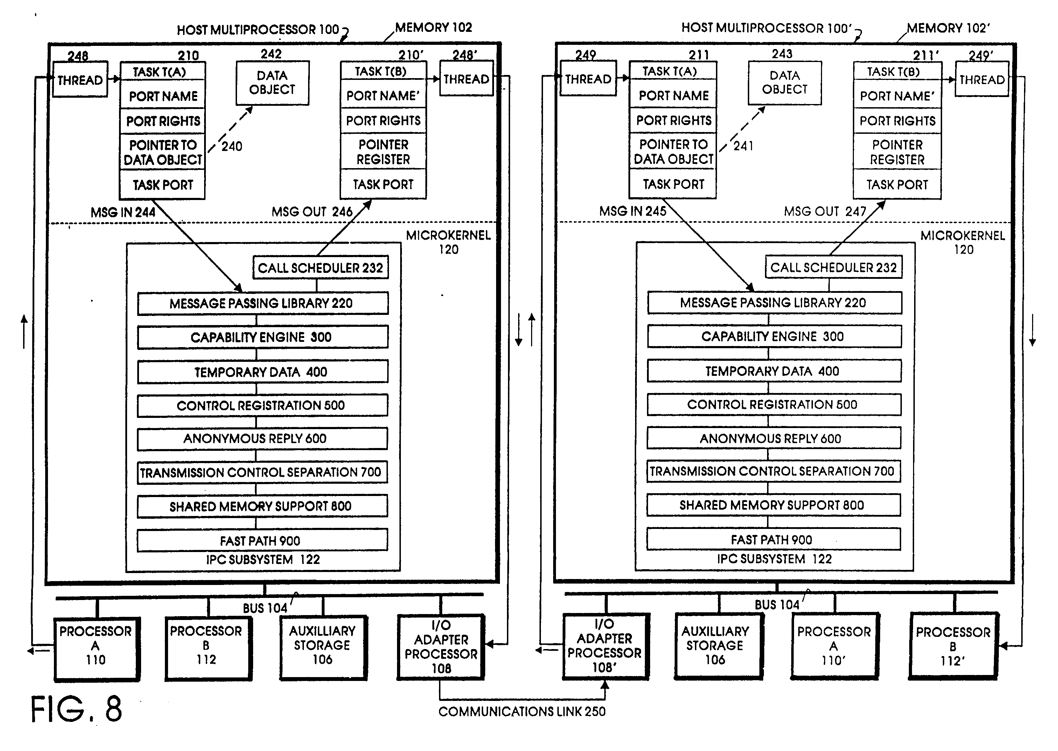

Figure 7 shows a functional block diagram of the host multiprocessor system 100, with the IPC subsystem 122 and the control registration module 500 managing interprocess communications between two tasks 210 and 210' with threads running on two processors 110 and 112. The data processing system can be a shared memory, multiprocessing system as is shown in Figure 7, a distributed processing system as is shown in Figure 8, or a uniprocessor system. The microkernel 120 operating system is loaded into the memory 102 of the data processing system 100. Included in the IPC subsystem 122 of the microkernel 120 is the message passing library 220, the control registration module 500, the message control structure (MCS) registration table 502, and the MCS format checking module 532.

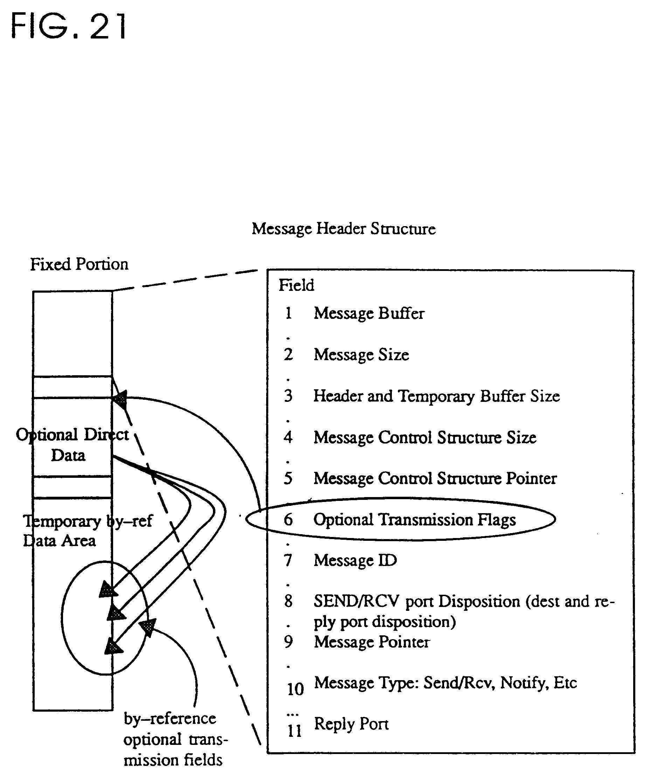

Each of the tasks in the multitude of tasks running concurrently in the microkernel system 115 or in the application programs 180, needs to communicate with the other tasks. Each message sent from one task to another will have a format such as is shown in Fig. 21, for the location of the various fields in control portion and in the body of the message. A fixed format could have been imposed on all messages, but in order to accommodate the large range of possible field categories, a static format would have to be prohibitively large and incapable of expansion to accommodate new types of fields. A variable format for the control portion and the body of messages permits flexibility and change. However, in order to enable the receiving task to decipher the message, the task must be informed of the format. Format descriptions for complex message control structures can occupy a significant portion of the overall message. For repeated communications of messages with the same format between two tasks, the presence of the same format description in each message becomes a significant, superfluous overhead.

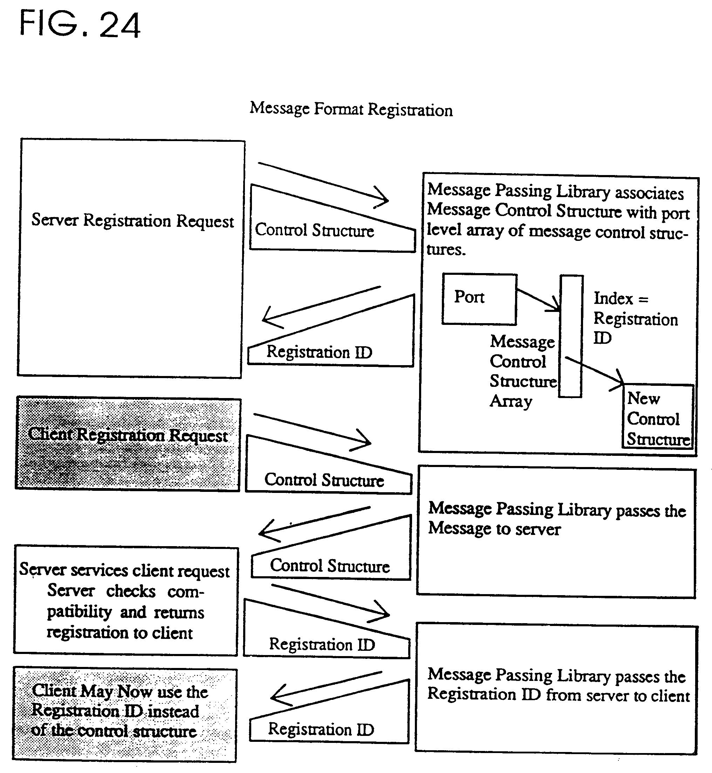

This problem is solved by providing the control registration function 500, shown in Figs. 7, 7A, 7B, and 24 for the message control structures of messages sent from one task to another. Referring to Fig. 7, each task 210' that wishes to receive messages while acting in the role of a server, from other tasks 210 while acting in the role of a client, may register the message control structure that it expects to receive, registering it with the interprocess communications subsystem 122.

The server task 210' of Fig. 7, expects to receive messages having a particular format for the message control structure. To obtain registration of this format, the server task 210' sends a registration request 510 from its task port 506 to the message passing library 220 of the interprocess communication subsystem 122, the request containing the port name of the server task 210' and the message control structure format that is desired to be registered. As an alternative, the server task 210' may send an address pointer to a description of the message control structure format, instead of the description of the format, itself.

In response, the interprocess communications subsystem 122 issues a registration ID number, for example "A123" in Fig. 7A, and stores it with the port name "B" and the format "XYZ" for the message control structure, in an entry 502' in a message control structure table 502. The message control structure format description "XYZ" stored in the table 502, or pointed to by a pointer in the table 502, is a template that the interprocess communications subsystem 122 will use later to validate messages from clients that purport to use the same registration ID. The message control structure registration table 502 can be located inside the microkernel 120 or it can be located elsewhere in the memory 102 address space and can be accessed from the microkernel 120. The interprocess communications subsystem 122 returns at 512 in Fig. 7, the newly issued registration ID number "A123" for the message control structure to the server task 210', where it is stored at 514, as shown in Fig. 7A.

Referring to Fig. 7A, when a client task 210 wishes to send a message to the server task 210', it can avail itself of the convenience of using the control registration feature. To do this, it must request a copy of the server's registration ID for message control structure. The client task 210 sends its own suggested format "xyz", for example at 516 of Fig. 7A, for a message control structure, sending it at 518 in Fig. 7A, to the interprocess communications subsystem 122 for forwarding at 520 of Fig. 7A, to the server task 210'. The server task 210' must decide whether the proffered format "xyz" from the client is compatible with the server's registered format "XYZ" for message control structure. The server task 210' has a thread 522 that performs the check for compatibility, taking into consideration the capacity of the server task 210' to accept minor deviations from its registered format "XYZ" at 504 in Fig. 7A. The server's checking thread 522 can reject the proffered format "xyz" received from the client, resulting in a refusal by the server task 210' to issue a copy of its registration ID "A123" to the requesting client task 210. Alternately, the server's checking task 522 can accept the proffered format "xyz" from the client, even with minor deviations, if such deviations can be accommodated by the server task 210'. In response, the server task 210' returns the registration ID "A123" of its own message control structure format "XYZ" to the interprocess communications subsystem 122 at 524 of Fig. 7A, for forwarding back to the port 505 of the requesting client task 210 at 526 of Fig. 7A. The ID "A123" is stored in the client task 210 at 508 in Fig. 7B.

Referring to Fig. 7B, thereafter, when the client task 210 wishes to send a message to the server task 210', it is no longer necessary to accompany the message with a lengthy format description. The client task 210 and its thread 248 merely formulate the body of the message and include in the header the server task's 210' registration ID "A123" at 508 and enough additional header information to successfully transfer the message at 530 of Fig. 7B, to the interprocess communications subsystem 122 with an indication that the message is intended for the server task 210'. The interprocess communications subsystem 122 checks the message received at 530 from the client task 210 to ensure that the message control structure format "xyz" of the received message sufficiently matches the message control structure template "XYZ" corresponding to the registration ID "A123" contained in the received message. The check performed by the checking module 532 of the interprocess communications subsystem 122 can include a matching of a few predetermined fields in the received message with corresponding fields in the message control structure template. If the checking by the interprocess communications subsystem 122 is successful, then the message is forwarded at 534 of Fig. 7B, on to the port 506 of the server task 210' for processing by its thread 248'.

The client task 210 and/or the server task 210' can be part of an application program 180, an operating system personality program 150, a personality-neutral services program 140, or the microkernel 120, itself. In each of these types of programs, tasks and their threads must be created to carry out the purposes of the program. Those tasks must communicate with other tasks concurrently running in the microkernel system 115. They must communicate with other tasks concurrently running in other application programs 180 in the host multiprocessor 100. They must communicate with still other tasks concurrently running on different host multiprocessor systems 100', as in the distributed processing network shown in Fig. 8. Each communication from one such task to another can avail itself of the efficiencies provided by control registration, in accordance with the invention.

Figure 8 shows a functional block diagram of two host multiprocessor systems running in a distributed processing arrangement, with the IPC subsystem 122 and the control registration module 500 on each host processor managing interprocess communications between tasks with the exchange of messages between the two hosts over a communications link. Host 100 can send messages to host 100' and its the task 211, to be forwarded to the task 211' in host 100' by means of the control registration module 500 in host 100', in the manner described above, for a distributed processing application.

The microkernel also includes the capability engine module 300 that manages capabilities or rights to map regions of the memory 102. The capability engine 300 is included in the IPC subsystem 122, along with several other modules, including the call scheduler 232, the message passing library 220, the temporary data module 400, the control registration module 500, the anonymous reply module 600, the transmission control separation module 700, the shared memory support module 800, and the fast path module 900. All of these modules provide services contributing to the interprocess communications operations of the IPC 122.

Reference can be made to the above cited copending patent applications for a more detailed description of the capability engine 300 and the temporary data module 400. See the copending United States Patent Application by James M. Magee, et al. entitled "CAPABILITY ENGINE METHOD AND APPARATUS FOR A MICROKERNEL DATA PROCESSING SYSTEM". Also see the copending United States Patent Application by James M. Magee, et al. entitled "TEMPORARY DATA METHOD AND APPARATUS FOR A MICROKERNEL DATA PROCESSING SYSTEM".

The invention applies to uniprocessors, shared memory multiprocessors, and multiple computers in a distributed processor system. Figure 8 shows a functional block diagram of two host multiprocessor systems 100 and 100' running in a distributed processing arrangement, with the IPC subsystem 122 and the control registration module 500 on each host processor managing interprocess communications between tasks with the exchange of messages between the two hosts over a communications link 250.

In Figure 8, the thread 248' of the host 100 sends instructions to be executed in the I/O adapter processor 108. The instructions sent by thread 248' for execution can include those necessary for the formulation of a message to be sent from I/O processor 108 to I/O processor 108' of the host 100'. Such a message can include a registration ID for a server task 211 or 211' sent from the client Task(A) 210 to Task (B) 210' with the assistance of the IPC 122, as discussed above. The registration ID information is sent in the message over the communications link 250 to the I/O processor 108'. There, the thread 249 associated with task 211, executes in I/O processor 108' and transfers the information with the registration ID to the task 211. Another IPC transfer, similar to the first one described, can be carried out in the host 100' to transfer the registration ID with the message originated by Task(A) 210 in host 100, to task 211' in host 100'. The thread 249' belonging to task 211' in host 100', executes instructions in the processor 112' of host 100', and can operate on the information in the message it receives from the task 210 in host 100. This is but one example of the role that the control registration module 500 can play in facilitating interprocess communications either within its own memory 102 of residence or alternately with a processor 112' having separate memory 102'.

### Section 1: Subsystem Level Interaction

**The IPC 122 subsystems relationship with VM, Ports, and Tasks And Threads**

### 1.1 The Simple IPC 122:

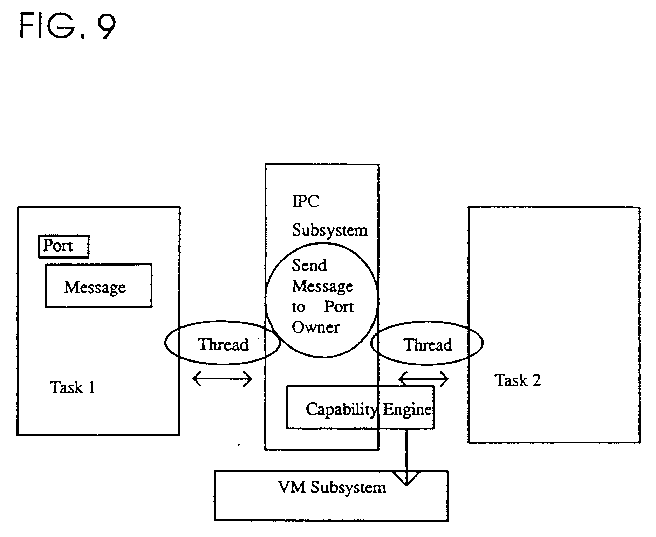

As with all other sub-systems in the microkernel 120, it is necessary to define the interaction/interfaces between IPC 122 and its peers. This helps in that it isolates the activities of IPC 122, easing the job of formal definition. With this kind of formal definition it also becomes possible to replace whole subsystems, providing a powerful tool for system customization. In its simplest form, IPC 122 interacts with port, task, thread, and scheduling objects. It must also work with the zone subsystem for temporary local storage. Fig. 9 is a depiction of the transfer of a simple message and the high level interaction of IPC 122 with other subsystems.

### High Level Outline of Activities

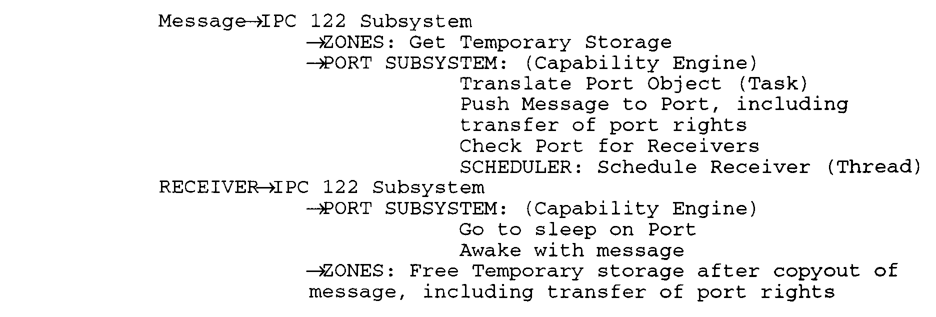

In an effort to preserve the simplicity of the IPC 122 subsystem's interface to its peers, and to provide a primitive service upon which future developers may create richer message passing systems, we have preserved the notion that IPC 122 acts only on direct data and ports as primary data types. The capability engine 300 embodies this primitive IPC 122. All interactions with ports must go through the capability engine 300. The capability engine 300 provides the calls which create capabilities on address ranges, map capabilities to virtual address spaces, queue messages, queue receiver threads, and allow explicit dequeuing of receiver threads and messages. (Though the call to queue goes through the capability engine 300 interface, queuing mechanism and policy does not belong to the capability engine 300). The capability engine 300 can also act as a synchronous or asynchronous stand alone message passing system.

In the asynchronous case, a receiver thread call will return with a message if one is queued. Or: if a receiver has been blocked waiting for a message and a message comes in from a separate thread, the capability engine 300 will unblock the receive thread and return it with the message. The capability engine 300 may act as a primitive SVC or synchronous interface if an svc call is made. In this case, the capability engine 300 checks to see if the receiving task has set up the resources necessary for the exchange, if it has the capability engine 300 changes address space to match the owner of the target port's receive right, associates the receiver resources and returns. If the resources are not available, the sender thread blocks. The execution entity will find itself returning from the call to the same place in the code and with the same activation environment, (in most cases this means mostly the same kernel stack) but operating possibly in a different address space.

The queuing mechanism and scheduling policies are associated with the port object and are not specific to the capability engine 300. The specific scheduling queuing policy the capability engine 300 will call may be altered on a port by port basis via calls to the capability engine 300. There are two separate sets of calls for send and receive on the capability engine 300. With one set, the content of the message field is opaque to the capability engine 300. With the other the capability engine 300 then translates all incoming capabilities contained in the message to rights in the receivers space. The second set allows the capability engine 300 to act as a primitive, asynchronous standalone message passing utility.

### 1.1.1 Capabilities:

From the subsystem perspective the only actual data types dealt with by the IPC 122 subsystem are direct data and port rights. This may seem surprising until we explore the usage of port rights as capabilities. Port rights may be used as a means of passing around the right to map a section of a task's address space, or an extent memory region. Hence, a message passing system could be created which passed small amounts of data directly, but created ports as a means of transferring large amounts of data via the create capability and map capability calls. The ports become tokens or handles to describe a portion of the task's mapped address space. The method though workable suffers from some measure of inefficiency as it would be necessary for a thread in a task to make a capability engine 300 call to return a capability for a specific region of its address space, pass this to the target task and have a thread in the target task map the capability into the target task's virtual address space. Still, because of its simplicity and functionality, in short its fundamental nature, the capability provides a perfect primitive from which to build our message passing architecture.

A capability can be defined as a right to map a memory region. The region to be mapped may be part of another task's address space, in which case the capability is to be a shared memory resource, or it may be to an extent memory region. In the extent memory region case, the capability is the only handle on this memory region. Port rights may be send or send once. In this way, the originator of the shared region can either suppress unauthorized additional sharing of the region or can allow the task to which the share region has been presented to extend share region access to other address spaces through the port primitive copy_send. Share and send_once are options on the create_capability call. Though the send_once option is available on extent memory region as well as share region capabilities, it limits receiver usage without benefit. After a receiver receives and maps a capability, it is free to create a new capability on the same region of memory. The use of send instead of send_once rights is the basis for the multiple share capability and represents an alternative method for establishing binary share.

### 1.2 The Message Passing Library:

Simple message passing as embodied in the capability engine 300 is fully functional, but does not provide the opportunity to take advantage of many performance optimizations available in traditional message passing models. With the proper level of function provided by the capability engine 300, a coresident messaging package can be placed in the supervisor space of a target task. This library would be able to make local calls to the capability engine 300 when necessary. The space in which the IPC 122 package resides is not part of the kernel space mapped into each task, but rather is a region of space mapped through a privileged utility on a task by task basis. A task through its personality and subsequently the personality through the personality neutral services would be allowed to allocate portions of a task's address space as supervisor mode, library repositories. They would also be allowed to download trusted shared libraries into this space which would appear local to the kernel services through the system wide co-residency utility. In this way any number of customized message passing front ends might be available in a single system. The application would call the message passing library 220, not the underlying capability engine 300.

The capability transfer scheme may be powerful but in traditional message passing it is un-necessarily expensive. The IPC 122 library (henceforth referred to as IPC 122) will continue to support the capability as the underlying logical data type but through a new data type avoid when possible the explicit creation and translation of capabilities. The new type which is secondary in that it is strictly internal to IPC 122, will be referred to as the by-reference data type. The by-reference data type is also a secondary data type in the sense that its function can be described as combinations of capability subsystem and capability transfer calls. As an example, let us say task A wishes to send 2 pages of data to task B. Task A may call the capability engine 300 directly to get an explicit capability for the region of its address space corresponding to these two pages, pass this capability to Task B again through a primitive capability call and Task B may do a capability map call, conversely we may send the data using our by-reference data type and a direct data size field. As will be shown later, in many message passing paradigms, no explicit capability will ever be created, the capability subsystem will not be called for the passing of the data associated with Task A's address space and we will enjoy a healthy performance boost.

The by-reference stat type is a pointer to a location in the user's address space and is accompanied by a direct data size variable or an implicit size dictated by the specific interface definition. (In the latter case the size would be transmitted to the kernel via the message control structure.) The treatment of by-reference regions requires IPC 122 to utilize the same sort of capability interfaces or performance driven variants that the receiver would otherwise have to call to map capabilities directly. The variants will arise out of the opportunity to skip the explicit message creation step altogether when the sender and receiver are both synchronized. These variants represent internal optimizations of the IPC 122 library which are transparent at the component level. The conditions under which synchronization is experienced and the opportunities created by it are explored later in the paper but in general synchronization is present in all RPC cases, most send/receive IPC 122 cases, synchronous send IPC 122, and even in the general IPC 122 case whenever the receiver arrives at the message handoff point before the sender does. The juxtaposition of sender and receiver then is common and the opportunity it provides for performance enhancement makes it an important consideration.

In order to make the by-reference data type exchange roughly equivalent to transfer of a capability, it is necessary to preserve the choice of mapping enjoyed by an explicit capability mapping call. This flexibility can have a significant impact on receiver resources as a receiver may look at a capability after receiving a message and may decide not to map it. The new IPC 122 subsystem achieves this by separating the by-reference optimization on the sender's side from that of the receiver. Data sent by-reference may be received as a capability or as a mapped by-reference field. Conversely data sent as a capability may be received as such or as a by-reference field. In order to match capability subsystem mapping functionality it is necessary to allow the receiver to allow "allocate anywhere" and to choose a specific address at which to allocate. The IPC 122 subsystem grants this and more, it also allows the collection of by-reference regions into contiguously allocated areas, (This mimics the sequential map of capabilities into contiguous regions) as well as their individual placement.

The IPC 122 subsystem must of course use capability engine 300 functions to create and manipulate memory object capabilities, but the decomposition of traditional IPC 122 function into combinations of simpler components is a significant step forward in the formalization of subsystem level interaction and architecture. Strict formalization of the proof of FUNCTIONAL equivalence between the simple message passing model and the one including by-reference data types will fall out along the following lines. 1: Transition between by-reference and capability is complete (closed in the range/domain sense) and completely independent with respect to sender and receiver. 2: Capabilities are still provided granting the full range of receive side flexibility. 3: No function exists in the mapping of by-reference data which is not available as a decomposed set of capability calls on a capability.
NOTE: It should be noted that the new message passing paradigm as it is presently defined does not allow for the CONTROLLED placement of data into UNMAPPED portions of the tasks address space, only MAPPED ones. UNMAPPED placement is supported through the simple model via a capability call on the target capability. There is currently no plan to include this option in the by-reference case as it can be mimicked by first mapping the region that is to be the target of the income by-reference data. As was stated above since the passing of capabilities is supported by the message passing facility, it is not necessary from a formal model perspective to mimic every vm_map combination. The cases supported for by-reference data make sense either from a pure performance perspective or in support of a traditional RPC or IPC 122 model.

### Section 2: Buffer and Address Space Resource Distribution by-reference data sub-classes

Now that we have created the by-reference data class, the determination of location and the moment of allocation become issues of extreme importance. In the case of capabilities, the application determines the location of data by knowledge of the specific use of the target parameter in a target call. Such specific knowledge is of course unavailable to the IPC 122 subsystem. In order to communicate buffer disposition knowledge to the IPC 122 subsystem for use on by-reference parameters the subsets of parameter types must be understood and formalized. Separate data classes which are proper subsets of the by-reference data class are determined by specific restraints on location or allocation. Provisions are made with respect to the IPC 122 interface to allow receivers to communicate which of these new data classes a particular by-reference parameter belongs to. These subclasses are determined by the way in which data contained in the by-reference buffers to be used, i.e., stateless servers have no need for data associated with a call after the reply message has been returned. The temporary nature of their data makes it possible to re-use the associated allocated address space, hence the existence of Server Temporary. In another example, receivers which are acting as intermediaries or proxies may not need to access a data region and therefore have no need to map such a region into their space. They may wish to opt for the capability choice. New message passing models may bring to light further fundamental class additions to this group however new entries should be limited to collections which are determined by a specific repeatable treatment of data either by the receiver or the send/receive pair (as in shared memory) which sets apart a group of by-reference examples. This is the basis for all current sub-classes outlined below. Functionality beyond that delivered by capabilities and their explicit mapping should not be introduced into the message passing library 220. For cases where a new message passing paradigm involving performance optimizations based on roll in of additional function is required, a separate new library should be created. This library is free to borrow interface and execution path notions from the message passing library 220, but is not obligated to do so. Such a library would operate on top of the capability engine 300 and as a peer to the IPC 122 library. Message compatibility between the peers would not be assumed and any efforts to maintain compatibility would have to be made by the new library architecture.

### 2.1 Temporary data 400:

In RPC (remote procedure call) transfers, many send/receive pair IPC 122 (Inter Process Communication) calls and some apparently asynchronous IPC 122 calls, the receiver knows ahead of time that some of the by reference data parameters that will be received will only be needed for a short time. A time bounded by some transaction. The transaction may be known to the system (via RPC) or be known only to the application (when it is engaged in async IPC 122 transfers). Through the IPC 122 interface, the receiver makes the IPC 122 subsystem aware of temporary nature of the data by setting a parameter level flag. The implementation of IPC 122 has placed some properties on Temporary data 400, it has been determined that it may start without regard to boundary and that it will be concatenated together with other server temporary parameters in a region of memory provided by the receiver on a per instance basis. The receiver is fully expected to reuse the buffer for subsequent calls, though the exact nature of this re-use is left to the receiver.

### 2.2 Permanent Data:

This is the default class for by-reference data, i.e., it is not shared, temporary, etc. Items falling into this class have no special usage constraints upon which the subsystem can base buffer disposition optimizations. As a result, without specific instructions by the receiver (please see section 3.4.3 for details), data is placed in a way that will make it most convenient for future transferral or long term residence. Further, it is necessary that default behavior be compatible with the earlier CMU based message passing semantics. These semantics included the placement of data into previously unmapped regions of the target address space. Default treatment of permanent data includes 1: starting each buffer on a page boundary. This makes subsequent removal and transferral of regions through unmapping and remapping possible. Sometimes considered a performance win, this method would be awkward if data appeared on non page boundaries and parts of other buffers shared parts of these pages. Further, the mapping and un-mapping of resources would be fraught with artifact and residue. 2: When the data region is not of page modulo, the unused portion of the last page is not used by subsequent parameters. Again this is to facilitate future mapping and unmapping. 3: Permanent data parameters are subject to the overwrite option. This provides compatibility with the earlier CMU message passing system and gives a method for call specific (or more usually server specific in the case of demultiplexing servers) disposition of individual parameters.

### 2.3 Shared Data

The shared data class requires specific setup and initialization by the sender and receiver. During the setup phase, the sender must explicitly make a portion of its mapped address space available to the receiver as a shared region, and the receiver must expressly accept this region as a shared one and direct it to a portion of its own address space. Thus a shared data region cannot enter a space without the explicit knowledge of the application associated with that space and conversely a region of a space cannot become shared with another task without the explicit knowledge of the local threads. Shared data support is a fairly rich package which allows one task to signal another that an arbitrary portion of a physically shared area is now available. (filled with data, cleared of data etc.) What separates the integrated shared memory support 800 of IPC 122 from specific ad hoc use of shared memory space and semaphores is the support of the paradigm in situations where the two parties do not share a common buffer. Application code can be non-local and yet still make use of the shared paradigm. Obviously the system integrator must be aware of the performance implications but if these are found acceptable a non-local client or server is possible. Further, since we have established a formal language for describing the portion of space which has been made available and this is known to the IPC 122 subsystem. Reflective memory techniques using special hardware can be utilized in a fashion which is transparent to the two application level parties.

### 2.4 Server Allocated Resources

As its name implies, this buffer sub-class is specific to RPC. In RPC the entire transaction, send and receive is described in a single message control structure. Buffer regions which will be needed for data which is destined for the client are by default, brought into existence during the request (client message send). This is necessary to provide the expected semantics for an important class of procedure calls (those in which the caller provides buffer space for data it is expecting from the called procedure). For cases in which the buffer is to be provided by the server it is necessary to suppress buffer allocation by the IPC 122 subsystem. To enable the simplest possible co-residency, we will want to suppress IPC 122 level buffer allocation through the use of the server_allocated option. Even if we were willing to accept the server side always expecting a buffer and having the library routine for the local call create this buffer, there is still a performance related reason for suppression. The server may already have a copy of the data the client wishes to see. Full support of the server_allocate option means that the server is allowed to set the client sent parameter to point directly at this data, this is obviously the method of choice in a local interaction. If we always required the server to accept an incoming buffer, the local case would suffer. The intermediate library routine would be forced to allocate a buffer, and the server would have to copy data from its permanent source into this buffer. A similar scenario occurs in the remote case and though it slows down the transaction, it is less performance sensitive.

### 2.5 Sender (Server) Deallocate

The sender deallocate buffer subclass is present in IPC 122 and on the client side of RPC. It is characterized by a wish on the part of the sender to deallocate the memory resource associated with a parameter after the associated data has been communicated to the receiver. The existence of the deallocate option allows the IPC 122 subsystem user to avoid an otherwise unnecessary call to the VM subsystem.

It can be argued that in most cases where the environment is such that the message passing is explicit the best possible performance profile will be base on buffer reuse. Buffer re-use though is not always practical even where message passing is explicit. Data which is mapped into a space, worked upon and then sent on its way is probably well served by IPC 122 sender deallocation.

In RPC, it is necessary to support the case where a caller is expecting the called procedure to deallocate a buffer pointed to by one of the calling parameters. Without the availability of server_dealloc, support of this behavior in the remote case would require explicit buffer deallocation by the client side stub upon return from the send before returning to the application. RPC also supports an analogous option on the server side dubbed server_dealloc. Server_dealloc can be used on buffers associated with data the server is returning to the client, with buffers the server is receiving data on or buffers which serve both functions. In the server send case serv_dealloc behavior is the mirror of send dealloc. In the client send case, the server_dealloc function appears to operate like a server associated with a server_dealloc follows the rules of permanent buffers. This makes it easier to manipulate on subsequent calls within the server. Further, the buffer which is deallocated when the server makes its reply is the one associated with the reply data, not necessarily the one allocated on the request.

### 2.5 Transmission Information:

Along with the normal header fields, the message passing model provides the opportunity to gather extended information about the ongoing transfer through optional parameters. These optional parameters are mostly direct data, but where they are not, they are considered members of the temporary subclass. All direct data and by-reference pointers follow the normal header information. Data within the extended fields is mostly direct communication with the IPC 122 subsystem. Where requests are made of the subsystem, information supplied by the other party in the transaction may influence the information the kernel sends. Examples of this are NDR and STATUS. (NDR is a description of the underlying hardware level data formats, status is the functional status of the endpoint routine. Please see section 3 for more details.) Other fields such as trailer may have whole sections given over to peer to peer communication between the sender and receiver stubs.

The header along with the direct data portion of the optional transmission control information is sent as a by-reference parameter on the IPC 122 call. Upon return from the call, the header et. al. is returned in a contiguous fashion in the same buffer it was sent in. In the case of overrun, the data may appear in an IPC 122 subsystem allocated buffer, if the allocate on overrun option was set. Non-direct data associated with extended transmission control information is sent as server temporary. This means it will show up in the same buffer the header and extended direct control information appears in but may not be contiguous with it.

### 2.6 Memory Capabilities

Memory capabilities must be distinguished from other port rights because the IPC 122 subsystem must be able to map them if the receiver wishes. Also the IPC 122 subsystem must be able to create memory capabilities from by-reference descriptions. IPC 122 must support the case of a client sending data by-reference and a receiver requesting the information be delivered as a capability. Memory capabilities may represent snapshot transferral of data or a memory buffer to be shared between the sender and receiver. Passing of a shared capability to a server does not require the server to make provisions ahead of time. The server will be able to detect the share setting of the capability and will take whatever action it deems fit with respect to mapping it.

### Message Passing Outline, The Major Subcomponents

### 3.1 Outline of Execution Structure:

The capability engine 300 generates primitive SVC and strict asynchronous message passing interfaces. While it would be straightforward to emulate RPC, more complex IPC 122, passive servers, etc. on top of the capability engine 300's primitive message service, there would be a significant penalty to pay in performance. The IPC 122 library rather chooses to use the capability engine 300 opaque message transfer options. Further, in RPC, and two way IPC 122 the message passing library 220 chooses to remove the blocked receiver via the SVC call, removing the need to check for a receiver, dequeing it and then doing a thread handoff. If a receiver is not waiting, the sender is blocked and queued as it would be through the capability blocked sender queue call, no explicit message is created. This is very important in that it allows most by-reference transfer to occur without the creation of an explicit capability. Such a data transfer can occur without any consultation with the capability engine 300. Below are two sets of diagrams one depicting synchronous the other asynchronous message transfer via the message passing library 220 and capability engine 300. When the receive thread is the first to arrive at the message port asynchronous handling behaves as the synchronous case. In the synchronous case, the execution path for the reply is not outlined explicitly. This is because it is an instance of example 2 of the async case. (send with receive waiting)

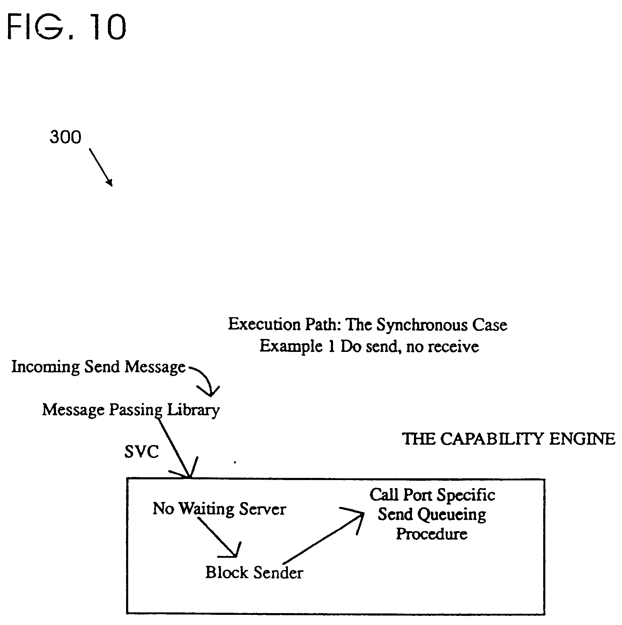

Example 1 in Fig. 10 outlines the path when a message is sent to a port upon which there are no waiting receivers. In the case of an RPC the application calls a library stub (not shown) the stub emulates a local procedure call for its caller. The stub assembles the pieces of a call specific message and traps to the message passing library 220. The message passing library 220 which exists in the supervisor mode, makes a local call to the capability engine 300, an SVC. The capability engine 300 checks a receiver queue through a function call. The function called is determined by a field of the port object which may be set through the capability engine 300. This allows the queuing mechanism to be customized. In our example above, no one is waiting to receive the message, the message passing library 220 sets up a continuation (if desired) and sends it on the svc call. There is also an option on the call to use the continuation only for thread handoff and not on thread block. The capability engine 300 based on these options, blocks the sender with or without continuation. The capability engine 300 again calls a customizable queuing procedure.

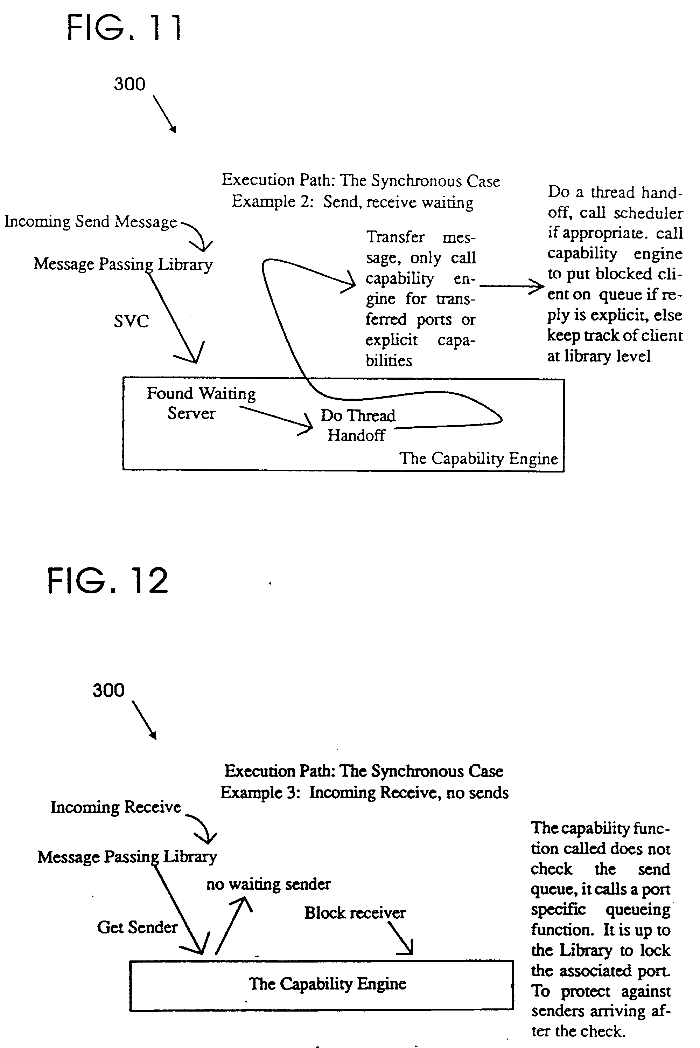

In Example 2 of Fig. 11 we again have an income send message but this time the capability engine 300's check for waiting servers meets with success. The proper server is targeted for thread handoff through the customizable queue call. The capability engine 300 now has both the sender and receiver and can proceed with thread handoff. After returning from thread handoff the message passing library 220 can proceed to transfer the message directly. It should be noted that at no time has the message format or content been exposed to the capability engine 300. This gives the message passing library 220 full flexibility in choosing message format AND content. Future libraries could move any sort of buffer allocation of data transformation schemes deemed useful into this model. The message passing library 220 proceeds to move direct and by-reference data directly between sender and receiver. The only kinds of data which will require calls to the capability engine 300 are port and capability transformations. This includes the direct transfer of capabilities and ports but also the mapping of a capability (the server requests an income capability be mapped) or the unmapping of one. (the server request an incoming by-reference buffer be received as a capability) Scheduling again takes place without the intervention of the capability engine 300. The sender or client is already blocked and does not require another call to the capability engine 300 unless the client is to wait upon an explicit reply port. (If the server is not accepting anonymous reply, not guaranteeing the reply will be returned by the entity now receiving the message.) The scheduler is called if the server is to run with the receiver's scheduling properties.

In example three, of Fig. 12, we see things from the receive side. A receiver arrives, only to find there are no waiting senders. The receiver blocks through the Capability engine 300. The capability engine 300 calls a port object specific queuing function. The library of course decides upon the disposition of the block, i.e., whether or not to block on a continuation. It is the library and custom queue function's responsibility to guarantee against the arrival of a send while the receiver is in the process of blocking, or to check once more for senders after the block has occurred.

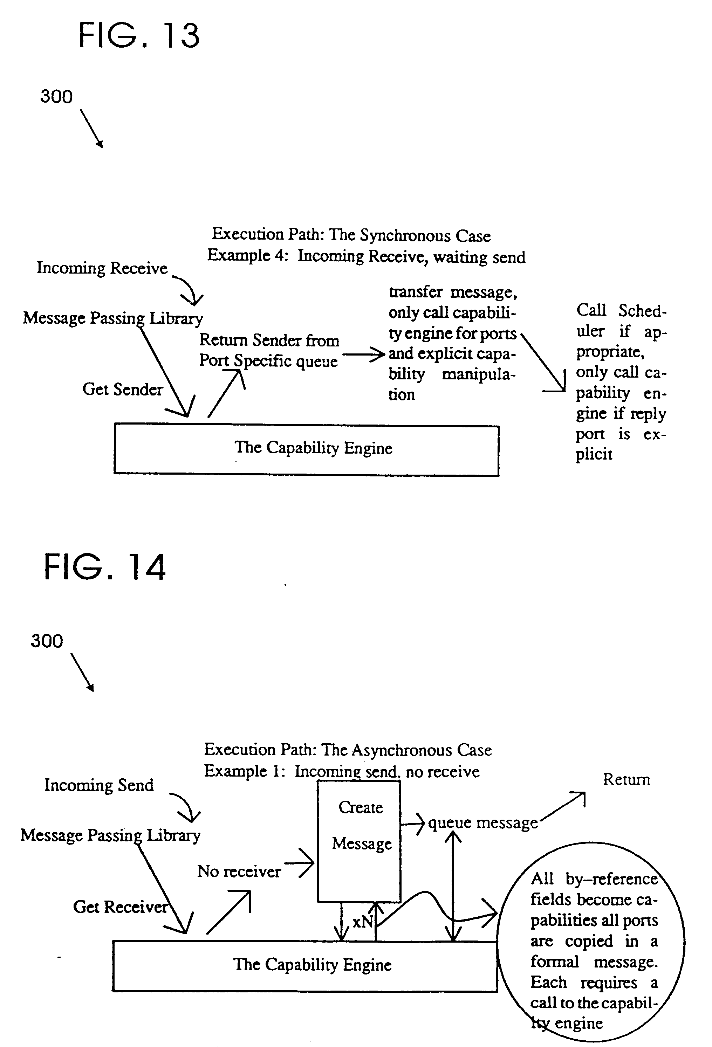

Example 4 of Figure 13 is identical to example 2 except it is from the receiver's vantage point. At user level (nonsupervisor mode) a message is either cobbled together directly (IPC 122 send/receive) or created in a server loop designed to assist the target end point of an RPC. (emulate a local call to the callee in a procedure call transaction) In either case a trap is made to the supervisor level message passing library 220. After making the call to the capability engine 300 to get a sender succeeds, the message passing library 220 finds itself with a sender and a receiver. It proceeds to transfer the message as in example 2 but does not need to execute a thread handoff. The scheduler is called if the thread is meant to run with the client's scheduling properties. The client will block again. As in example 2, the capability engine 300 will only be called if the reply port is explicit.

As with the synchronous case the message passing library 220 begins by checking for a receiver, when one is not found however, the asynchronous nature of the interface in Fig. 14 requires the library to engage in the expensive business of creating a formal message. Direct data is copied without transformation, port rights are generated according to their dispositions and placed in the message, capabilities are created for all by-reference parameters and capability rights are pushed according to their dispositions. All of these activities require the direct support of the capability engine 300. The message is queued through a call to the capability engine 300. The queue function is associated with the port object and is customizable through a call to the capability engine 300. Priority information for the message may be passed in the message and can be recognized by a customized queue function.

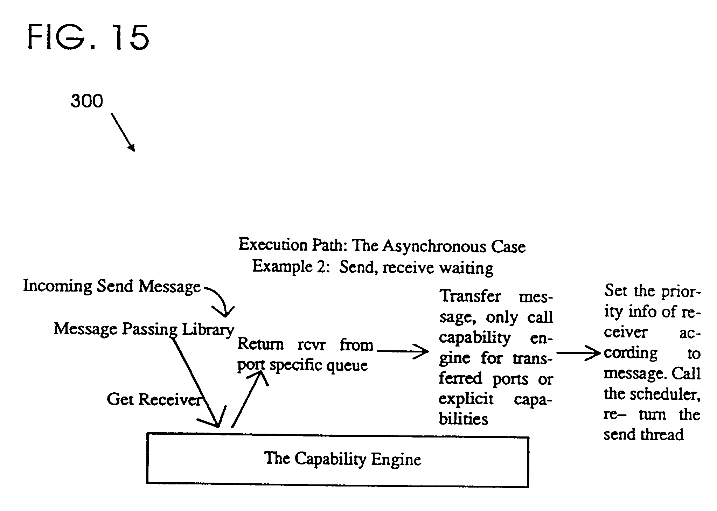

In this case of Fig. 15, the asynchronous model behaves similarly to the synchronous one. Since it is not necessary to create an explicit message, the performance of the combination of examples 2 and 3 of the asynchronous case will be significantly better than that represented by the combination of asynchronous examples 1 and 4. The only difference between the asynchronous and synchronous example 2 cases is the lack of a pending reply in the async case. Without the need to wait on a reply, the sender is free to return.

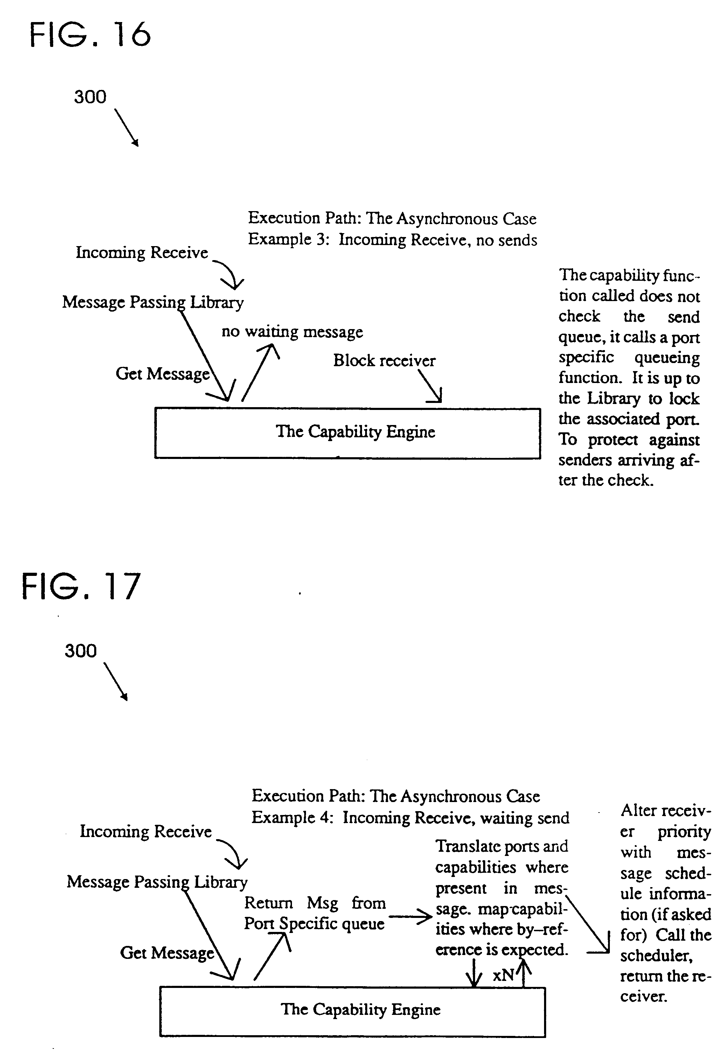

Example 3 of Fig. 16 is identical to example 3 in the synchronous case. Experience of example 3 behavior determines that the sender will experience example 2 behavior upon send. This means that performance conscious users of the asynchronous model should try to have the receiver arrive at the port first whenever possible.

Example 4 of Fig. 17 calls the port specific send queue and recovers the appropriate message based on queue function specific criteria. The message is made up of direct data which can be transferred to receiver without transformation. It may also contain ports and capabilities. The ports and capabilities must be translated via calls to the capability engine 300. Small by-reference fields may be masqueraded by the message passing library 220 to avoid the overhead of capability creation at the time of explicit message creation. The receiver may still choose to receive the field as a capability, but if it is receive as a by-reference buffer, the capability engine 300 will not have to be called.

### 3.2 Message Structure:

The message structure associated with the message passing library 220 contains the functional elements that one would expect in any message passing interface. It of course has provision for the buffer disposition options outlined above as well as the primitive data types. However, the message structure differs from many other systems in that the fields associated with overall transmission control, those residing in the header, do not have to be contiguous with the rest of the message structure. The message structure identifies 4 separable entities. The header points at 2 of these and the message parameters themselves point at the last. The four entities are 1: The Header 2: The message control structure (contains information about the specific parameters associated with a specific call) 3: The message (the direct data, by-reference pointers, ports, and explicit capabilities associated with a call) 4: The by-reference regions.

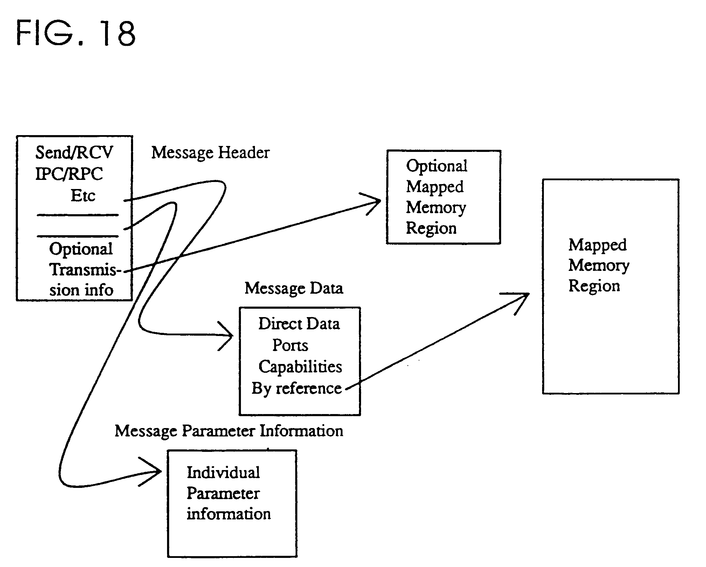

There is no restriction on allowing the regions to be contiguous. It is possible that there is some small performance advantage in having them all in a contiguous form but if they are formed at different times, it is not necessary to recopy them just to make them continuous. Fig. 18 is a diagram outlining message layout.

The message parameter information individually describes each parameter in the message buffer. The description fully defines the parameter data type, size (either directly as a fixed size or indirectly through a pointer to a count parameter.) and disposition of the buffer associated with the data in the case of by-reference.

Throughout the design phase of the message passing library 220 we were mindful of the fact that the performance exhibited by an implementation can be greatly influenced by the layout of associated data structures. This influenced the layout of the bits of the parameter descriptors of the message control structure as well as the separation of control, message, and transmission information at a grosser level. It was further realized that in many of the important modes of use. The information associated with the substructures was generated at different times and in different places. It was only good programming form to reflect this in the overall design of the message structure. Upon further analysis this nod to good form turned out to yield significant performance gain.

### 3.2.1 The Separation of target endpoint message data

In an application environment where the endpoint application is aware of and directly participating in message passing, the separation of message data is of limited use. If the data to be passed is large, the wide variety of by-reference data types is available to avoid excessive byte copy. However, there is a large and interesting set of uses of message passing in which the endpoint application calls a proxy library routine to do the actual message passing trap. These uses include the entire domain of RPC and some interesting IPC 122 cases. If the endpoint application makes a copy of a rather large parameter in the act of a calling a proxy user level message passing library 220 routine, it would be nice to be able to use that copy instead of recopying the data just to make it contiguous with the message header. Again, if the message is small or the system stack conventions are not know to the proxy service the proxy can always fall back to message data copy.

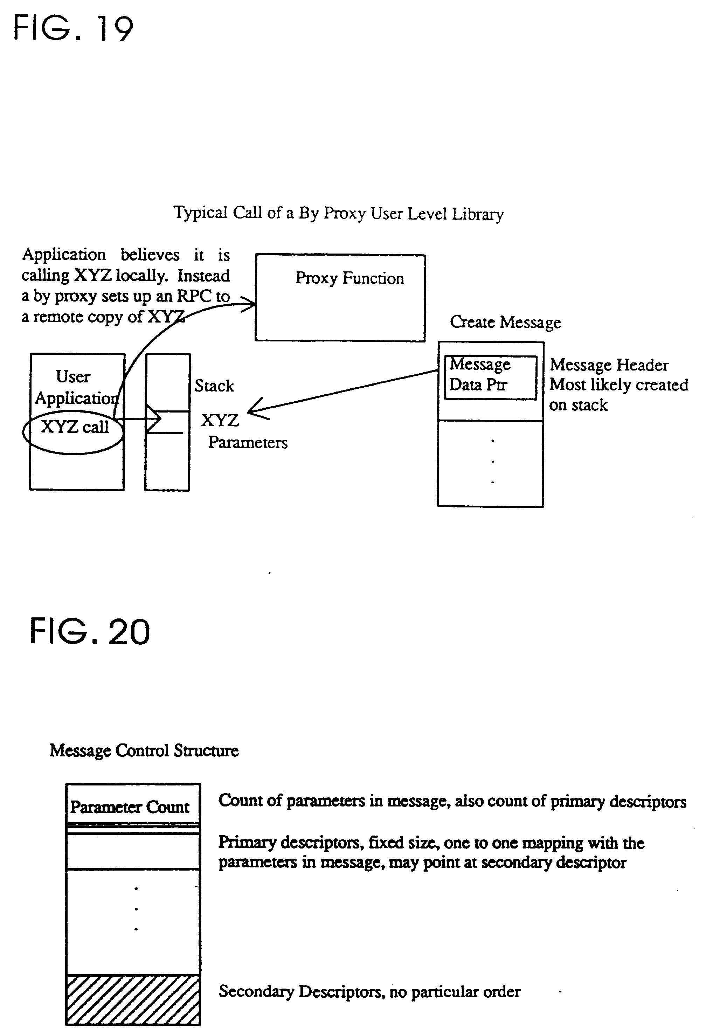

By knowing the address of the parameters sent to the proxy and assuming the parameters are contiguous and in a known order, the proxy may pass the address of the parameter block as the address of the message head as shown in Fig. 19. In support of this, an extra type was added to the by-reference sub-types outlined earlier, the pointer to a by-reference parameter. This is very popular as a means of returning an altered pointer to a data structure in languages such as "C" which view the direct altering of an argument by a called function within the scope of its caller to be a violation of scope rules.

### 3.2.2 The Separation of Static Message Control Information:

Of the pieces of the message which have been isolated into substructures, probably the most important one is the message control structure. Performance gains realized by the separation of the message control information promise to be significant across the whole spectrum of supported message passing. It should be emphasized that the information contained in the message control structure completely defines the transaction from the endpoint's view. (Receive side override which can be viewed as an exception to this will be discussed in section 3.2.4.3) The information pertaining to message invocation contained in the header is a dialogue between the caller of the message service and the message passing library 220. Though information can be passed between the two endpoints via the header and its optional transmission control fields, setting an option on the send side does not require the setting of an option on the receive side and visa versa. Fig. 20 is a high level sketch of the message control structure.

Primary descriptors have a one to one, mapped and onto relationship with the parameters of the message, the first corresponding to the first parameter, the second to the second and so on. Further, the primary descriptors are required to be contiguous. In this way it is possible to find the descriptor corresponding to the 3rd parameter by simple offset from the beginning of the descriptor section of the message control structure. Primary descriptors may not be large enough to carry all the state information necessary for a particular parameter. If this is the case, a field of the primary descriptor points to an offset within the message control structure which corresponds to the start of a secondary descriptor. Secondary descriptors come in different sizes, appear after the primary descriptors and in no particular order.

Full definition of the message format within a compressed and carefully thought out structure is significant from an interface definition perspective. Server's can check the match between the message format they expect and the one the sender has provided with a simple binary comparison check of the message control structure sent by the client. When a match is found, the server will be guaranteed that pointers within the message will be pointers, ports will be ports etc. It does not guarantee semantic meaning to the associated data of course, but it does mean the server is protected against random pointers and random values for port rights. The server is guaranteed of this because the message control structure (and server provided overrides) hold the sole determination criteria for the message parameter format.

What further makes the message control structure special is that it is defined prior to execution! To avoid un-necessary work, the proxy may point the header based message control structure pointer to a fixed copy of the entity in BSS or other storage, thus avoiding the need to create the structure in temporary local storage each time the proxy function is invoked. This prior definition of the message control structure is important for another reason. Conventions can be set up which allow the transfer of messages based on pre-screened message control structures. The sender need only supply a registration label. This will avoid not only the sending of message control information but also the runtime comparison between sender and receiver for non trusted sends.

The separation of the Message Control Structure has been helpful in another way, it has made it easier to leave it off. If a message only carries direct data, there is not need for message passing level translation or intervention of any kind. Such messages have been dubbed "SIMPLE" messages. Simple messages can be either one way or two way, RPC or IPC 122 model. A simple message may still require a message control structure if the server wishes to test it for compatible format. This should be a very limited case however. If the server is expecting a particular message or recognizes a group of message id's, a simple message of the wrong format behaves no differently than one which simply contains garbage data. The only case where a server might need a message control structure is on messages containing variable simple data format not distinguished by message id. Unless the data is self-defining, the receiver would have to look at the message control structure to find the parameter boundaries. In the case of simple messages, the sender is not required to supply a message control structure to the message passing library 220 and the message passing library 220 does not supply one to the receiver. For transfers which the receiver needs the message control structure, the simple option should be turned off.

The message control structure has been set up to define EVERY parameter being sent. This is important for receivers which accept messages which are not pre-defined. Without the definition of every parameter, the server would not be able to parse the incoming message. There have been efforts to improve the performance of message passing by declaring all direct data to be a single field. Experimentation with prototype code on the new message control structure has shown that parsing through direct data fields has almost no performance impact. (The loop to parse direct data consists of checking a bit in the parameter disposition field, and upon realizing that it is direct data, adding a count field value to the offset within the message data structure to point at the next parameter. The bump to the next parameter descriptor and the loop check are the only additional actions.) Even with this evidence there are some who might still argue that the overhead is unnecessary. In the unlikely event that some message might benefit from the coalescing of direct data, such coalescing can be done at the proxy library level. The proxy can re-arrange the message fields, putting all the direct data fields together and labeling them as one field for the transfer. In this way the message passing library 220 can preserve within its model the convenience of identifying all parameters without any compromise of performance, real or perceived.

### 3.2.3 The Separation of Transmission Control Information 700:

The transmission control information subsection of the message structure consists of the header and an optional group of transmission variables. The information contained in this subsection is characterized by two things. First, it is information that is presented directly by the caller of the message passing library 220. Second, whatever its origin or final use, the fields and most often the data are parsed and interpreted by the caller of the message passing library 220 and the library itself. The motivation for the separation of message control information from the rest of the message is the same as that for the separation of message data and static control information. The collection of fields found in the transmission portion of the message is created and manipulated at the same time and by the same routine regardless of the message passing model. (IPC 122, RPC by-proxy) This guarantees that there will not be unnecessary copying. Further, the strictly enforced point of interaction for the transmission section is the message passing library 220. This preserves the very important role of the message control section as the one place to look for the sender/receiver dialogue determining message format, not just message buffer format. A sender can only influence the format of a message delivered to a receiver through the message control structure. The format of the message buffer is completely determined by the message control structure and the overwrite buffer (The overwrite buffer allows the receiver to exercise local override on final disposition of capabilities and by-reference regions. Please see section 3.2.4.3 for details). The format of the header returned from a call to the message passing library 220 is determined by the options chosen in the transmission control section at the time of the call. Hence, a receiver will be returned a message whose header format reflects the receiver's transmission control section requests at the time the receive call was made. The message buffer format on the other hand, will reflect the data sent by the sender and whatever the sender's message control structure dictated expecting where by-reference and capability disposition has been influenced by server use of the overwrite buffer.

If the caller wishes to know or influence some specific aspect of the message transfer, it interacts with the library through the transmission control section. Data can be passed from sender to receiver through the transmission section but this data is interpreted by the message passing library 220. In the case of sender to receiver communication, the interfaces are defined such that there is always a default behavior which is acceptable from a format perspective regardless of the remote party's actions. In this way the remote party's choice of transmission control options has no influence on the format of the local message. This is critical in maintaining the message control structure as the only source for message format determination where a sender may influence the format of a message received. STATUS, Trailer_Request, and Message_Control_Structure request.

A simple example of direct interaction between the message passing library 220 and a receiver can be shown with NDR request. When a message is sent the sender has the option of including an NDR_Supply parameter. This is only done if the primitive data types upon which the message data is based do not match the host machine. If the NDR_Request option is active when the message is delivered, the message passing library 220 will by default pass the NDR information of the host machine. If the sender opted for NDR_Supply then the message passing library 220 will pass the information offered by the sender.

Another important capability of the transmission control system is its ability to pass uninterpreted data between a sender and a receiver. Such data can be passed from proxy to proxy without altering the endpoint message buffer via the trailer. Certain fixed fields are present in the trailer including sequence number and security token, beyond this is an open data field. If the size of the trailer is fixed by prior agreement, and the sender sends data, and the receiver requests it, the trailer may arrive in the direct data optional header area. If the amount of data in the trailer varies from call to call, the receiver may wish to request the by-reference version of trailer_request. (The direct data version of trailer_request includes a count parameter, the count sent by the receiver is the maximum that will be received, more incoming data is truncated. This count variable is changed by the message passing library 220 to reflect the amount of data sent back up to the maximum. To receive any size up to the space provided in the temporary data 400 buffer the receiver must use the by-reference version.) In either case should the sender not provide a trailer, the trailer received will only contain the defined fields requested. If none are requested, the size could be zero. The area beyond the defined trailer fields is passed by the message passing library 220 to the receiver just as it was sent. The method the receiver decides to obtain the trailer information by has no effect on the sender. The sender is free to send the information either directly or by-reference.

When a caller of the message passing library 220 prepares a call, it sets up a header structure. This header structure sits in a buffer which must be large enough to accept, not just returned header information but also direct data associated with the transmission options the caller has requested. This also includes room for any direct data (by-reference objects) requested. This implies that by-reference regions associated with transmission control parameters are considered server temporary. As will be detailed later, when a server in an RPC or the target of a 2 way IPC 122 calls the message passing library 220, the header sits in a buffer which must not only be prepared to accept all of the transmission control information as outlined above, but also the server temporary data 400. The format of the returned buffer is, header at the top followed by direct optional control information, followed by server temporary fields, including those associated with the transmission control information.

Figure 21 is a diagram outlining the transmission control structure. The fixed portion of the header determines the kind of message passing, i.e., Send, Receive, Send/Receive, RPC, IPC 122, the kind of reply port in 2-way messages. The optional portion of the header is determined by the optional transmission flags field. Each of the optional fields corresponds to a bit. When present these fields must appear in sequence. For optional transmission fields which are by-reference. A sub-field of the optional field entry for that parameter will be used to point into the temporary buffer address area. Another sub-field will describe the size of the indirect buffer in bytes.

### 3.2.4 The Relationship Between Sender and Receiver Control Information:

All message passing systems must deal with the problem of coordinating sender and receiver message format and identification. Some punt, assuming that the question of message format is settled by the sender and receiver outside of the message passing paradigm. Others pass partially or fully defined messages that the receiver must parse to determine what it is and whether or not it should be accepted. Both points of view have their advantages. In an embedded system sending fully trusted messages, it is hardly necessary to burden the processor with generic message parsing. On the other hand, in the general message passing operating system, there is a real need for non-trusted communication between senders and receivers where the receiver must verify message format. General message passing also makes use of generic receive servers which parse a message to determine its format. With the separation of message control information, the message passing library 220 can efficiently support both paradigms.

Except in the case of simple messages, the sender must provide a message control structure when a send message call is made to the message passing library 220. This convention is absolutely necessary in the case of asynchronous messages where server input simply may not be available. Although not absolutely necessary in the synchronous cases it does provide a discipline. By requiring the supply of a message control structure from the sender, the receiver always has the option of checking the incoming message format. Further, the number of nonsense messages delivered from non-trusted clients is likely to be lower. If the client sent a message and relied on a server message control structure to parse it, some percentage of the time an incorrect message would get through based on the ability to incorrectly but undetectably interpret the client message parameters. A non-trusted client would then be sending garbage data to a server. If the client is required to send a message control structure, the server checks the non-trusted client message control structure, avoiding the receipt of garbage data. (The client can always deliberately send garbage data, of course.) Having the sender supply a message control structure also reduces the possibility of unintentional damage to the client. If the client were to send a message to the wrong port in the server message control information paradigm and that message were to unintentionally succeed the client might lose large tracks of data to unmapping and overwrite, i.e., a client may send a message to a server, expecting that there are two direct parameters. The server believes the first parameter is a by-reference and that further, the associated buffer is to be removed after the client send. Now if the data in the client send just happens to look like a valid address, the client will unintentionally unmap a portion of its address space.

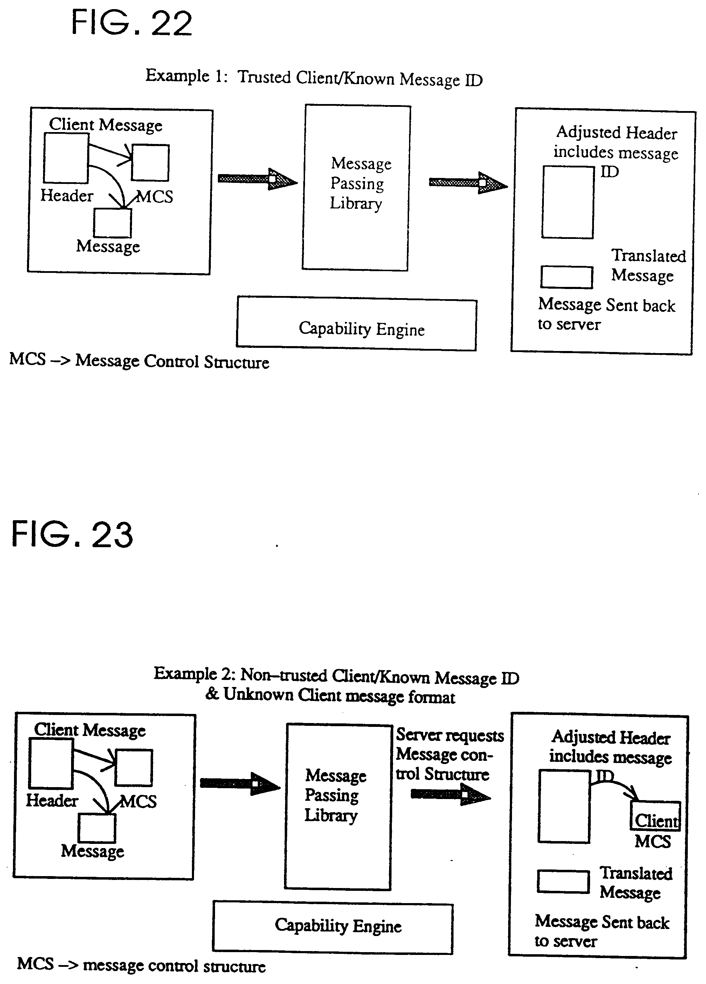

Fig. 22 shows 2 examples of message control structure usage with out accepted convention, client supplied message control information.

The message passing library 220 consults the sender supplied message control structure to translate all non-direct data parameters. The server, however, is expecting messages of only one format, or in the case of a demultiplexing server, messages whose format is determined by the message id. The server, therefore, does not request the message control structure and acts on its assumptions. Such a server could be damaged by a client either intentionally or unintentionally sending a message of the wrong format.

With the receipt of the Client's message control structure the server is now free to check the format of the incoming message against expectations. If the server is demultiplexing, the message id is checked first to determine which amongst a set of message control structures this particular incoming entity should match. If the format is unknown, the message control structure is consulted in order to parse the message data as shown in Fig. 23. This last scenario is most likely when the server is acting as an intermediary for another server. The use of the message passing interface to implement a communications server can make a good example of the power of the message passing library 220. For two communicating nodes the integrated shared memory data types can be used. If the nodes share common memory (or hardware supported mirrored memory) the transfer can take place without overt memory copy. If not, the transfer of data occurs automatically without adjustment to the communication code.

### 3.4.1 A Fully Defined Send-Receive Compatibility Check

Even if a server and client have fixed on a message format, or in the demultiplexed server case, a series of message id pared formats. The server may not trust the client to do the right thing and send the appropriate message. Actually verifying the message format has historically been a dodgy affair. Changes to interface or missed subtleties often left holes in the check. Further, the more complete the check the more costly. The architecture of the message passing message all but eradicates these difficulties. All the information required to describe the data types found in a message buffer can be found in a message control structure. Further, the portion of a message control structure associated with the definition of incoming parameters contains no other information. This makes it possible to do binary comparisons of server stored message control templates with the incoming client message control structure. The distillation of message buffer information is such that the average parameter is fully described in 8 bytes. Thus the layout of the message buffer for a 4 parameter interface might be checked by a byte to byte comparison of 32 bytes! The fact that other portions of the interface, like those associated with transmission control protocol are described elsewhere means that there will not be an unnecessary restriction on transmission options in a byte compare protocol check.

The RPC system should be noted here because the message control structure describes buffers and buffer disposition for both the request and reply. It is very reasonable that a server would want to support clients that chose different local buffer disposition options. As an example let us consider 2 clients which both want to interact with a common server. They both want to send a by-reference field to the server. One wants the buffer removed after the send, the other wishes to retain it. It would be awkward if the server were to reject one of these two clients just because neither of them was trusted. The bits of the parameter disposition have been set so that this case can be handled. There is a field of bits associated with client buffer disposition. (Bits 23-18 of the flags word, please see Appendix A for a full description of the Message Control Structure.) By applying a mask to these bits in the template and the client derived message control structure before the binary check, the server can service both clients in non-trusted mode.

The example above brings out one other important point. The check of send/receive compatibility is not only optional, it is user level. Though the user level libmk library support will include the binary byte by byte check and the client option mask override for RPC message control structures as callable macros, the server is free to fashion any sort of partial check it sees fit. For example, allowing clients which send a buffer as temporary as well as those which send it as permanent with the dealloc flag set. (See sections 2.1 and 2.4 for a description of the data types.)

### 3.2.4.2 Control Information Registration 500:

The distillation of message control information and the existence of simple messages which do not require control structures, the flexibility of the send side check and the option to leave it out, all have significant functional and performance implications. However, there is one more opportunity for performance optimization which gives non-trusted clients almost equal performance to the non-checking trusted case. Further, it speeds up both trusted and non-trusted by avoiding copying the message control structure into message passing library 220 space on a call by call basis, even on complex messages. The method involves message control structure registration 500.

A server wishing to participate in registration, makes a registration call for the message control structures associated with the server's set of interfaces. The registration call parameters are the message control structure, the associated port, and a placeholder for the returned registration id. The message control structure becomes registered with the port for the duration of the life of that port. In this way senders who acquire that registration id will be guaranteed that it is valid for the life of the port. A client wishing to send messages via the registration service, contacts the server with a simple call, sending the message control structure; possibly containing a message id, and asking for the associated registration number. The server is free to run what checks it likes, but in practice absolute compatibility is required. Should the server detect for instance a difference in client local buffer disposition and pass back the registration id anyway, the client would be damaged upon the use of that registration id. The server may fail a registration request which does not match exactly or register an additional message control structure for that particular message id. The server would then be responsible for checking both registration numbers for that particular message id, the server template registration number and the client registered on. The server should also keep a copy of the client message control structure on hand to check against future registration requests. If a client is refused a registration number, it is still free to attempt non-registered transfer.

The registration of message control structures for servers which persist over long periods is certainly indicated for both trusted and non-trusted client-server pairs. It will be most significant in the non-trusted case, however, since it removes the need to copy the message control structure to the server and do the call by call check for format compatibility. A registered server will work with both registered and non registered senders. Therefore, if a sender is only going to interact with a receiver once or twice it may not be deemed worthwhile to do an extra call to retrieve the message control structure registration id.

Fig. 24 shows a diagrammatic depiction of a message registration and use by a sender. When the client attempts a send with the newly acquired registration number, the message passing library 220 checks a port associated queue for the proper message control structure. The message control structure is local to the message passing library 220 and thus a copying of the control structure is avoided. Further, on RPC's, it is necessary to keep the message control structure handy while the client is awaiting replay, one control structure is kept for each ongoing transfer. In the registration case, only a registration number need be stored. The message passing library 220 is set up such that the client must request the registration information of the server for two important reasons. First, it reduces the code which must be maintained in the message passing library 220. Second, the server maintains full flexibility in determining who matches registered message formats and who does not. Use of the overwrite option and reply overwrite can make a wide variety of incoming message formats compatible. It is up to the individual server to sort through this and support the set of formats it sees fit.

### 3.2.4.3 The Overwrite Buffer

Receivers who wish to influence the placement of permanent data and receipt of capabilities in their space upon the acquisition of a message must supply an overwrite buffer. The types of data influenced by an overwrite buffer are 1: Permanent data (note: the permanent, by-reference choices also include the server dealloc cases.) and 2: capabilities. It is possible via the overwrite buffer to request that a capability be written into a mapped area of memory. Or have an incoming permanent by-reference buffer transformed into a capability.

Overwrite Buffers are supplied via an option in the transmission control structure. As such of course, they only affect the local caller. Overwrite has additional functionality. The overwrite buffer considers capabilities and by-reference permanent regions to be enumerated or indexed as encountered. As the incoming message is scanned, the first encountered capability or permanent by-reference region is influenced by the first descriptor in the receive overwrite buffer, the second encountered, by the second descriptor and so on. Intervening parameters of other types have no effect. The only exception to this is when the receiver chooses the gather option. In this case data from multiply by-reference regions or that associated with capabilities is concatenated together and written into memory starting at the location specified by the overwrite descriptor. Any number of descriptors may be concatenated in this way and there is an option to make the number strict or "upto". In the strict case, exactly the stated number of regions must be found to fill the gather descriptor area or an error is returned. In the "upto" case, if the number of regions specified in the descriptor is larger than the available number of regions in the incoming message, the message proceeds anyway. Descriptors in the overwrite region which account for regions than are found in the message are ignored. Likewise, if the overwrite descriptors account for fewer permanent by-reference and capability parameters than occur in the message. The parameters beyond those enumerated by the overwrite structure behave as if the overwrite option had not been exercised.

Use of gather often necessitates the request of send message control information by the server so that the actual size and number of permanent regions and capabilities will be know. The control structure must also be consulted to find the direct count fields associated with dynamic by-reference regions.

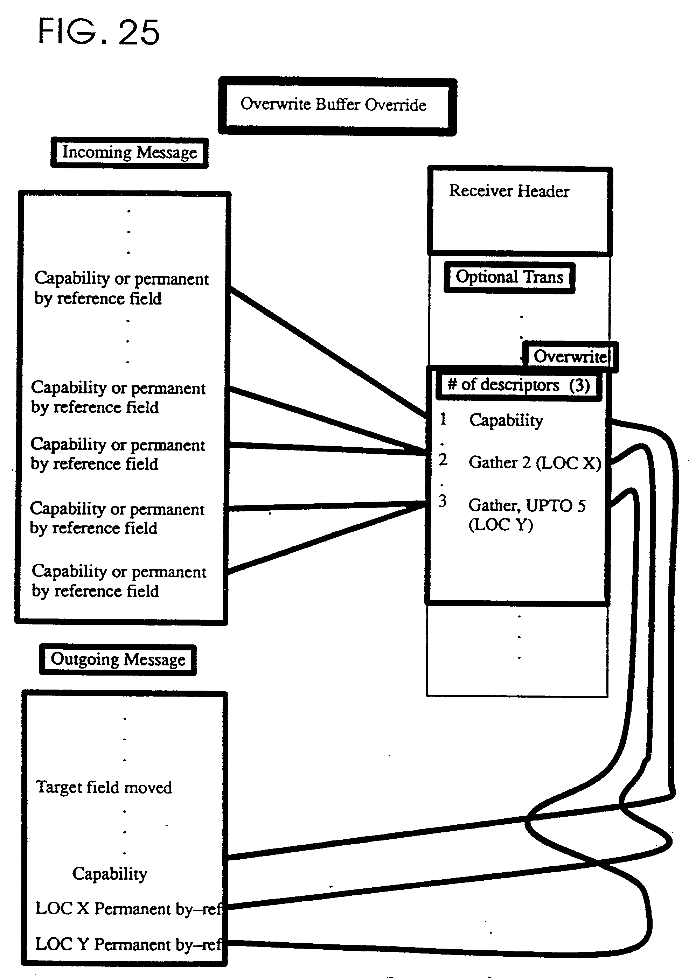

In the case of RPC it is necessary for the server to construct a message buffer for the reply which in the format the client is expecting. In two way IPC 122 of course this is always true as there is no protocol link between the format of the send and the receive. Fig. 25 is an example of overwrite use.

### 3.2.4.3 Reply Overwrite Control Information:

When a server redirects the placement of data on a by-reference region using the overwrite option, care must be taken to ensure the post, or reply processing is appropriate. An RPC style interface might well have been set up to deallocate a by-reference region using the server-dealloc option. If the server has re-directed by-reference data to a region that it wishes to persist past reply delivery, it must pass back an altered message control structure. Upon detection of the server side reply side control structure, the message passing library 220 scans it for server side buffer disposition overrides. The message the client is expecting back in the case of RPC is of course in the client format. It is up to the server to put together the appropriate message buffer. It might have been possible to send null buffers back on fields upon which the server-dealloc option was set for buffers which were only passing information to the server. This however, was an insufficient answer for the buffers being used to send data both ways or just to the client.

### Section 4: Message Passing Models

The capability engine 300 is defined to create a simple and general message passing service. It has done so by formalizing all transfers as either direct data or capabilities. In a port based message passing system such as MACH, such ports can be used to pass access to any transformation. The message passing library 220 carries with it the function of the capability engine 300 but it has sought to raise the performance level by taking the mapping transformations which must be done explicitly in the capability engine 300 paradigm and creating a language to express there transfer without creating formal capabilities. If the two endpoints of a transfer both use the message passing library 220 then a mapped area of a sender's space can be described in a message and the place to write it in or map it in can be described for the receiver.

Asynchronous messages still require the creation of capabilities because the data sent must be captured before the sender returns and the receiver is either not yet known or not yet ready to receive the data. Synchronous interfaces on the other hand need never create intermediate capabilities for the by-reference data types, because the sender must pause for a pending reply anyway, the point of synchronization for the client is not the return from the send but the return from the reply. This allows the message passing library 220 to pause the client before message creation and to proceed only when a receiver is available and the transfer can proceed from task space to task space without an intermediate message. It is clear then that the message passing library 220 must also formalize the type of transfer (asynchronous vs synchronous).

It can be further recognized that there are really two kinds of synchronous transfer, one in which the semantic meaning of the reply is directly tied to the send and one in which the two are disjoint. The message passing library 220 was designed to support a wide variety of message passing models. Its base function for data transferal is the same as that for the capability engine 300. But it also includes tools to facilitate non-layered support of popular forms of Remote Procedure Call and Interprocess Communication.

### 4.1 Remote Procedure Call

Remote Procedure Call or RPC can really be distinguished from the message passing library 220 function, larger cloth from which it is cut, by a series of restrictions. Some of these are listed below.
1: A send does not return from the call to the message passing library 220 until the message has been delivered to its target.
2: The data in the send and receive portion of an RPC is semantically linked to the extent that a message of the same format is sent and received.
   a) the incoming and outgoing message share the same format
3: The RPC system must be capable of acting as a proxy. It must be able to simulate the call of a local procedure by acting in place of that procedure. It must transfer the associated data to the task space where the remote procedure lies, await the remote procedures processing, return the results to the callers space and finally make all the incidental changes like buffer removal or creation for the class of procedure calls supported.

The third point may not seem like a restriction, indeed the proxy notion accounts for the separation of transmission information as a substructure of the message. In a sense though it is. In the proxy case, the parameters in a message buffer are exactly those sent by the initial caller. In many languages this creates some restrictions. In C for instance, all the direct variables are of fixed length and data cannot be passed back in a direct variable. This allows the RPC subsystem to make performance enhancements. Opportunities for performance enhancement based on specific use is in fact the reason for formalizing the support of RPC, the restrictions which distinguish it allow for additional optimizations.

Restriction 2 is actually a guarantee by the message passing system that a client initiating a call will not succeed in starting that call and activating the associated server in a non-restartable way only to find out that a loosely paired reply does not match the client's expectations. The semantic link between request and reply has implications for the message control structure and the registration service. Because the request message and the reply message must have the same format, it is most natural to have the message control structure contain information for both the send and receive, coalescing the control information rather than sending two structures. Coalesced or not, the fact that client must declare the entire operation upon the initiation of the RPC has an impact on message checking. A server utilizing the overwrite option may accept a wider range of incoming client messages and may have to adjust its message control structure check because the clients send different remote buffer disposition information. Restriction 2 also accounts for some additional options in registration. The need to accept and register possibly more than one message control structure format grows out of the asymmetric nature of the client/server relationship. The server registers the client's message control structure. If there are two clients which send exactly the same format message but wish to receive the reply data differently, the server must register two message control structures to support them both.

The implications of restriction 1 have been considered in detail in section 3. The adoption of synchronous message passing not only leads to lower CPU overhead in data and resource transfer, it also decreases kernel level resource utilization and makes it more predictable.

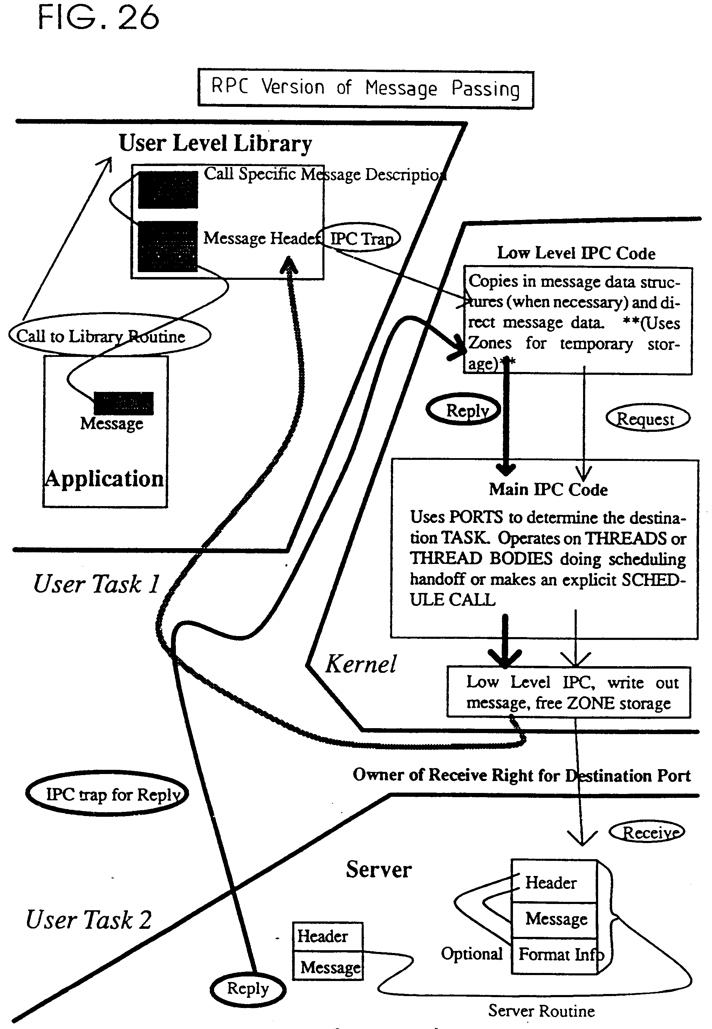

Fig. 26 is a diagram of the RPC transfer. The message control structure is kept in the message passing library 220 while the server is active in anticipation of the reply. If the message was complex but was accompanied by a large amount of direct data, the server can avoid sending this data back on the reply by sending an override message control structure with zero size direct data fields. The message passing library 220 will use the override message control structure to find the by-reference, capability, and other port fields in the message buffer sent from the server and will fill in client buffers, or update the client's double indirect pointers as appropriate. The client message buffer is, of course, not written back to the client.

### 4.1.1 Scheduling Alternatives and Threading Models:

There are two major models of RPC support with respect to scheduling. The active and passive server models. In the active case the scheduling information associated with the client's request is that of the server thread. In the passive, it is that of the client. In the active model, the server can be observed to directly commit a thread to the receipt of a message on the target port. The client then sends a message to this port and blocks waiting for the reply. The server thread returns to non-supervisor mode with the message and proceeds to process it, returning with a reply when processing is complete. In the passive model, the server as owner of a port, prepares a thread body, (it prepares state and a set of resources for an incoming kernel level thread). The client does not so much send a message as enter the target server's space with the kind of restrictions associated with a traditional kernel level service call, i.e., start execution at a target mandated point, process incoming parameters along previously defined lines.

In the case of RPC the assurance that the client will block while the server is working on its behalf is very helpful in supporting elements of the passive model without having to expose an actual passive or thread migrating model to the user level. First, all kernel level temporary resources associated with a client thread at kernel level may be borrowed by the server. The thread stack and other temporary zone space are good examples. The client prepares a message for transfer, the server is then allowed to borrow the buffers which hold the results of that preparation. In this way, there is no distinguishable performance difference between the two models. Indeed, whether or not a transfer is recognizable as thread migration has more to do with the naming of kernel level resources than with the actual implementation at kernel level. As an example, in a recent paper, calls to threads were transformed to associate thread level markers such as the thread port with the thread body instead of the thread proper. In this way, the portion of the thread associated with migration, the thread shuttle will become effectively anonymous. The effect could have been achieved another way. Staying within the paradigm of active threads one can enumerate the characteristics of thread migration as separate options. The most important is, of course, scheduling. If the server thread in the active case inherits the client's scheduling characteristics, and the kernel elements of the thread are anonymous, there is near performance and functional equivalence between the passive and active models.

In the active model an actual runnable thread is created on the server side. This may or may not be used for other activities, in either case it is eventually put to sleep awaiting a receive. If the port is a passive RPC port, kernel level resource, even the schedulable entity may be discarded. (A port level scheduling information template for lost state would have to be made available for aborts.) When a client arrives at the port with a message, the client loans its kernel temporary resources and its schedulable entity, effectively its shuttle to the server thread, now effectively a thread body. The client entity, now effectively a thread body is blocked or put to sleep on the reply port.

There are some advantages in exposing a passive thread model to the user level. Certainly, easier thread body resource management is one of them. If an active model user wishes to move the "thread_body" from one waiting port to another, it must exercise an abort. Exposing the actual resource queues for thread bodies to the application level would allow the user to move resources with simple pointer manipulation. Further, creation and destruction of thread bodies is less expensive in the exposed case. This might give a small advantage to the extremely dynamic server case. Depending on the exact nature of the interface it is also possible in the exposed case to allow for resource pooling between receive ports. Letting separate ports draw upon common thread body resources. The method would be somewhat more flexible than port_sets in that thread resource could be subsetted but most of the equivalent pooling capability could be supported through port sets. It is thus possible to support the functionality and performance of the passive model (when that model uses anonymous kernel resources) with an active interface. The world of asynchronous messages, will be somewhat more difficult. It is all but impossible to maintain equivalence between the active and passive models when it comes to one-way sends.

User level models demanding the availability of state information on the depth of calls and path of migrating threads would, of course, force the exposure of a migrating thread model. Shuttles would no longer be anonymous and would carry with them information regarding the recursive depth and path of ongoing calls. Only such a direct requirement for message passing library 220 supported state is expected to force the need for migrating thread exposure however. Even reasonable abort semantics appear to be supportable without such direct exposure. See section 4.1.9

### 4.1.2 Client/Server Juxtaposition:

Client/Server juxtaposition is characterized by the synchronization of the client send and server receive. In the case of RPC, if the server arrives at the receive port before there are any messages to receive, it blocks. If the client arrives before the receiver it blocks until the receiver arrives. This in effect guarantees simultaneous access to both the client and server space for the purpose of message transferral. Though client/server juxtaposition can be achieved in some circumstances in asynchronous communications it cannot always be guaranteed as it is in the case of RPC. If an asynchronous send is attempted on a port upon which there is not a waiting receiver, the message passing library 220 must produce a message and allow the sender to continue.

In synchronous transactions the ability to guarantee that a sender cannot continue until the receiver has obtained the data snapshot means that actual messages need never be created. This minimizes expensive capability translations, message creation, message parsing and free operations. When a message is created, all by-reference types essentially revert to capabilities. The memory regions associated with the by-reference area must be copied (in one form or another, copy on write, copy maps and such are beyond the scope of this paper) and pointed to out of the message. This effectively creates a capability. The capability is anonymous which saves the target space mapping costs but it is still quite expensive.

Even in the case where an explicit message must be created, by-reference types are superior in performance to capabilities because they still allow the receiver to map or write incoming data without doing a specific call. Further, some small by-reference fields might avoid capability translation by temporary conversion to direct data. This seems especially likely for the server_temporary examples.

Assuring client/server synchronization also reduces the need for kernel level resources and leaves the remaining resource needs more predictable. In an asynchronous world, system lockup through resource over-utilization can occur when too many messages are left waiting in queues. An example can be easily constructed. Thread A sends a message to thread B. B, however, is busy processing an earlier request (possibly from A). To process this request, B must post messages to several other tasks. Each of these messages requires a large amount of space. Each of the subsequent tasks must, in turn, post a message. The system designer made sure that there would be enough resource to run the request, but failed to take into account the storage that additional waiting requests on the thread B would use. The system halts, or fails, unable to create the messages that the tertiary threads need created in order to service thread B. This particular problem can be overcome, and indeed memory limits and such can be placed on ports in an effort to manage the problem. Nevertheless, it is clear that asynchronous message creation causes a resource utilization problem which requires application level attention to avoid resource exhaustion. Universal user level management can become impossible in a complex system with multiple personalities and varied applications. Solutions could be constructed which required multilevel operations to reserve all the necessary storage before beginning but this sort of transaction processing has problems of its own and is, of course, inherently synchronous in nature. Client/Server synchronization can reduce kernel resource requirements to some small number of bytes per thread in the system. Management of application specific resource, of course, remains a potentially difficult problem but kernel level resource management for RPC might reasonably consist of nothing more than controlling the number of threads the system can have in existence at any one time.

### 4.1.3 RPC Specific Message Control Information Issues:

The message control structure associated with an RPC call refers to both the request and reply portion of the message. Besides the fact that it is the very essence of RPC to semantically link the send and receive, this arrangement turns out to be convenient with respect to the message buffer.

In the message library version of RPC, the message buffer format and in most cases buffer content does not change on reply. The message buffer represents the parameters sent by the original caller of the RPC. For many languages (including C) the parameters are not directly alterable by the caller. This means that in our implementation of RPC, it is not necessary to copy the message buffer back to the client. Absolutely requiring the format to be the same on reply makes it possible to always have one message control structure description of the message buffer instead of two. Having one message control structure describe both send and receive represents another useful compression of control information. Only one descriptor is necessary per parameter instead of two. The information associated with the receive and send side buffer disposition in the case of by-reference variables is kept separate, making decomposition of send and receive side specifics convenient.

There are two drawbacks to the coalescing of request and reply information. The first is the issue of verifying the compatibility of a client interface when the server is using override options to alter the disposition of local buffers associated with the call. In this case, the remote buffer disposition bits associated with one or more of the parameters of the incoming message are no longer valid. This problem has been gotten around by collecting all of the bits associated with server buffer disposition into a field. The server may check the incoming message control structure with by the same byte by byte comparison except for the addition of a masking operation before the comparison of parameter flags fields. The server is in full control of the compatibility check, based on the type and scope of the override, the mask may be used on all or some of the parameters of the incoming message. The second drawback is centered around the server_dealloc option. Special care will have to be taken when it comes to server_dealloc, the server may be compelled to check for this option and where it occurs send an override back on the reply. This is sub-optimal in the sense that if a client persists in sending messages with a server_dealloc on a parameter and the server persists in doing overrides in which the server_dealloc must be overridden. The server must continually send a reply message control structure and the message passing library 220 must on a call by call basis consult it. In the worst scenario, the server would check the incoming message control structure every time, doing a special check for the dealloc. This is not a large disadvantage over a hypothetical non-coalesced notion since in that case the server would have to send a message control structure with every reply. But it does require an extra check at user level on the part of the server and a cross comparison at the message passing library 220 level. This, of course, can be avoided by having the client send a message control structure that does not contain server dealloc, or through registration. The server can choose to register a message control structure which does not include the server_dealloc option and return the registration id for this to the client.

### 4.14 The Subclass of Supported Procedure Calls:

To be sure, when emulating procedure calls it is simply not possible to support the entire range of local procedure call behavior. Certain things are ruled out right away. There can be no side effects on global variables not associated with the parameters of the call but accessible to the caller and the callee via direct access. No inner scope tricks, either. A called procedure cannot act on a variable which has been declared as a local variable of the calling procedure or one of its ancestors unless that variable appears as parameter.

Beyond these obvious examples of side effects, however, lie a large set of perfectly valid calls which we do not support. The largest of these is multiple indirection of degree > 2. Though it could be supported, it was deemed not worth the trouble to support variables whose degree of indirection was above 2. Double indirection got the nod because it allows the callee to change pointer values, allowing the passing back of arrays.

In spite of the restrictions, the subset of procedure calls supported by RPC is large. It was a design goal to allow both uninterpreted message buffers built on the original caller's parameters and the transparent use of RPC. Clients do not have to send a destination port as the first parameter on their call. The message passing library 220 has the ability to send the destination port in the transmission data section. Subclassing could then be carried out through library swap or change in library resolution path. Further, clients are allowed to return data and pointers on their function calls. The message passing library 220 supports this through an optional separate status return for transmission status. Most importantly, buffer disposition classes have been set up to support a wide range of actions the called function might take. The client can fully expect the called procedure to remove a buffer after looking at the data, or allocate a buffer in which to return data. The range of supported semantics is determined by the buffer subclasses defined in Section 2. Beyond direct support, the client side proxy routine is capable of supporting local semantics, i.e., if the client was expecting the server to use a particular heap source when allocating a buffer, the proxy might allocate such a buffer using local calls and change the RPC call to reflect a write into this buffer. This would, of course, cause the proxy to rewrite the message buffer and would have some effect on performance.

Support of such a wide class of procedure calls was designed to ease the path towards co-residency. (Allowing callers and callees to be written to one paradigm and yet execute both remotely and locally without performance loss.) The local case was the most performance sensitive. In order to get the best possible performance here, the paradigm had to look as much as possible like a local procedure call. This was achieved, the calls can be indeed, and are in some cases (those on which the client does not send a destination port), local calls. The enumerated list of properties below along with the restrictions mentioned in the first two paragraphs of this section characterize the supported set of procedure calls. Procedures not venturing beyond these options are supported, even if they were never written to work in a message passing environment.
1. Function return values may be full word or pointers to structures.
2. By-reference data fields may be dynamic in size.
3. The callee may delete a buffer sent by the caller.
4. The callee may create a buffer and supply it to the client through the setting of a double indirect pointer.
5. The callee is capable of writing into a buffer supplied by a client and if that buffer is not big enough, either.
   a. returning an error
   b. truncating the data
   c. getting a new buffer and pointing a double indirect pointer to it.
6. The callee may push the data associated with different calling parameters into a single pooling buffer.
7. The callee may push data associated with different calling parameters into multiple pooling buffers.

There are some restrictions on ports when they are sent as arrays. The pointer to the array can of course not be more than double indirect and all the ports in the array must have the same disposition. Since ports are a data type special to message passing, these restrictions might be more properly looked upon as restrictions on the data type.

### 4.1.5 RPC Specific Use of the Transmission Control Information Component:

RPC uses the transmission control information subcomponent in the same was as other message passing models. It can alter defaults for NDR state, it can pass information back and forth between proxies via the trailer. The RPC, however, has some additional needs which must be met in order to support message passing transparency for its clients. The two major options are STATUS and DESTINATION PORT. The RPC subsystem supports the return of pointers and data on remote function calls. The default behavior for the message passing library 220 is to combine procedure return status and transmission status much as the CMU mach message passing service did. In order to separate the function return code information, the client side proxy must request the STATUS return option.

The function return status is then placed in a field in the optional header area. The transmission status is returned in the normal way. This preserves the message buffer, allowing it to appear just as the original caller's parameters did. The transmission section destination port override allows the proxy to determine the destination of the message without changing the message buffer. Again this is meant to support the dual notion of the fastest possible user level interface with support for transparent procedure call emulation. It seems less likely that 2 way IPC 122 for instance will want to hide the destination port notion from the caller, but the option remains available to all proxies. As with non-RPC uses, the trailer will prove useful for its security token, sequence number, scheduling information and possible routing information.

### 4.1.6 Priority Based Queuing, Making the Client Queue Pluggable:

The Capability engine 300 has generic interfaces for queuing and dequeuing of incoming messages. The routine actually called is determined by a field in the port structure of the target port. The Capability engine 300 consults this field and calls the procedure pointed to by it. The Capability engine 300 also has the interfaces that are called to alter this field. By setting up the proper queuing is the order of the day, the queuing code can check the schedulable entity associated with a blocked thread or a field in the message and queue or dequeue a thread/message accordingly. This is the basic idea behind the message passing library 220 and capability engine 300 support of multiple queuing methods. The capability sender queuing call is made (either through svc or directly) with a kernel object as parameter. The first portion of both the message and thread structure are kernel objects. The queuing procedure itself determines the type of the kernel object via a type field in the self defining data structure (the kernel object) and proceeds accordingly.

RPC, of course, does not queue messages and so message specific functionality in the queuing code would go unused. For details on the expected placement of scheduling information in message structure and the dual queuing of messages and blocked threads. The client queuing function of the capability engine 300 is not expected to be called directly in the case of RPC, rather, it is expected that SVC calls which encounter a shortage of server resource (either active thread or passive thread body notion) will trigger the capability engine 300 to call the queuing mechanism.

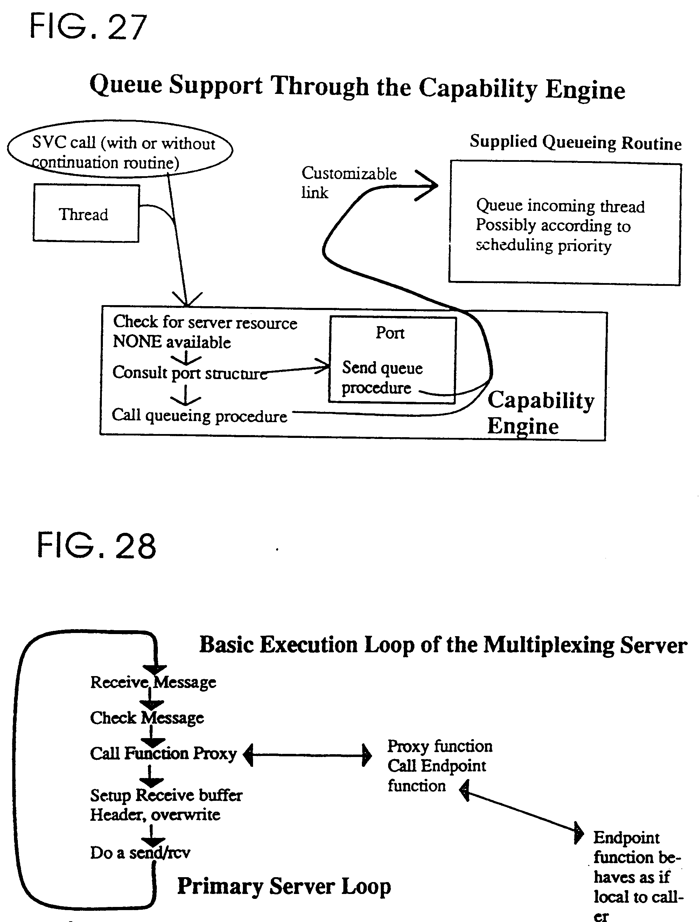

In Fig. 27, the Port is shown inside the capability engine 300 because ports are only accessible through capability calls.

### 4.1.7 Support For Message Server Spaces, Demultiplexing on Message ID:

It is often the case that a series of functions have enough features in common or contribute to a single purpose in such a way that there is advantage in describing them as a set. Further, if these functions share the same resource and information base it is important that the members of the set not be physically divided. In an effort to support this and to economize on ports, port level demultiplexing was carried forward from the CMU mach_msg model. (It is also necessary for compatibility.)

The message id appears as a field in the header, it determines the interface and format of a message amongst a series of interfaces associated with a single port. The message id is not a primitive of the message passing library 220 in that the library does not use its value in message handling decisions. It therefore could be relegated to the trailer as an option. However, it has been the overwhelming experience with CMU's mach_msg that demultiplexing RPC's are preferred over one port, one method or a more general and interpretive IPC 122 with its subsequent parsing costs. For a fixed set of interfaces, the message id is indeed an optimization of interpretive IPC 122 with its subsequent parsing costs. For a fixed set of interfaces, the message id is indeed an optimization of interpretive IPC 122. It is at once faster and more powerful. By convention, the message id transmits semantic as well as format information. (Interpretive IPC 122 here is defined to mean the message format is not known ahead of time and the message control structure must be consulted.)

In the demultiplexing model, the user level server is comprised of a primary procedure which places messages on and recovers messages from a port. This procedure does some general processing, (message too large, restart handling, buffer handling, etc.) and in turn, calls a server side proxy. The proxy called is determined by the message passing id. This server side proxy does the discrete function level specific setup and checking.

The general server loop does get involved in discrete message processing in one place. The message control structures are made available to it through a table indexed by message id. The byte by byte check code is generic. It is just the data involved which is function specific. Further, alterations to server side options are necessarily server wide in scope. It is the general server function that is the most appropriate place for the necessary adjustments to the server side format check. It is also true that the server side stubs tend to be automatically generated. This makes them a less convenient target for receive side buffer disposition customization. An outline of the flow of execution in a typical message receive/send, as shown in Fig. 28.
· Primary Server Function receives Message
· Primary Server Function checks status, i.e., message to large and does appropriate high level handling.
· If registered, primary server checks index table to relate registration id to message id.
· If not registered and client not trusted, Primary Server Function uses message id to get message control structure template and check against incoming (obviously requested) sender message control structure.
· Primary Server Function uses message id as offset into table to get the proper proxy function. Primary Server calls proxy function.
· Proxy function does any necessary transformations on incoming data. These transformations are function/application specific and outside of the message passing architecture except for their support in automatic proxy generation tools.
· Proxy function calls the targeted endpoint. (the callee)
· Proxy function does function specific cleanup, including any data transformations. Proxy function returns.
· Primary Server Function re-works header fields, it is not allowed to increase the size of the header unless another buffer is used. (There may be server temporary data 400 to be sent on the reply below the header in the receive buffer.) The primary server optionally includes a reply message control structure (rare) and reworks the message returned by the proxy to reduce its size (rare). (Such customizations may or may not be supported directly in the product, the application writer may be left to customize the server loop and data structures by hand.)
· The Primary Server Function calls the message passing library 220 with a send/rcv. The supplied header is pointing at the reply structures. (The message buffer which in turn is pointing at temporary and permanent fields that contain data to be supplied on the reply.) The header is at the top of the receive buffer. The receive buffer is big enough to hold any of the incoming message headers and their temporary data 400, or one of the oversize options may be encountered.

### 4.1.7.1 Dynamic Message Server Spaces:

The support of dynamic linking and co-residency is very powerful. It allows the download and linking of routines into a target space. Proper implementation will allow a downloaded function to connect to a local procedure call and perform possibly as a local procedure call without any additional overhead, effectively bypassing client proxy, server, and server proxy routines. When the function call is aware of message passing, it will still be necessary in the local case to have a proxy inserted between the caller and callee, but the complexity and overhead of this proxy will be greatly reduced when contrasted with a remote call.

Co-residency also supports the remote setup of servers. To support this, co-residency must go beyond simple download and link functionality. In the case of a pre-existing server, download and link from an external source could be used to alter one or more of the server proxies and their endpoint routines. In order to do this, however, the remote entity would need to know the name of the proxy, possibly the name of the endpoint and have general write permission, i.e, the task port for the target task. Just to support this functionality with some degree of protection, a complicated set of user level utilities with would have to be created. These utilities would be trusted and a target task would entrust its task port to them. Other tasks wishing to download function would have to communicate with the download target through these utilities.

Even if the complicated application level tools were acceptable, the level of functionality really isn't sufficient. Additional function requires a high level of communication between the target and the task attempting remote download. The caller cannot start a server, or add a new message id to an existing server without some method outside of the defined notion of co-residency.

In order to support these notions in a simple straight forward manner, we need support for a dynamic server model. A task wishing to make itself available as a dynamic server must create and export a port which makes the series of server creation, manipulation, and shutdown routines available. A server for servers. This server/server exports the calls presented by the server library. The default server loop is not just a shared library routine. The server_create call creates a threadless instance of a server and returns a handle. This handle is used by subsequent calls to change optional aspects of the server instance, add or delete server threads, associate proxies and by consequence their endpoints, add or remove receive buffers, or shutdown and clean up the server instance. After using basic co_resident utilities to download specified code into a target task, the remote caller would send a server_create message to the server/server port and receive a handle back on the reply. The caller may have supplied a set of proxies on the call or may fill in the proxies through subsequent calls. The caller has an additional call which is not one of the calls exported by the server package. An extra call is needed to create a thread and then direct that thread to associate itself with the target server instance. In the passive model, it is possible to simply provide the thread body resources to the receiver, but in the active model, the server acquires threads via a call by the target thread. There is an advantage to having the routine built in this way. The target server task is free to adjust post processing or customize thread state or resource for its specific needs. Because of the notion of server instance, a server persists even if its threads exit the server. In this way, exceptional conditions can cause a thread to return from its run_server call. The task is then able to customize exceptional processing. The thread can then be returned to the server loop. If the exception the thread is returned on is a simple return_server_thread, the thread is free to re-associate itself with the server, run some other unrelated task or self-terminate.

### 4.1.8 Anonymous Reply Support:

In the message passing library 220, the semantic link established between request and reply regarding data, buffer disposition and message buffer format is separated from the execution path and the resource necessary to carry out the request and reply. Through a separate set of fields in the message control structure, options on the port, and thread support options in the tasks themselves, the resource used to carry out the request and reply is explicitly manipulated. In the simplest, fastest case, there is no need for an explicit reply port. The client is simply blocked waiting for the completion of the remote procedure call, the server or at least a thread of the server is dedicated for the duration of the call to completing the remote procedure call and returning the result. The simple case, provides the message passing library 220 with an opportunity to employ the same technique used to optimize by-reference data transfer in effect, by-passing the explicit port wait that occurs in asynchronous and explicit receives. The message passing library 220 can in this case, avoid the expense of contacting the capability engine 300 both to do the wait and to map a send or send_once right into the server's space. There are cases, however, where for throughput or transmission control reasons more flexibility is needed.

Because of this flexibility, in some circumstances, an explicit reply port is required on either the server or client side in order to keep track of the reply target. Though rare, the client may wish to declare an explicit reply port in order to allow for intermediate message delivery. The proxy routine would in this case be capable of receiving these intermediate messages, processing them and then re-establishing the wait for reply by doing a receive on the explicit reply port. An example of this behavior can be found in the receive side handling of thread_abort_notify.

Some application environments accept asynchronous signalling only at the time of service calls. Even though the system is not strictly asynchronous, the asynchronous signals may need to be received within a bounded time. This can be partially determined by the frequency at which service calls are made by the target code, the target doing null service calls when the execution of local code does not include real service calls at short enough intervals. The delays during these service calls, however, might be longer than the system can tolerate. In this case, it must be possible to abort the target out of a block on send (or request), a block on receive (or reply) and possibly out of server processing via an out of band abort signal to the application server routine. If the client side proxy is set up to handle it, the send side abort with signal is straightforward. The client awakes with an abort_notify signal, processes it and if it wants, restarts the RPC. If the server is already processing the request, however, the client is waiting on a reply, in order to receive a thread_abort_notify signal during this period, the client has to have undertaken the RPC with an explicit reply port. In this way, the message passing library 220 can send an abort_notify message to the client and the client can re-establish its wait on the reply. If the client did not supply an explicit reply port, the message passing system will pend the abort_notify state and include it with the reply coming back from the server.

In order to avoid an explicit reply port on the server side, the server must be able to guarantee that the thread sending back the reply will be the same one that was associated with the request. In this way, the client awaiting a reply can be registered in a structure associated with the server thread structure. The server may not be able to guarantee this as it may be subject to a user level threading package and as a result subject to some form of thread multiplexing at user level. Such multiplexing is often done in an effort to support throughput, real-time, or some form of explicit serialization.

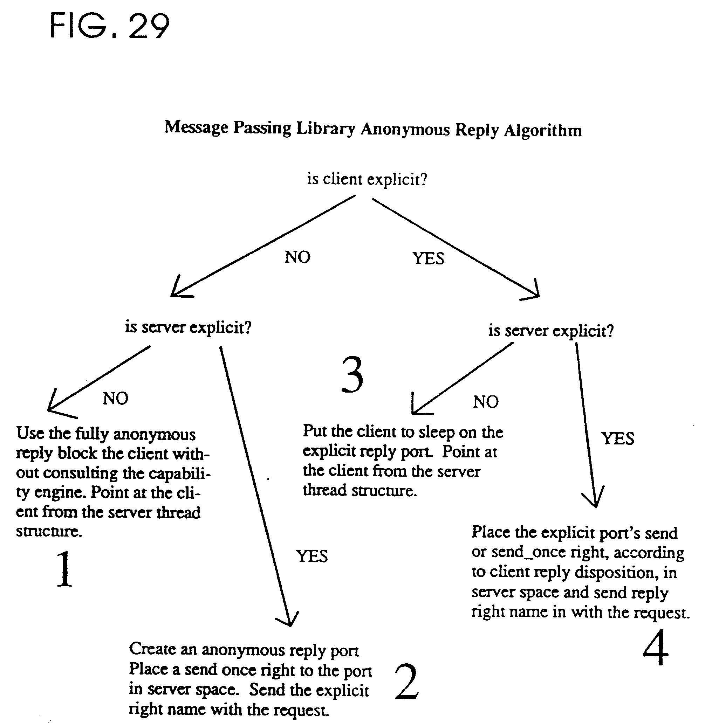

Seamless support of anonymous reply port optimization requires that a client decision with respect to reply port be hidden from the server and visa versa. The message passing library 220 achieves this with the algorithm shown in Fig. 29. The algorithm starts at the point that the message passing system has both the client send and the server receive in juxtaposition. This is, of course, always achieved in RPC.

Case 1, of course, gives the best performance. However, case 3 should perform better than either 2 or 4 because it is not necessary to create and place a port right in the server's space. Case 3 may perform nominally better than case 4 because the anonymous port is a light weight affair, not requiring the state and setup of the normal port types.

Upon return from the request, the server thread's data structure is checked for an outstanding reply. This will be present in case 1 and case 3 above. If this is an example of case 3, a second field in the port structure points to the client reply port. If the client is blocked on a port, it is removed. If it is not blocked, the server is made to wait on the port as a sender. When the client is available, the reply is delivered, the client thread returns and the server resources or thread are free to take on another message.

If the server's thread structure does not point at the client, there must be an explicit port in the remote port field of the server message call or an error is returned to the server. The client thread is retrieved from this port if it is there and the transfer proceeds. If it is not on the port, the server thread block awaiting it.

### 4.1.9 ABORT Support:

Abort support is a complex issue made more complex by the fact that abort support is not one function but three. Standard thread_abort will abort an ongoing message or wait without regard to restartability. Its use is limited, therefore, to drastic situations such as thread termination or at least termination of the stream of execution utilizing the thread. The second form of abort is thread_abort_safely, which should probably be called thread_abort_checkpoint or have some other better suited moniker. Thread_abort_safely's real purpose in life is to bring the target thread quickly to a state where a signal can be safely given. The signal is asynchronous and its mechanism must not be detectable to the synchronous stream of execution. It is, therefore, imperative that Thread_abort_safely be restartable. The third form of abort, Thread_abort_notify like thread_abort_safely is used for signalling. Unlike Thread_abort_safely, Thread_abort_notify delivers its signal directly to the execution stream of the target thread via return status on a message passing call. Its purpose is not to guarantee a quick restartable return from a kernel call so that a user level signal processing routine can be called and returned from. If the thread is running at user level, it posts a notify state and bides its time. Thread_abort_notify can only delivery a signal on return, restartably aborted or otherwise, from a message passing call.

The aims of the three types of abort are different enough that they influence their implementation, therefore they will be considered separately.

### 4.1.9.1 Thread_Abort:

There are two types of wait that a thread is capable of exercising, a kernel based one and an external server based one. In the case where the caller of abort is not worried about thread restartability, the only important considerations in waking up a waiting thread are the server or kernel resources and state. The thread may be returned to user level with a thread_aborted declaration at any time so long as the server/kernel are not left in an undefined state or with an orphaned resource. In the kernel it should be possible to either clean up the resources synchronously or less-desirably, create a care taker. In fact, in the new, more modular microkernel 120 architecture, there may be no kernel waits other than waits on message passing send and receive. In any event, the exact disposition of kernel resource recovery is beyond the scope of a paper on message passing. The server case, however, directly involves the message passing system.

In RPC, the abort function may find a thread either blocked waiting to begin a request or blocked awaiting a reply. If the thread is blocked on the request, abort is simple and restartable, return the thread with request_aborted status. The server was not yet aware of the request and no recovery action at all is required. If the thread is awaiting a reply the situation is much more complicated.

In the case of Thread_abort, an attempt may be made to stop the server as soon as possible rather than letting it complete a now useless bit of work. The first attempt to abort the server is made via the port. A field of the port structure points to an abort_notify function. If the server wishes to support early termination of work for an aborted client, it may choose this method. The message passing library 220 passes a message to the abort notification port containing the port, and the sequence number of the associated message. (The port is necessary because the message may have been delivered on a port set.) In any case, the state of the port awaiting the reply will be altered such that when the reply is sent back, the message will be destroyed and the server reply apparatus liberated. If the port is destroyed first, the server will simply encounter a dead name for the reply port and may act to destroy the reply and continue.

If the message passing library 220 finds that the abort notify field of the receive port has not been filled in, it checks to see if the server requested anonymous reply port. If it did, the server has guaranteed that there is an unbreakable link between a specific server thread and the request. In the server anonymous reply case, the message passing library 220 executes a thread_abort_safely on the server thread and sends a signal indicating that the message being processed is no longer important. The anonymous reply port, if present, is destroyed. If the client sent an explicit reply port then the state of the reply port is set such that the reply message will be destroyed and the server reply apparatus liberated as if the reply was sent.

The client will return from its message passing call with a Thread_abort status. This status indicates to the client that the message was aborted and the associated resources and data lost. For systems which wish to use the less refined Thread_abort_safely, retry can be achieved if the client checkpoints its data before attempting message passing. The server state is important only if the server maintains state between invocations. In this case, the designer must insure that the server receives notification of client aborts and takes appropriate action.

From a real-time perspective, there is a danger to proper scheduling of resources in the case where the server acquired the scheduling properties of the client. From a scheduling standpoint, this is effectively the server passive model where the client entity runs in server space. After experience of an abort. The client thread is effectively cloned with one running temporarily in the server and one running in the client. If the priority of the client is high enough, the server thread (in the abort/signal scenario) might run to completion before encountering the signal to terminate. In the server explicit reply case when there is no abort notify port, there is no attempt to notify the server of a client abort.

It is only in the case of the abort notify port that the server, through the system designer, can ensure timely delivery of the client abort notification. If the active thread on the server abort notify port is given high priority or if the passive scheduling parameter assigned by the message passing library 220 is of high priority, it will be scheduled before and may preempt the client message processing. The server may then set user level state to communicate with the client message processing thread that it must terminate early.

### 4.1.9.2 Thread_Abort_Safely:

Unlike Thread_abort, the purpose of Thread_abort_safely is not to logically abort an ongoing execution stream, it is merely to interrupt it. Thread_abort_safely needs to get the target thread to a state where a user level routine can be run in order to deliver an asynchronous signal. It then must recover in a way which is transparent to the synchronous execution stream. In CMU mach_msg, thread abort resulted in a return to the mach)msg call with thread)abort)send or thread_abort_rcv. These calls were restartable, but a small interpretive loop and an extra procedure call were required to check for and carry out the restart.

In the message library, there is no user level retry worked into the message passing call. Thread_abort_safely and Thread_signal work together in such a way that the return stack is set to deliver the exception message and when the exception routine returns, a trap back into the kernel occurs. The return from exception trap then checks the thread structure and determines what queue it was waiting on and sets it back in its place. It is not presently planned to have a compatibility option to bring back thread_abort_send and thread_abort_rcv to user level. If absolutely required, it can be brought back, but when active, it will result in scheduling artifacts and inefficiency avoided in the method outlined below. Request and Reply would have to be ripped from their queues, causing the client to lose its place in the request queue and requiring expensive calls to the capability engine 300 to talk to port queues.

Thread_abort_safely is undetectable when it aborts a message from the request wait just as in the Thread_abort case above. It is also undetectable in the abort from reply wait case. In fact, the client thread is not effectively removed from either the request or the reply waits! The resources necessary to carry out the request remain on the queue when a client experiences a Thread_abort_safely. In the case of the active server, the server thread is free to pick up this request even during an ongoing Thread_abort_safely. In the case of the passive server model, unless otherwise instructed (see real time considerations below) a shuttle is cloned and the server processes the request. Another way to look at it is that when Thread_abort_safely is experienced. The RPC is separated from the thread body of the client. This thread_body is then endowed with a shuttle and told to execute an exception message routine. When the exception message routine returns, it returns to the kernel. The message passing library 220 then removes the shuttle and re-establishes the client thread connection to the RPC. In the meantime, the entire RPC might have occurred, including the placement of reply resource in the client space. There is a precise corollary for the active model except that it does not suffer from the scheduling difficulties.

A link is kept with the RPC even during the Thread_abort_safely call, should the thread be scheduled for termination, probably through a Thread_abort, the RPC is reachable and the reply port and send request will behave as described above in section 4.1.9.1. The server resources are guaranteed not to become permanently pinned on a zombied reply port.

There are several ways to view the real time issue with respect to Thread_abort_safely. It could be argued that the asynchronous signalling process is a schedulable event in its own right. The exception message port would carry with it a scheduling priority apart from the scheduling information associated with the thread targeted for the signal. In this model, no action need be taken regarding the ongoing RPC. If the signal is viewed as an act carried out by the target thread itself, however, there is a need to adjust the scheduling information of the RPC at least in the passive server case. If the RPC has not had its request considered, the scheduling info can be altered to reflect suspend. This, of course, may effect the order of queued requests processed. If the request is already underway and the client abort notify port is active, the message service can send a message to the server stating that the request should be suspended. If the client notify port is not active and the server is using anonymous reply, the server thread may be suspended. It is assumed that the first non-intervention approach will win the broadest appeal as any other approach will affect completion time, and this is in conflict with the attempt to make Thread_abort_safely transparent to the synchronous execution path.

### 4.1.9.3 Thread_Abort_Notify:

As mentioned earlier, the main objective of Thread_abort_notify is to deliver an informationless signal to the caller of the message passing service upon return from a message passing call. In an effort to deliver the signal in a timely fashion, the call may be aborted, but only in a restartable fashion. Thread_abort_notify only delivers signals as part of the return status from message passing requests. For this reason, if a Thread_abort_notify is sent to a thread, either not waiting on a message queue or at user level, the thread is put in notify_signal state and action is delayed until it reaches a state where notification can be delivered.

Because this notification method does indeed involve aborts, it is not possible to avoid completion time anomalies on the RPC as in the thread_abort_safely case above. This is a direct consequence of the need to expose the signal to the synchronous execution stream. Because Abort_notify is visible to the synchronous execution stream and because it is not a mainstream function. An option to ignore thread_abort_notify has been included in the message header.

Thread_abort_notify when experienced by a thread blocked on the request queue, results in the request being removed from the queue and the client receiving a thread_abort_notify_send message. There are no artifacts, the server was never aware of the request, and the client is free to retry the RPC or not based on its handling of the notify signal directed at it.

When Thread_abort_notify aborts a wait on reply, the client thread is taken off of the reply wait queue and returned with a status of thread_abort_notify_receive. The client is then free to process the notification and do a receive on the reply port to continue the RPC. Thread_abort_notify will not abort a wait on reply unless the client has made its request using an explicit reply port. This was done because returning the client while it was waiting on an anonymous reply would either have required the client to return through a special trap instead of doing a receive on the reply port or a receive right to the anonymous reply port would have to have been placed in the client's space.

If the client does indeed supply an explicit reply, the system designer may feel compelled to take some action to effect the scheduling of the server request handling of the associated RPC, especially in the case of the passive server model. The case differs from Thread_abort_safely in that the synchronous code path is activated. The code is free to go off and do anything, delaying its return to wait for the reply indefinitely. It is not possible to protect the system from this behavior as it is with the separate signal handling code path of Thread_abort_safely. For this reason, abort on reply will also be suppressed by the message passing library 220 unless either the sender is using the anonymous reply port option, in which case the server thread may be signalled, or the client abort notify port is active so that a client abort message (of notify flavor) can be sent to the server.

### 4.1.10 Shared memory support 800:

Shared memory regions may be established through the message passing library 220 via two means. 1: The explicit shared memory by-reference parameter with matching overwrite on the server side to establish the shared region; or 2: The passing of a share capability. Though either method will establish a region, the first is considered more appropriate for RPC and will be the only case described in detail in this section. Passage of a share capability is less constraining to a server. The server is free to send the capability on to another task and if the write was a send right instead of a send once, the server may share the share region with others. This will create a common buffer among multiple parties. The server does this by doing a copy send of the capability in a message passed to a third party before consuming the original right in a mapping call. Though the forwarding of data on message receipt will occur with the sending of a message, broadcast is not defined for RPC and only the target server will receive an overt signal that the message buffer has been filled or freed. Capabilities cannot be established on shared regions, we are, therefore, protected from broadcast in the explicit shared memory setup case.

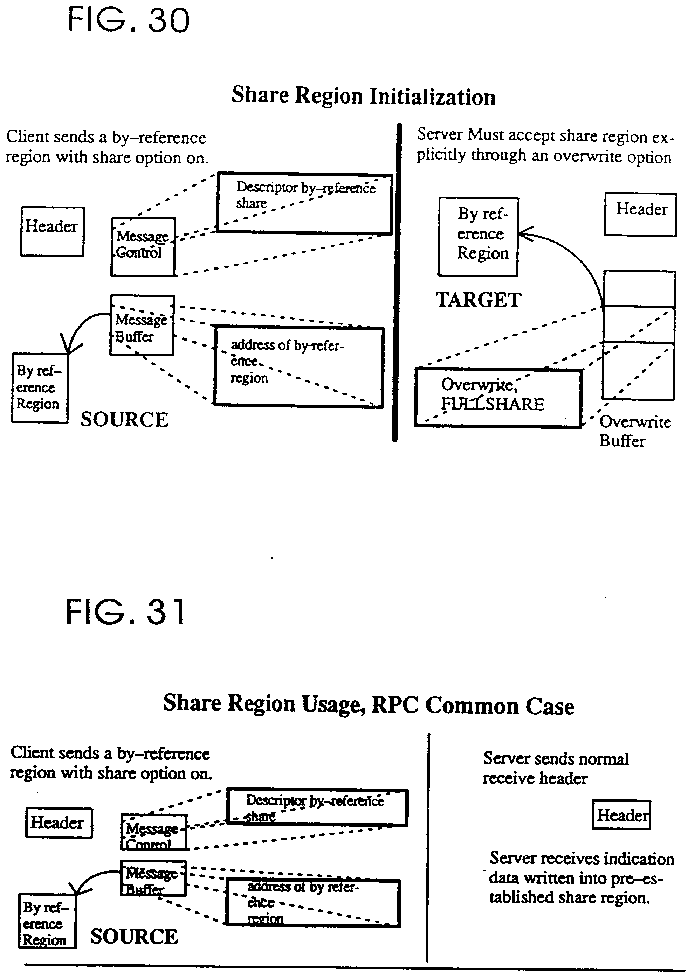

The vast majority of servers are stateless, that is they do not hold information acquired specifically from the data associated with a request beyond the delivery of the associated reply. (This, of course, does not include stochastic information concerning frequency of usage and resource requirements.) Because of the preponderance of stateless servers, it is expected that cases of shared memory usage in RPC will strongly favor client passing of control on the request and recovery of control on the reply. The client may either pass information in on the request or recover it on the reply or both. Fig. 30 are diagrams outlining the steps undertaken to establish shared memory and the protocol for passing data back and forth.

The establishment of a shared memory region involves the message passing library 220 creating data structures to hold information regarding the size and location of the share region in the local space and details on the whereabouts of the region in the remote task. The information is attached to the task structure of both parties. One final warning: Multiple mappings, mapping the region between more than two tasks, results in a linked list of share data structures which must be parsed on each share region pass. These should be avoided unless there is an express need for broadcast.

It is important to note that a shared memory region cannot be created without the active support and knowledge of both the sender and the receiver. Both the sender and the receiver will be aware of the size and location of the shared region within their own space. In this way, if a server did not find that a particular client was trusted enough, it could decline to accept a client directed share. The shared regions are also directional in the sense that one party establishes them and then offers them up to be shared. This is important because it is often true in the active server case that a server cannot trust the backing pager of a region of shared memory offered by a client. The associated pager might be inactive and cause the server to hang on a memory fault. In this case, it must be the server who offers a region. The region, of course, will be backed by a pager that the server trusts. Because of real time considerations, client pager issues notwithstanding, it is likely that the client directed share will be the method of choice in the passive server model. The passive model asserts that the client thread of execution enters the server space. In this case, it is the server pager that the client might not trust. Should the thread associated with the client request hang due to pager inadequacy, the thread body resources associated with the call could be reclaimed through the same mechanism used to prevent priority inversion on blocking requests for other resources.

Message control structure allows the client to send the share buffer either statically, where its size is described in the message control structure or dynamically, where another parameter on the call serves to give the size. Overwrite options give the receiver the ability to direct the overwrite region to a specified region of mapped memory or allow it to be placed in formerly unmapped memory.

In Fig. 31, Message Passing library 220 does not see overwrite buffer on server side; it checks to see if client region is actually shared by server by checking task specific state info setup on share region initialization. If region shared, it checks to see if physical share; if so, just pass on size and translated address. If not, do the explicit copy of data. If not shared, return an error to client.

The message passing library 220 is very flexible with respect to the usage of a shared memory region. Either party may send data in it. Either party may initiate the call, i.e., if a client existed in the server task space which called a server in the client's space, the message passing library 220 would support it. Further, all or part of a shared region may be involved in a transfer. The client may start a transfer on any address within a shared region and end on any address up to the last one contained in the shared region. Messages may contain multiple areas from the same shared region in separate parameters. Data from multiple shared regions may be passed in the same message.

### 4.1.11 Support of One-Way Messages:

One way message support in an RPC system is apt to strike one as an oxymoron. There are, however, conditions which require support of one-way messages, especially on the server side. In the active server paradigm, the server thread usually performs a reply with a subsequent receive for the next message. This is fine for the steady state condition, but how do you start it? The answer is that you start the server with a one way receive. The thread resource is put to sleep awaiting the arrival of the first message.

Server's may find it convenient to process subsequent messages while a particular message is blocked, waiting for a resource. Further, they may wish to use the thread resource associated with the blocked message. They are allowed to do this in the explicit reply port case. They will have to do a receive without a reply to get the next message. When the blocked message is finally reactivated, the server finds that it must now do a one-way send to institute the reply.

There are still RPC semantics associated with these one-way messages. Message control structure information, if sent with the reply, must be in the RPC coalesced form. Both in the reply and the request case, the transfer is fundamentally under the control of the client side message control structure as outlined in section 4.1.3.

One-way RPC send is not supported on the client side, and were it not for thread_abort_notify, it would not be necessary to support client one_way RPC receive. When the client is aborted out of a wait on reply in the thread_abort_notify case, a thread_abort_notify_receive signal is returned to the client. The client then must explicitly re-establish the wait for reply. The requirement to explicitly re-establish a wait for reply will also be experienced if it becomes necessary to support the old thread_abort_safely option to return thread_abort_send and thread_abort_rcv as direct signals to the client. (This might be required for compatibility with old interfaces.) It would then be necessary for the client code to explicitly re-establish the reply wait as in the thread_abort_notify case.

### 4.1.12 The Role of an Interface Generator:

The RPC implementation of the message passing library 220 was meant to support RPC without the need of compiled front ends. The interface presented by the message passing library 220 allows proxy routines to support RPC without expensive run-time interpretation. This is not to say that the message passing library 220 will not support front ends, compiled or otherwise, but RPC can be supported with simple message control structure creation routines.

It is fully expected that the RPC interface will run with a variety of front ends. The MIG tool has been ported to the message passing library 220 for backward compatibility. It has been extended to support the increased functionality. Porting of the MIG front end has proven that the new RPC is a superset of existing functionality as exposed by the MIG interface. Other front ends may be ported to provide compatibility with existing application code bases.

Because the message passing library 220 supports a full RPC interface, a front end need not be a context free grammar. It may be just a finite state automata. This greatly simplifies front end compiler design and code. Where another model or an extended model is desired, however, there are several places where performance on some machines might be improved through front end manipulation of the message buffer contents.

The message passing library 220 will accept double indirection pointers but under some circumstances (i.e., some machines might be extremely slow at de-referencing pointers across a protection domain boundary), it might be better to de-reference the pointer in user space possibly even twice, making it direct data. This would require the message option prescribing the writing back of direct data to the client. Dynamic data fields could be turned into static data fields. This would require the message control structure be written with each pass since it is here that static buffer lengths are kept, but it would remove the need for a separate count parameter. Finally, all direct parameters could be coalesced into a single direct data field, reducing the parsing time necessary in the message passing library 220.

It is not expected that any of these options will actually produce better performance in any but the rarest cases, but they are mentioned in order to show the flexibility of the RPC interface.

The RPC interface does not collect server interfaces together or create the proxy function tables and message control structure tables. It is convenient to have a front end that can automate this. A front end may also prove the proper place to do data transformations. And most importantly, front end support should be coordinated with co-residency requirements, making the production of remote and local proxy libraries as automated as possible.

### 4.2 Synchronous and Asynchronous One-Way and Two-Way Interprocess Communication:

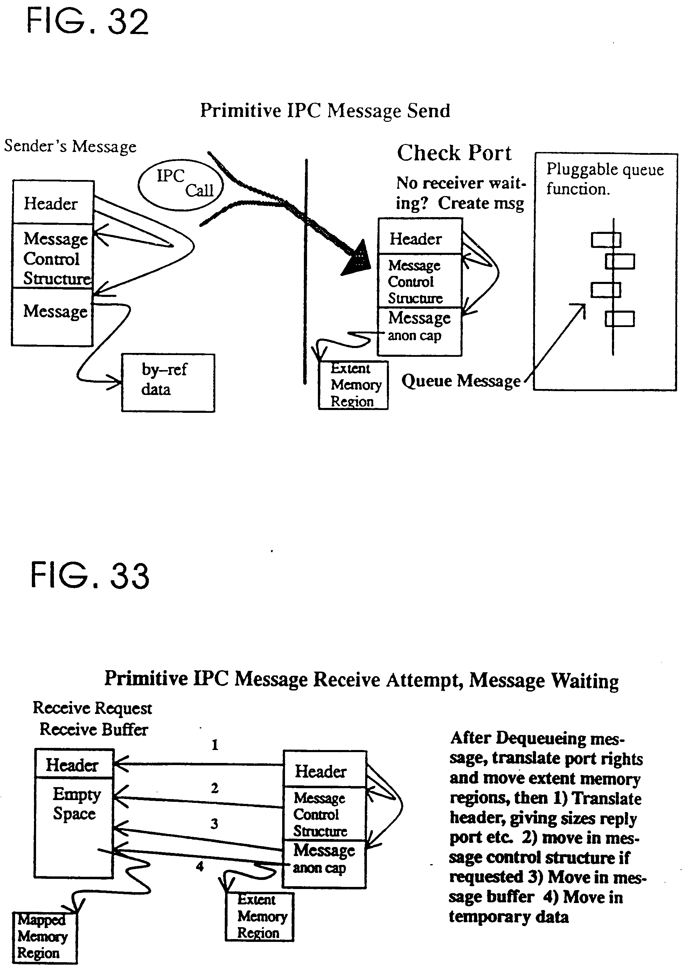

The set of IPC data types is a large and nearly complete subset of RPC. IPC data types support capabilities, direct data, and most of the by-reference data types. The only by-reference data type not supported by IPC data types is Server_Allocate which exists in RPC because of the semantic link between request and reply and the coalesced Message Control Structure. (Coalesced with respect to request and reply message formats and buffer disposition.) As will be outlined in section 4.2.3, the message control structure for IPC data types has the same format as that for RPC but it only pertains to the send portion of the transfer, even in two way messages. Thus, the parameter descriptors contain only send information. There are no IN/OUT or IN descriptors and the fields associated with reply buffer disposition are ignored. Fig. 32 is an outline of a simple IPC message pass.

The header, message control structure, and message are shown as a contiguous unit because it is expected that in a large number of IPC data types cases, the application itself will be message aware and create the message, there will be no proxy. It will thus often be convenient to place these fields contiguously. The transmission region may be used for outgoing optional transmission information because even in non-proxy uses, IPC servers may wish to make receipt of such transmission information because even in non-proxy uses, IPC data type servers may wish to make receipt of such transmission information optional. (If the transmission information section is not used in favor of field placement in the message buffer, the sender will of course see these fields always.) In the case of transmission information to be received, the caller must use the transmission section because, the message buffer descriptors of the message control structure do not provide the receiver any influence over the format of the message buffer on receive.

When a waiting receiver is not encountered, the message passing library 220 creates a message. This may involve some or all of the following.
· Copy in of message structure if not already done. We must make a kernel address space version for message queue since the message will not reside in the sender's or the receiver's space until it is dequeued.
· Deallocation of sender buffer if by-reference sender-dealloc option chosen
· Updating sender's port space for ports in message with move_send disposition, includes movement of memory capabilities.
· Creation of extent memory regions and subsequent creation of anonymous capabilities, through a call to the capability engine. (Alternatively copy small by-reference fields into direct data portion of message.)
· Turn all port rights sent into naked port rights in message, (rights without a space.)
· Update fields of the message buffer to reflect the extend capabilities. Keep track of original buffer types so receiver gets buffers as the sender intended.
· Immediate update of non-local share regions: Message presentation represents the synchronization point from the sender's perspective. This may result in slightly different behavior between the real shared memory and the emulated cases but this will not matter because the behavior is undefined unless the sender refrains from altering the buffer until it encounters a separate synchronization event. This synchronization event will not occur until after the receiver has received the message and processed the data in the shared region.

The receiver may attempt a receive before or after the arrival of a message. If it is before, the receiver will block, waiting for the message. If it is after, the message is dequeued, the data associated with anonymous capabilities is mapped, capabilities and port rights are moved into the receiver's space, an the message buffer, message control structure if requested, and server temporary data are moved into the receive buffer, as shown in Fig. 33.

As in the RPC case the message passing library 220 sets up the transmission protocol extension as per the receiver's request. The receiver is free to send as overwrite buffer to influence the placement of by-reference data and to translate capabilities into by-reference fields and visa versa.

The class of IPC data type as defined by the Message passing library 220 contains synchronous one-way, synchronous two-way, asynchronous one-way, and asynchronous two-way messages. The synchronous two-way class of IPC's can be distinguished from RPC in that the send and receiver are not semantically linked as are RPC's request and reply. The format of the receive may and probably will differ from that of the send and the sender does not supply the format information of the receive on the send. IPC data type centers around the message whereas RPC centers around communication as exemplified in the function call. Also, though IPC's can make use of proxy functions, they are less apt to do so, the message passing model is not being hidden from the application as with RPC. For this reason it is also considered much more likely to find the destination port as one of the parameters in the message buffer.

The diagrams above depict asynchronous one-way IPC data type. Asynchronous on-way is the most primitive form of IPC data type, as message is sent by one entity, placed on a queue and received by a second. The other three subclasses of IPC data type can be represented as combinations of asynchronous calls, they are supported directly by the message passing library 220 for performance and broader resource control considerations only. Synchronous two way could be mimicked by both parties doing paired send/receives with a permitted queue length of zero. One part of course could have to start out the affair with an unpaired receive. Asynchronous two-way could be imitated through the same send/receive pairing at application level. However, message queuing would be allowed in the event the sender did not find a waiting receiver. One-way synchronous could be decomposed into a paired send/receive in which the receive contains no data, or a send where the associated message queue length is zero.

### 4.2.1 One-Way Messages:

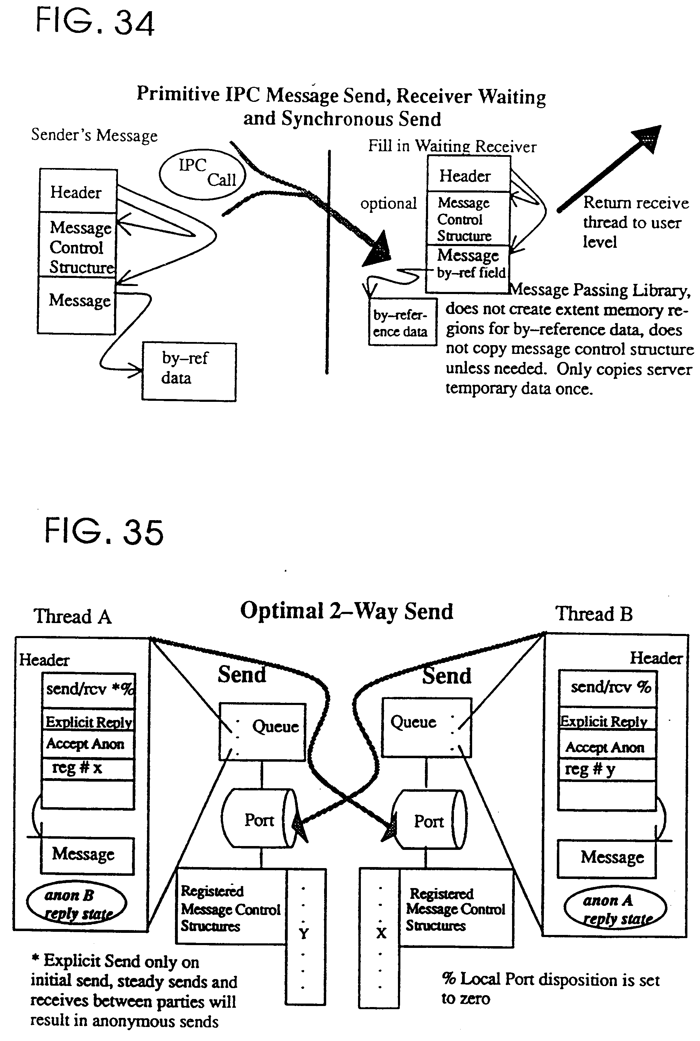

Both one-way synchronous and asynchronous message passing involves the delivery of a message to a remote party. In the synchronous case, however, the sender os blocked until the receiver actually receives the message. This model is supported by setting the message queue length to zero. The synchronous case is a small deviation from the normal asynchronous one way message and would be altogether unremarkable from an implementation perspective except that the enforced synchronization makes it possible to avoid explicit message creation. This allows synchronous one-way IPC data type to enjoy the same optimizations and defined resource usage as RPC. Fig. 34 is a diagram of synchronous one-way message passing. The asynchronous one-way send will behave like this when a receiver is found waiting, giving it better performance when receiver's are kept continually available.

The optimization for synchronous send is the avoidance of explicit message creation. Thus we again see the opportunity to employ the method outlined in section 3.1 to avoid the explicit creation of capabilities on our by-reference data types. We can also avoid the usage of message library level address space resource for temporary message structures. This usage as outlined in the RPC section is difficult to predict as it is directly dependent upon the amount of direct data in messages, and the number of messages queued. Thus for systems using the synchronous send, the availability of message creation avoidance grants a substantial advantage in system level resource management.

In both the synchronous and asynchronous cases, server_temporary usage will be impacted by application level convention between senders and receivers, knowing that a receiver is making a certain amount of space available for instance, or limiting the message formats which will be encountered to an enumerated set. Though it is expected that IPC data type will be used quite often for generic message passing where the receiver knows little about the incoming message and must request the sender's message control structure. Message demultiplexing and single use receivers are supported and offer convenience and performance advantage. They should be used when the situation permits.

### 4.2.2 Two-Way Messages:

At the simplest level, two-way messages have an advantage over one-way messages emulating two-way behavior because it is possible to do a single send/rcv call instead of a separate send and receive. As with other optimizations in which the message passing library 220 combines multiple commands on a single call, a series of subclasses spring up when message passing library 220 must become aware of the intended relation between these two one-way primitives. The cases in the two-way message example are:
1. Party 1 does a send then a receive, Party 2 does a send then a receive, both are asynchronous. (Supported by asynchronous 2-way)
2. Party 1 does a send then a receive, Party 2 does a receive, processes the data and then does a send. (Supported by synchronous and asynchronous 2-way. As in the RPC case the second party starts out the process with a stand-alone receive.)
3. Party 1 does a send then a receive, Party 2 does a receive but the send is done by a different thread. (Supported by asynchronous and synchronous 2-way, but server cannot use anonymous reply port option)
4. Same as three but the incoming and outgoing data are not linked. (Asynchronous only, synchronous 2-way would wait on the reply, the local caller would miss the opportunity to process the remote data while the data it sent was being processed.)

It should be stressed that two-way IPC data type support is a performance optimization. For cases where two-way is unacceptable, one-way messages may still be used, ensuring functional completeness. Further, on-way and two-way messages are completely compatible. In any of the cases, above, party 1 or party 2 could substitute one-way messages without the other party being able to detect the change. The reader may have noticed that some the classes above are supported by both synchronous and asynchronous two-way and wonder why they have been enumerated. The existence of the enumerated sub-classes above makes possible performance optimizations beyond the simple call combination already mentioned.

The two types of IPC data type two-way message can be distinguished from RPC in that the send and receiver are independent and unlinked semantically. The message formats of the send and receive can differ and the sender is not required to supply the reply format information. In line with this unlinking, there is more flexibility with regard to the reply port. Anonymous Reply is supported in the two-way IPC data type but only for synchronous two-way, if the flag shows up in the asynchronous case the asynchronous two-way is treated as synchronous since anonymous reply links the execution path of the receive with that of the send. (Implicitly in the initial sender's case and of course explicitly in the initial receiver's case.) IPC data types also support the two-way message pass where the reply port field of the header can be used as a way to indicate the port to do the receive on, without causing a right to be passed to the remote party. The caller achieves this by supplying a port int he reply field of the header but leaving the local (reply) port disposition field blank. This will yield better performance than the explicitly right pass on every message transaction. It can be used for cases where the remote party already knows the port to send back on and does a copy send on the right. Of course, IPC data types support the standard case of a reply port which serves as the receive port for the initial 2-way message invoker and as the source of a send or send once right as specified by the local or reply port disposition information field in the header.

### 4.2.2.1 Synchronized Two-Way IPC data type:

Synchronized two-way send enjoys performance advantage because of the separation of the system level semantic linkage of request and reply as in RPC from the issue of send/receive synchronization. The IPC data type linkage of synchronous two-way send dictates that the message control structure sent by the caller will only describe the send portion of the transaction. Still, based on a user understanding that either the remote party will act on data before returning it or simply that the remote party does not wish to deliver data until it receives data, the message passing library 220 is free to block the local party, (the initial sender) on its send when the remote receiver is not waiting. This allows the message passing library 220 to skip explicit message creation and its performance and resource costs.

As with RPC, the sender is free to declare anonymous reply, meaning that it will wait on a reply from the remote party which is based on the send portion of the transaction. The receiver may also support anonymous reply by guaranteeing that the thread that takes the receive will do the linked (only in an execution sense) reply. Thus synchronized two-way IPC data type gains another performance advantage, enjoyed by RPC.

Synchronized two-way IPC data type differs from RPC in that the two parties of the transaction are symmetric peers. This offers an advantage to IPC data type when the application wants to send direct data back from party 2 to party 1. Whereas the RPC transaction requires that message buffer data returned from the server be passed back as indirect data, the IPC data type transaction is free to pass back altered direct data. Moreover, IPC types will only send back the data and parameters which match the unlinked send (correlates to the reply). Extra parameters for fields of the reply need not be included in the request, and fields used for the request do not show up in the reply. The performance advantage, though small comes for free in the two-way synchronous IPC data type model.

### 4.2.2.2 Asynchronous Two-Way IPC data type:

The distinction between asynchronous and synchronous two-way messages is that the two-way message will not block on the send if the remote receiver is not already waiting. A message will be created and the asynchronous two-way invoker will attempt a receive. This will allow for asynchronous receive characteristics for applications where the send and receive are not semantically linked, i.e. the remote party has data to send to the local two-way invoker and so dumps it on a port the local thread will access. The local thread then undertakes a two-way IPC data type with data for the remote party. The remote party may not yet have a thread waiting on the receive, but the local thread can still pick up its data, return from the IPC 122 and continue processing.

### 4.2.3 Message Control Information Specifics

The format of the message control structure in IPC data type is identical to that in RPC. It will not in general be possible to send an IPC data type to a port expecting an RPC, however, because of the send only restriction in IPC data type. It is not forbidden by the message passing library 220, but the subset of messages which overlap between IPC data type and RPC is uninteresting. The receiver obtains an explicit indication of whether or not an incoming message is a request or an IPC data type send. If it checks this indicator it may reject the message on the spot or it may catch a mismatch when it checks the message control structure parameter descriptors. It is conceivable that an application writer might want a particular server to accept both IPC data type and RPC messages. The port could be some sort of intermediate collection point, it is for this reason that the message passing library 220 avoids rejecting mismatches. As with RPC, if all the fields in the message buffer are direct data and do not require translation by the message passing library 220, the message is declared simple and the transfer may take place without an explicit message control structure. The client must of course always supply one in both the RPC and IPC data type cases as the receiver might need it to parse the incoming data.

It is expected that IPC data type will not make use of proxies most of the time and that even when it does use proxies, the endpoint is likely to be message aware. This makes use of the special transmission status field unlikely. The status return is used to pass back endpoint function return status, allowing the emulation of local function as well as procedure calls. Also, because of the symmetric nature of the sends from part one and two of a IPC data type 2-way transaction, IPC data type is not subject to the limits on the usefulness of passing back direct data experience in RPC. For this reason and because of the de-emphasis of proxy use, the use of double indirect is expected to be low.

### 4.2.3.1 Send Only Info

The message control structure used for IPC data type is identical to that used for RPC but the fields of the descriptors associated with the reply must be zero. This is because the message control structure only describes the format of the message buffer and the buffer disposition information for the send portion of the transfer, even if the transfer is an IPC data type 2-way. Specifically, there are no IN/OUT or IN parameters and no reply buffer disposition options. The sender does still have influence over buffer disposition for incoming message parameters, but the more generic overwrite buffer must be used because the exact format of the receive is not determined by the send. The fact that the message control structure has no influence on the message buffer format on receive means that the IPC data type user is free to mix formats at run time. This opportunity to adapt the format is very useful in applications where there is no semantic link between the send and receive data because it allows these applications to make use of the send/receive execution path performance optimizations (please see section 4.4.2) without restrictions on the format of the paired reply. There is also an advantage in cases where the send and receive are semantically linked. (One must remember that the fact that the message passing library 220 does not link IPC data type send and receive semantics and format does not preclude applications from doing so.) It is possible that an IPC data type application may wish to respond to a particular message type with reply messages of varying formats. The send-only nature of the IPC data type message control structure allows the application full flexibility in this area.

The send only model for message control structures also makes the reply override found in RPC unnecessary. The only reason a server sends a message control structure to the message passing library 220 is to do an override of server side buffer disposition options (specifically server_dealloc, please see section 4.1.3). This situation does not exist in IPC data type as the stuff overridden in the RPC case is reply information supplied by the client. In the IPC data type case the reply (actually the symmetric reciprocal send) is completely determined by the message control structure in a fully symmetric reflection of the initial send process. The main reason for override use in RPC is the initial customization of server side buffer disposition on the request by the overwrite structure. The overwrite structure contains server specific requests to alter the placement and class of incoming by-reference variables as capabilities or visa versa. It may request that multiple by-reference variables be written into contiguous memory or at specific disparate locations. Please see section 3.2.4.3 for more details. The overwrite buffer's function is limited to receive side override of an incoming message's default buffer disposition characteristics. Because of this, its function and usage in IPC data type is identical to that of RPC.

When a receive does not trust a sender in IPC data type, it must request the message control structure and check it against a template. In a mutually non-trusting two-way send this means that both party 1 and party 2 supply message control structures on their respective sends and request the sender's message control structure on receive. This will also be the case for generic receivers where the format of the message is not fixed or tied to a message id. The need to do the check twice in the case of two-way IPC's is a disadvantage over the RPC.

Though the IPC data type two-way application might be more inclined to move transmission options into the message buffer because of the lower interest in the use of proxies and the greater likelihood that endpoints will be message aware, it is unable to move request for information options into the message buffer because the message control structure has no influence over the receive.

### 4.2.3.2 Registration:

The way that message control structures are registered and used in IPC data type is identical to RPC except that all messages are registered as one-way. Even in the case of two-way IPC data type each party in the transfer must either supply a message control structure on the send or a registration value. (Please see section 3.2.4.3 for a description of the process of registration.)

As may be recalled from the section on general registration, the client (or sender) must send the server (receiver) a copy of the message control structure and request the associated registration handle. The server is free to: 1) deny the request; 2) comply with it after matching the entry against an existing template; 3) match the incoming request against an existing template and find its semantics close enough to pass back the registration for the existing template; or finally 4) make a local copy of the incoming message control structure, register it as a new template with the message passing system and pass the new registration number back to the caller.

The message is registered on the port and the registration is immutable, it can neither be changed nor cancelled, for the life of the port. The message passing subsystem will thus hold a copy of the template and will be able to refer to it on a message send. In IPC data type both parties in a two-way send are capable of registering their send with their counterpart. The opportunity is fully symmetric, but it is not necessary to register on both ends. If only one of the parties supports registration, the two-way send will send registration handles from one end and traditional message control structures from the other. In case both parties int he transaction support registration, the two ports associated respectively with party 1 and party 2 will each contain their independent lists of registered message control structures.

The separation of the semantics of the send and receive on IPC two-way causes a difficulty in send side anonymous reply operation. Because registration links message control structures with a target port, the caller cannot both register a message for its receive, expecting the remote party to do a registered send and proceed to undertake a two-way message in which the receive it does will be anonymous. The remote party will not be able to send its message using registration. The recommended approach which yields the best possible performance will be for the caller to use explicit receive ports for its receive but still accept anonymous two-way from the remote party. This can be done from both ends of a two-way send pair. Fig. 35 outlines the method.

The diagram in Fig. 35 depicts an optimal two-way send. Both parties set the bit indicating they will accept anonymous ports from the remote party. This means that when they encounter a sent message and the remote party is expecting a reply, the party accepting the message will send on an anonymous port. This requires that the two parties work out ahead of time that the port which appears anonymous to the local party is actually explicitly to the system and in fact is the target port upon which the proper message control structure is registered.

The transfer above is started by Thread A. On the initial send the destination port is explicit. Thread A also declares an explicit receive port, but sets a bit declaring that if the remote party attempts a send/receive it (Thread A) will accept anonymous reply. With the setting of this bit, Thread A declares it will respond on the paired send, an not hand off the business to another thread.

Thread B must start out with an initial receive. In other circumstances, if Thread A is sending asynchronous two-way, Thread B might just start out with a send/receive. This is not recommended in the above case not just because it would result i an unnecessary explicit message creation but more importantly, asynchronous two-way may lead to the return of improper send status. If a send is attempted without having first experienced a receive the thread specific status will not reflect a waiting remote party. Anonymous receive depends on the ordered pairing of the send and the subsequent receive, therefore anonymous receive and asynchronous two-way are incompatible.

Thread B also sets an explicit reply port and the bit saying it will accept anonymous ports from the remote party.

The performance of the above is optimal for IPC data type because both ports A and B have registered their message control structures with the ports they will do their receives on and there is no need to push send rights for the reply into the port space of the receiver.

Thread A sends a message using registration ID X. The system sends the message to Thread B using X to look up the appropriate message control structure and puts thread A on its explicit receive queue but when Thread B receives the message, the fact that it has agreed to accept an anonymous port from the remote party means that a right to the explicit port Thread A is sleeping on need not be given to Thread B. The application suppresses the passing of this right by setting the local port disposition bits for Thread A to zero. When Thread B responds by sending a message back to A, the message passing library 220 finds thread A in the thread structure associated with Thread B, upon looking up Thread A it finds it asleep on its port. The message passing subsystem then will use the registration ID sent by Thread B to index into the port specific message registration table associated with the port Thread A is sleeping on. Thread B is using registration ID Y to describe its send, the message control structure found at index Y is used to parse the message and the message is given to Thread A.

Both parties are using registration on their sends, all receives can be done without the need to move explicit send rights into the destination of the send. In the steady state case Thread A and Thread B are absolutely symmetrical, both receiving on an explicit port, both setting the local port disposition in their respective headers to zero, both using registration, and both doing send/receives.

### 4.2.3.3 Mix and Match a Two-Way Send/Receive Example

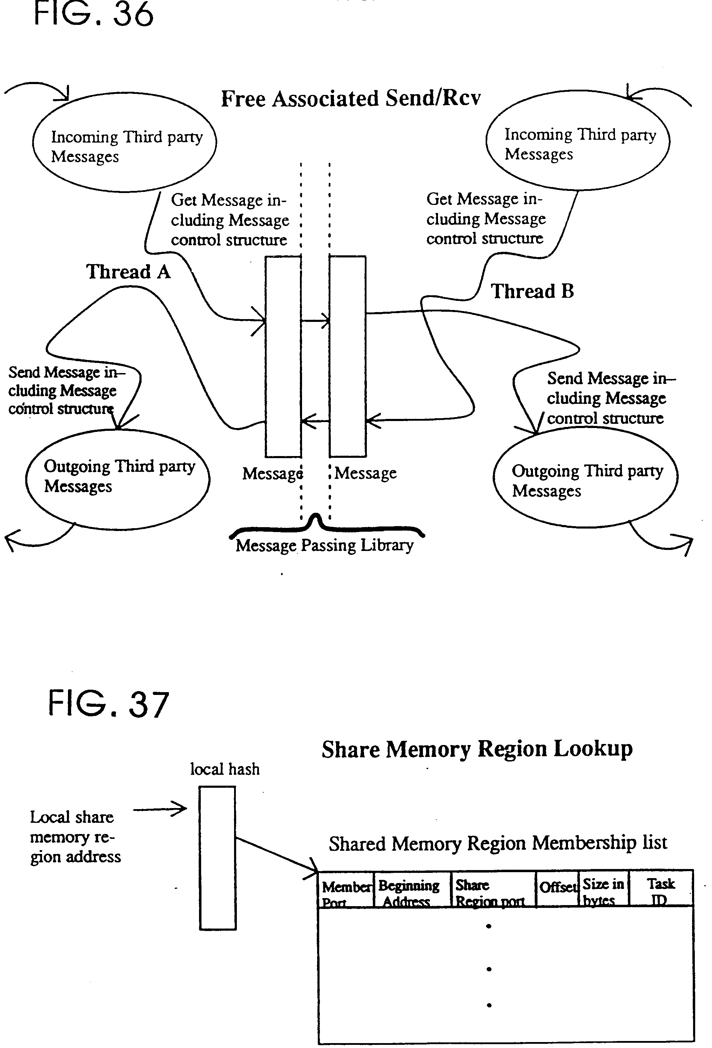

As is outlined in section 4.2.3.2 IPC data type two-way can achieve performance almost matching that of RPC in a send/receive but the complexity of setup for the programmer in order not only to do the two-way but to do it with near RPC performance is substantial. The pay back for IPC data type comes in the form of absolute freedom of association for the messages paired on the sends and receives. There is no restraint placed on the format of a receive based on the send. Fig. 36 is an example of two paries sending messages in free association. The diagram of Fig. 36 depicts a two-way transceiver made up of two threads running in different task spaces.

Both tasks have messages coming into their address spaces from third party sources. Both tasks have messages going out of their space to third party destinations. The message formats are varied, there is no fixed relation between the messages presented at one end of the pipe connecting A with B and those presented at the other. This example represents one of the prime uses IPC data type can be put to where there is not an RPC equivalent.

### 4.2.3.4 The Overwrite Option:

IPC data type support of the overwrite option is identical to that of RPC because the overwrite buffer only concerns itself with receive side options on placement of by-reference data and its optional conversion to capabilities or the conversion of capabilities to by-reference regions.

The overwrite buffer use is different in IPC data type in that it can be used by both parties in a two-way send. Two-way IPC data type is a symmetric combination of two one-way message passes and each of the two receives is entitled to override the sender's assumptions about how the receiver wishes to accept the by-reference and capability parameters. The overwrite buffer on the second receive replaces the special client parameter by parameter reply specific, by-reference and capability handling because of the lack of semantic link between the send and receive in IPC data type. Overwrite is a more general way of influencing the disposition of incoming data based on the fact that the format of the second send is not determined by the original send as the request is determined by the reply. The format of the second send may be one of several in the case of a demultiplexed receive, or any viable form in the case of a true generic receive.

### 4.2.4 Anonymous Receive Port Option for Two-Way:

As has already been established in earlier sections, the separation of semantic linkage between the message on send and the message on receive does not preclude system supported execution path linkage between the send and receive. Such linkage is based on application level receiver acknowledgement of send/receive linkage through a guarantee that the thread accepting the received data will be the one doing the paired send. The preservation of linkage between the send/receive pair is the basis for anonymous receive in IPC data type.

There are two restrictions on anonymous receive in IPC data type messages. First, since it relies on the ordering of the send/receive pair, anonymous receive on the receive side cannot be done in the case of asynchronous two-way. This does not preclude the use of anonymous receive as experienced on the send, i.e. the failure to supply an explicit receive port when doing a two-way. The second restriction is on the use of registration. No party can be waiting on an anonymous port as created by the send side anonymous option and receive a message in which the format of the message is dictated by a registered id. Please see the Figure 35 and section 4.2.3.2. Send side anonymous reply port support is defined to be the option to request a send/receive and not supply an explicit reply port, thus causing the message passing library 220 to create an anonymous one when the target of the send requires a reply port.

Though performance is somewhat better when both the send and receive anonymous receive options are being used, the send side option's most important use is RPC where it allows the client to match a true procedure call model by avoiding exposure of the paired send/receive, i.e. the client should not have to create an explicit reply port when the model of remote procedure call is to invoke a non-local procedure and return with the result.

### 4.2.5 Supported Data Types:

Limiting the language between the application and the IPC data type aspect of the message passing library 220 to send only information is as we have seen, in line with the IPC data type model as a one-way message send. This limitation has an impact on several of the data types which have sprung up as products or combinations of the primitive data type capability and mapping decisions.

### 4.2.5.1 Ports and By-Reference Regions:

Ports as direct data are not treated differently in IPC data type, since as with all direct data they are limited to send/only status. Even if RPC is later expanded to allow direct data to be sent in both directions, ports sent on the reply will not require a new data type or additional status in the message control structure. If a port is to be sent in either direction (request or reply) a parameter slot is made for it. If one is not to be sent in both directions, the PORT_NULL value is placed in the message buffer in the place corresponding to the port parameter for the direction in which a port is not passed.

Ports as by-reference data, or port arrays, may be contained in buffers corresponding to an of the by-reference types. By-reference types will be limited to the OUT parameters. There will be no IN/OUT and IN parameters. Further, the Server_Allocate class does not exist. The reason for the Server_Allocate class is that a parameter with a buffer description exists into which the server is to place data for the client, and the writer of the interface does not want the message passing library 220 to provide the server with the buffer on the request. This is done for performance and to increase the subset of procedure call supported in RPC. In any case it is a direct outgrowth of the knowledge of the reply at the time of the request.

Server_Deallocate survives as a data type only in the form of a Sender_Deallocate. It is no longer supplied on a request and acted on in a reply. Its action now is limited to the direct action on the buffer associated with a send. Sender_Deallocate exists in the IPC data type and on the client side of the RPC.

Permanent data remains unchanged other than its restriction to the OUT class only.

### 4.2.5.2 Non-Persistent Message Data:

Non-persistent message data can be characterized as data passed by-reference which nonetheless will not persist beyond the processing of the data associated with the message, or at least will not be required past the need to do another receive for a following message. In RPC this sub-class of by-reference support is referred to as Server_Temporary. The data in this subclass might be used in a reply to the client, but it is defined to be useless beyond the reply, allowing the space associated with it to be reused.

IPC data type non-persistent message data shares the same mechanism as RPC Server_Temporary and its circumstances and ultimate treatment are similar. Like Server_Temporary, IPC data type non-persistent memory is placed in the receive buffer after the header, message control structure (if requested), and message body. Beyond the restriction that Server_Temporary or non-persistent memory data must follow the three structures enumerated above, they may appear in any order in the remaining space. The main different between Server_Temporary and non persistent data types is when the data becomes stale. In the case of Server_Temporary, the data may be used on the reply. In the non-persistent case, the data loses its importance as soon as the associated send has been processed. The IPC data type is then free to do what it likes with the buffer as soon as the send is processed. The RPC must keep the receive buffer until after the reply has been sent. (This does not preclude the RPC using the receive buffer on a subsequent send/receive where the send serves as the reply.) The receive and subsequent overwrite of the receive buffer does not occur until after the reply data has been written back to the client.

### 4.2.5.3 Shared Memory Support:

Shared memory as supported by RPC is a performance optimization of a by-reference parameter pass on a procedure call. The parameter looks like a normal parameter on the transfer in all respects except that the message passing library 220 is aware that the physical memory associated with the parameter may actually be shared between the client and the server. In this way shared memory remains transparent to the application at least at the interface protocol level. Obviously steps must still be taken to set up the shared region. This may be done in a separate service, however, allowing the endpoint server and client code to remain free of share specific protocol considerations. If the application code restricts itself to the use of this buffer or portions of it in communicating information back and forth it will satisfy the needs of the share memory support.

When it comes the functionality of integrated shared memory, we find the RPC model somewhat limiting. RPC is not defined for transfers between more than two parties. In line with this, it is recommended that shared regions in RPC be set up through the explicit by-reference means outlined in section 4.1.10. On initialization, the client sends a by-reference pointer with the share option on. The server sets up an overwrite in which it indicates that it will accept a by-reference share region and optionally where it wants it. Such a share region can only be shared between two parties. An attempt to create a share capability on a share region will return an error.

RPC is capable of acting on shared regions which are set up through share capabilities but this is not recommended for RPC because a send share capability may be cloned by the owner and multiple share regions set up in different tasks. IN line with the emulation of shared memory, even in the RPC case, the list of tasks which map a shared region is traversed and, if some of the members do not share physical memory they are updated. Only one entity, however, the target server of the call, will be sent a message.

IPC data type semantics do not restrict shared memory region semantics as do RPC. The by-reference form of shared memory region initialization is still important for parties which wish to setup regions which are guaranteed to be share only between themselves, but multi-party, capability based shared memory support is also supported through the message pass primitive.

### 4.2.5.3.1 Broadcase Support:

Shared memory region initialization through the share capability is the means by which the message passing library 220 sets up multi-way common region ownership between multiple address spaces. This may be considered a primitive form of broadcast as the aim of exposing shared spaces to the message passing library 220 is to emulate shared regions between tasks which do not share a common physical memory.

If we were only supporting the two-way notion of shared memory the port associated with the destination of the message would be sufficient to target the actions of the message passing library 220's shared memory support. The destination would be checked to see if it was local, if it was and the destination space contained a mapping of the shared region, the by-reference pointer would be updated to reflect the correlative address in the receiver's space. If the destination does not share a common memory resource, the data associated with the transfer including the "shared data region" would be collected into a message and transferred via something like the proxy port notion of NORMA. From a model perspective it is important to note here that the non-local treatment is really just the ignoring of the share option bit. Proxy port NORMA need know nothing about shared memory, it simply delivers the message, including the data from the "shared" region. The message passing library 220 code at the remote end will place the data in the "shared" region.

If the transfer is to be multi-way, the destination port of a message will not be enough. It is for this reason that a port on which the distant party owns the receive right (or a proxy port) is associated with the share memory region mapping entry. The owner of this port must be ready to receive a message on the port regarding transfer of data in the shared region. The port is supplied at the time of the share capability mapping or in the case of the by-reference setup method, it is the port on which the receiver received the message that mapped the receive region. Fig. 37 is a picture of a share memory region membership list.

In an RPC style transfer or in a general transaction between two parties, the destination port is translated and checked against the task ID field of the entries in the membership list. The membership list is found via a hash function on the address associated with a by-reference share parameter. If a match is not found, the message is returned to the send with an error. If a match is found, the offset and size variables are checked and if the region described in the message falls within the share region, the by-reference pointer is adjusted to point to the appropriate region in the remote space and the transfer continues. If the task ID turns out to be a proxy port of the NORMA variety, the special NORMA code will create a message and send the data, including the shared data to the remote party.

There are two versions of multi-way supported for IPC data type, explicit message and memory update only. Both are restricted to primitive one-way asynchronous message pass. In both varieties, the message sent by the caller may only contain direct data and a single by-reference parameter matching a portion of a share region. The local address pointed to by the by-reference parameter is used to find the proper membership list. With the explicit message option, messages are created for each of the elements found on the list, truncation occurs where the data region mapped by the member is not a full overlap. Where the task ID is detected to be non-local (a proxy) a message containing the "share" data is created and sent to the proxy port. The NORMA code kicks in and sends the message to the remote party. For the memory update only option, the membership list is walked and special messages are sent which the message passing library 220 at the other end of the NORMA pipe will recognize as memory update messages. The memory update message will be delivered in normal message order to the port. But the message passing library 220 will act on it before it queues. Therefore, it cannot arrive later than a subsequent message from the same source, but it may arrive earlier than messages from that source are read by the remote party. Use of memory update only requires data level synchronization flags and buffer monitoring, or some other external form of synchronization.

Once a shared multi-way has been set up and one of its existing members does not share a common memory resource, extending membership will require synchronization of the membership lists. When adding a new member, the message passing library 220 traverses the membership list. Any members who are found not to share a common memory have a special message sent on their listed port. The message can be sent via the NORMA proxy and will be intercepted by the message passing library 220 at the remote end. Share memory update messages and membership update messages do not bump the sequence number count of the target port.

### 4.2.5.4 Memory Region Capabilities

Capabilities are implemented as ports, as such they are subject to the same transfer mechanisms as other ports. In the case of direct ports, there is no difference between the treatment of RPC and IPC data type. In the case of by-reference versions, i.c. port_arrays, capabilities like ports are subject to the treatment of by-reference subclasses. Please see section 4.2.5.1. In IPC data type the mapping options for capabilities on the receive side are identical to those available in RPC. In the RPC server receive case and in IPC data type, the receiver communicates its wishes through the overwrite buffer. The client makes its directives known through the message control structure. The options associated with reply side handling in the coalesced message control structure are identical to those available in the overwrite buffer.

### 4.2.6 Priority Based Message Queuing

Calls made to queue a message on a port must go through the capability engine. The capability engine associates queuing procedures with ports via an exported call. This allows the customization of queuing mechanism. Both IPC data type and RPC make use of the plugable queue. In the IPC data type case, however, the complexity of queue mechanism is usually greater. Unlike the RPC, IPC data type's must be capable of queuing both blocked threads of execution and messages. The queue may at any one time contain examples of both messages and blocked threads. The condition will be produced by a mixture of synchronous and asynchronous IPC data type. For example, if one sender sent an asynchronous one-way message and a second party sent a synchronous one-way message to a port upon which a receiver was not waiting.

Plugable queue mechanisms are important in support of scheduling. Even in the RPC case, scheduling information may be esoteric enough to require the personality code to supply a queuing mechanism which can translate and coordinate with the scheduling policy code. The policy code is associated with the threads of execution. IN the IPC data type case, a method of tagging messages with execution policy must be undertaken. In order to shield endpoint routines from this activity, it is recommended that such information be placed in the header's trailer field. This means that the code which fills in the header must be coordinated with the scheduling routine and the plugable queuing routines associated with the ports. The queuing routine must be ready to queue a message on one hand, placing it on the basis of scheduling information supplied and a blocked thread on the other, possibly pulling its compatible scheduling information from another place. It must prioritize them properly based on their scheduling information.

The choice of running the remote process using the scheduling information of a remote thread or the scheduling priority of the message or local thread is made outside of the plugable queue. The queue's jobs is kept simple, deliver the highest priority waiting message first, as determined by a customizable scheduling policy. There is a wrinkle, however. The queue code itself will run at the priority of the request on the queuing side. If there are higher priority tasks running in the target of the send or elsewhere, the act of queuing may have to wait. Thus, active servers running at high priority may block a medium priority task in favor of carrying out the processing of a request for a lower priority entity. This is an issue of personality level system design, however, and does not impact directly the queue procedure. Unfortunately, in the passive server case, if the incoming request has a higher priority than tasks currently running in the target, it is up to the plugable queue code to take action to avoid priority inversion. The plugable queue code may bump the priority of the ongoing operation in the target, or it may call an associated high priority call back in the target server, allowing the server level code in the target to make specific adjustments.

IPC data type servers are more likely to be active in nature (running with their own scheduling policy) but passive servers receiving asynchronous messages are not unreasonable. To the calling application, the scheduling characteristics in a non-migratory model would be akin to a fork of a new execution entity and an exec in the case of a thread_shuttle clone. Or just an exec in the case of a migratory thread_shuttle handoff.

### 4.2.7 Explicitly Thread Migration:

In RPC, we are able to make the issue of thread migration largely transparent to the application. Issues exposing thread migration revolved around the possible value of manipulating thread body resources directly rather than through thread calls to the microkernel. This direct manipulation might prove very convenient in the case of user level threading packages, but it is possible to provide shuttle like passing of kernel level thread resources between the client and server without it.

The reason that the bulk of thread migration mechanism can be hidden from the application level interface in the RPC case is the link established between the client and the server and the fact that it lasts for the duration of a full send/receive transaction. Except for cases of abort, (please see section 4.1.9 for details) the client remains suspended while the server acts on its request. This allows the passing of kernel level thread resources to the server without visible artifact. The server will process the request and the client will get back its shuttle when the reply message is sent. The passive model where scheduling information is transferred from the client to server for the duration of the request processing behaves in a simple and predictable fashion, following the model of a traveling execution entity moving from space to space in its effort to process its data. The only IPC data type transfer style which behaves as RPC is the two-way synchronous send. All other forms display artifacts when explicitly thread migration is the model chosen. All other forms require various level of application level thread body support.

### 4.2.7.1 Send/Receive

As already mentioned synchronous two-way IPC data type behaves exactly as RPC when it comes to thread migration and the active vs. passive model. Asynchronous two-way, however, will behave differently. As an example, if the remote party has a message available on the port the local party is to do its receive on, it is conceivable that both the remote party and the local party would be running simultaneously. In this example, the message passing system cloned a shuttle to run the receive on the remote party's side and the local party continued with its shuttle to pick up and process the message on its receive port. In this model new shuttles spring into existence based largely on the stochastic elements surrounding message creation and processing within the two parties and their scheduling priorities, and then wink out when a send is done and there is nothing to receive.

The behavior of the system with respect to resources may not vary substantially between migratory and non-migratory cases except when there is a global shortage of shuttles. In the non-migratory resource instance, the shuttle resource remains welded to the receiver. However, the scheduling behavior of the elements when influenced by the passive model may differ widely.

In the active model, all messages taken in would take on the scheduling characteristics of the receiver. In effect, the receiver would either have a number of threads to service or a set number of thread bodies to pair with shuttles to service. The system is assumed to be designed to have possibly all of these threads running simultaneously and will operate normally. If the model is passive and scheduling information is being transferred from the sender, the threads of the server may become dominated with high priority scheduling information. This along with simultaneous running of the original sender's threads may lead to unexpected delays for lower priority tasks. In order to take this into account the application must have its ability to send messages monitored and controlled, probably through the same quote mechanism set up for thread fork. This will profoundly affect the perceived behavior of the system from the application's perspective.

### 4.2.7.2 Send:

One-way synchronous and one-way asynchronous send behave identically when it comes to resource and scheduling issues of migration. The delay and synchronization event experienced in one-way synchronous IPC data type only affects message creation. It is still the aim of the call to let message processing and the callers subsequent processing continue simultaneously.

One-way IPC data type, in a non-migratory model where scheduling information nonetheless is passed by the message looks very much like a thread fork. For the duration of the remote message processing, a remote thread and the local caller will be running at the scheduling priority of the caller. As with the asynchronous two-way IPC data type case above in systems sensitive to real-time, one-way IPC data type calls will have to be monitored and subject to a quota.

If supported, the one-way IPC data type in migratory model will require explicit thread body management. The act of migration can be hidden in the all of the two-way models because the act of a send is taken by convention to offer the shuttle of the sender. The act of a receive frees the shuttles of its patron and the caller receives the shuttle of the sender when the message arrives. In this way, paired send receives may be used to keep track of non-explicit thread bodies. Only thread bodies are blocked on a receive port, but this is transparent to a caller since it will receive the sender's shuttle when a message arrives and it had a thread body when the caller did the receive. It is only the unpaired send which produces a problem. After the message passing library 220 gives the sender's thread body to the receiver, the message passing library 220 does not have a port to place the send thread body on.

There are ways in which the thread bodies could be dealt with explicitly. As an example, a method could be set up in which some portion of control information associated with the body structures would be accessible to the message passing library 220. The message passing library 220 would signal the release of the thread body structures through an alternation in this state. Linked lists of thread bodies could be traversed at the application's leisure and freed thread bodies re-cycled.

If it is decided that explicit thread body management will not be supported, lone sends may be treated as non-migratory, resulting in the cloning of the thread shuttle and the return from send for the on-way IPC data type.

### 4.2.7.3 Receive:

Migratory and non-migratory receives can appear much the same to the application. In the non-migratory case, the thread body and shuttle are welded together from the kernel perspective. The thread which does a receive waits intact for the message. IN the migratory case the thread will do a receive as before, but the kernel level thread resource will be freed. When a message comes along the kernel level resource associated with the send or resource from a resource pool is again associated with the receive thread and it returns from its receive. If an abort should occur, a resource from the pool will be supplied. The old thread handoff code of CMU presents the kernel stack as an example of a kernel level resource which can transparently be shared amongst senders and receivers. The underlying requirement is, however, that the resources remain anonymous and interchangeable.

Operations which involve attributes associated with kernel level resources will leave artifacts when they are treated as migratory. The scheduling attribute is an example of this. If the passive model is chosen, scheduling information is passed from the sender to the receiver. The receiver will thus process the incoming message with the scheduling attributes associated with that message. This works well for the message, but the receiver thread loses its scheduling identity. If a thread wishes to do work no associated with a message it has just received and processed, it must do so using the message related scheduling properties or explicitly alter the scheduling information. A scheduling template may be associated with the receive port, allowing aborted receives to operate at a predetermined scheduling priority, but this will not reflect the possibly different scheduling properties of multiple threads which might be using the port for receives.

### 4.2.8 Explicit Messaging and Resource Usage:

As was discussed in sections 4.2.1 and 4.4.2 certain forms of IPC data type require the creation of an explicit message in order to satisfy the asynchronous property and allow for the subsequent opportunity to simultaneously process both the post message code in the sender and the message processing code in the receiver. The creation of these messages is not only expensive in processing terms, it also leads to utilization of memory and kernel address space resources which are hard to bound.

When a message is created, it has been determined that the sender wishes to continue processing and that a "snapshot" of the data must be taken along with port right movement and creation. The issue of extent port rights (rights not associated with a port name space) does not impact kernel level resources, memory requirements for by-reference regions, capabilities, and explicit message structures in general do.

Memory for the message header, message control structure (if registration is not being used), and message buffer (containing the direct message data and by-reference pointers) must be acquired. This memory is often wired for convenience and performance. Even in systems where it is not wired, the memory is taken from the address space of the kernel proper. Large numbers of queued messages containing large amounts of direct data may cause the kernel to run out of virtual address space. By-reference regions are not quite as bad, but still represent a drain on kernel level resource. When a region in the sender's address space is to be send as a by-reference buffer, the message passing library 220 must call the capability engine to create a capability. The capability structure and any support structures such as shadow objects must be kept in the kernel address space.

Monitoring and controlling kernel resource usage in IPC data type then requires some sort of quota monitor. For example, controlling the number of messages queued and explicit thread quotas on the amount of direct data, the size and number of by-reference parameters, and the number of ports, as well as the total number of active ports in the system. This seems daunting until one compares it against the mammoth task of deadlock avoidance or recovery for entities in an asynchronous model which find themselves blocked because of kernel resource insufficiency or draconian quota.

When it comes to kernel resource usage, RPC has a tremendous advantage over IPC data type. Because an explicit message is never created, a message transfer may in theory, not consume even temporarily more than a few bytes of kernel memory. The message, message control structure, and header may be viewed in the caller's space, and built in the receiver's space. IN practice it is more convenient to copy at least the header into the kernel space, but even if the entire message, message control structure are all copies in. The kernel level resource usage cannot go above the number of threads int he system multiplied with the maximum message control structure and message sizes. If the data is chosen to pageable, the amount of kernel virtual storage will remain manageable even in the worst case for a considerably large number of threads.

### 4.2.8.1 Send/Receive Juxtaposition a Sometimes Optimization:

It is the guaranteed wait for a receiver that makes it possible to avoid explicit message creation. This can be done in the case of RPC an din the synchronous forms of IPC data type, i.e. two-way synchronous and one-way synchronous IPC data type. It is still possible to skip explicit message creation in asynchronous IPC data type when a sender arrives at a port to find a receiver waiting. The message creation step is skipped and the message is moved directly from sender to receiver space. The opportunity to avoid explicit message creation does improve overall performance for asynchronous IPC data type, but it should be noted that system performance will degrade faster than might otherwise be expected when a system goes from a running state where servers are idle most of the time to one where servers are working a backlog of messages.

### 4.2.9 Support for Receiver Space Demultiplexed on Message ID:

Though the demultiplexing of messages is carried out in application space above the message passing library 220, the message passing library 220 is still aware of demultiplexing servers to the extent that a message ID field is supplied in the header. As with RPC the support of an ID in the header makes possible an optimized form of interpretive receiver where there is an enumerated set of message formats expected. Please see section 4.1.7 for a full description of message ID.

As with message control structures, message ID's in IPC data type refer only to the send. This means that the delivery of a message ID in a two-way IPC data type is symmetrical, each party describes its own send transfer and the two sends of a two-way message are not semantically linked. The meaning of the ID is determined by prior agreement between the sender and receiver.

### 4.2.9.1 Support for Dynamic Message Receiver Spaces:

In servers operating on multiple enumerated message formats, it is often nice to customize the handling of one or more of the formats or even add support for a new format. The mechanism to do this exists above the message passing library 220, but since it is tied to message ID, it is logical to mention it here as an extension. The passing library has been designed to avoid conflict with message ID customization. Registration is done by the server or receiver and is indexed through a registration ID. This will allow a receiver to replace a message format at a particular ID, even though the registration information exists for the life of the port.

Although a specific embodiment of the invention has been disclosed, it will be understood by those having skill in the art that changes can be made to that specific embodiment without departing from the scope of the invention.

## Claims

1. A system for interprocess communication in a microkernel architecture, comprising:
a memory means in a data processing system, for storing data and programmed instructions;
an interprocess communications means in said memory means, for coordinating message passing between tasks in said memory means;
a first task in said memory means having a set of attributes defining a first communication port and having a first message control structure format for messages it can receive;
a second task in said memory means having a set of attributes defining a second communication port and having a second message control structure format for messages it can send;
a processor means coupled to said memory means, for executing said programmed instructions;
a first thread in said memory means associated with said first task, for providing said programmed instructions for execution in said processor means;
a second thread in said memory means associated with said second task, for providing said programmed instructions for execution in said processor means;
a message passing library means in said interprocess communications means, for registering said first message control structure format as a message control structure template for said first task and issuing to said first task a registration ID;
said second thread sending a registration request with said second message control structure format from said second task to said first task;
said first thread validating said second message control structure format for said first task and sending said registration ID to said second task;
said second task sending a message with said registration ID to said interprocess communications means for forwarding to said first task;
said message passing library means using said registration ID to access said message control structure template for comparison with said message from said second task; and
in response thereto, said interprocess communication means forwarding said message to said first task.

2. The system of claim 1, which further comprises:
said second task represents an application program.

3. The system of claim 1, which further comprises:
said second task represents an operating system personality program.

4. The system of claim 1, which further comprises:
said second task represents a personality-neutral services program.

5. The system of claim 1, which further comprises:
a second processor means coupled to said memory means, for executing said programmed instructions;
a third thread in said memory means associated with said second task, for providing said programmed instructions for execution in said second processor means.

6. The system of claim 1, which further comprises:
said memory means and said processor means being in a first host system of a distributed processor system;
a communications link, for coupling said processor means in said first host system to a second host system of said distributed processor system;
a second processor means in said second host system, coupled to said processor means in said first host system over said communications link, for exchanging said message over said communications link.

7. A method for interprocess communication in a microkernel architecture, comprising:
storing data and programmed instructions in a memory means in a data processing system;
coordinating message passing between tasks in said memory means with an interprocess communications means in said memory means;
storing a first task in said memory means having a set of attributes defining a first communication port and having a first message control structure format for messages it can receive;
storing a second task in said memory means having a set of attributes defining a second communication port and having a second message control structure format for messages it can send;
registering said first message control structure format as a message control structure template for said first task and issuing to said first task a registration ID;
sending a registration request with said second message control structure format from said second task to said first task;
validating said second message control structure format for said first task and sending said registration ID to said second task;
sending a message with said registration ID to said interprocess communications means for forwarding to said first task;
using said registration ID to access said message control structure template for comparison with said message from said second task; and
in response thereto, forwarding said message to said first task.

8. The method of claim 7, which further comprises:
said second task represents an application program.

9. The method of claim 7, which further comprises:
said second task represents an operating system personality program.

10. The method of claim 7, which further comprises:
said second task represents a personality-neutral services program.
